(19) Europäisches Patentamt
European Patent Office
Office européen des brevets

(11) EP 2 104 612 B1

(12) EUROPEAN PATENT SPECIFICATION

(45) Date of publication and mention of the grant of the patent:
**18.08.2010 Bulletin 2010/33**

(21) Application number: **08705936.6**

(22) Date of filing: **16.01.2008**

(51) Int Cl.:
***B32B 27/32*** *(2006.01)* ***D01F 6/30*** *(2006.01)*

(86) International application number:
**PCT/US2008/051137**

(87) International publication number:
**WO 2008/089218 (24.07.2008 Gazette 2008/30)**

(54) **STRETCH FABRICS AND GARMENTS OF OLEFIN BLOCK POLYMERS**

ELASTISCHE FASERN UND KLEIDUNGSSTÜCKE AUS OLEFINBLOCKPOLYMEREN

TISSUS ET VÊTEMENTS EXTENSIBLES FAITS DE POLYMÈRES OLÉFINIQUES SÉQUENCÉS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **16.01.2007 US 885208 P**

(43) Date of publication of application:
**30.09.2009 Bulletin 2009/40**

(73) Proprietor: **DOW GLOBAL TECHNOLOGIES INC.**
**Midland, MI 48674 (US)**

(72) Inventors:
- **CHEN, Hongyu**
  **Lake Jackson, TX 77566 (US)**
- **D'OTTAVIANO, Fabio**
  **E-43850 Cambrils (ES)**
- **LAMIA, Alberto, Lora**
  **E-43007 Tarragona (ES)**
- **REGO, Jose, M.**
  **Houston, TX 77041 (US)**
- **WANG, Jerry, Chien, Ting**
  **Taichung (TW)**
- **ALBIERO, Federica**
  **E-43850 Cambrils, Tarragona (ES)**
- **BRAMANTE, Guido**
  **E-43002 Tarragona (ES)**

(74) Representative: **Hatzmann, Martin et al**
**Vereenigde**
**Johan de Wittlaan 7**
**2517 JR Den Haag (NL)**

(56) References cited:
**WO-A-2006/102149**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 104 612 B1

Printed by Jouve, 75001 PARIS (FR)

## Description

FIELD OF THE INVENTION

This invention relates to elastic fibers, fabrics, and garments capable of being heat set and/or being made in a continuous scouring process.

BACKGROUND AND SUMMARY OF THE INVENTION

Many different materials have been used in making knit or woven fabrics for use in, for example, garments. It is often desirable that such fabrics have a combination of desirable properties including one or more of the following: dimensional stability, heat-set properties, capability to be made stretchable in one or both dimensions, chemical, heat, and abrasion resistant, tenacity, etc. It is also often important that such fabrics be able to withstand hand or machine washing without significantly degrading one or more of the aforementioned properties. Further, increased throughput with reduced defects, e.g., fiber breakage, is sometimes desirable. In addition, exposure to high temperatures without fiber breakage is often desirable. Unfortunately, prior materials often suffer from one or more deficiencies in the aforementioned properties. In addition, the prior materials may sometimes limit the manufacturing process in some way, e.g., knit fabric production may be limited to a pulley feeding system as opposed to an eyelet system or the fabric may not be capable of being scoured in a continuous process. In this connection, reference is made to the disclosure of WO 2006/102149.

Improved fibers and fabrics have now been discovered which often have a balanced combination of desirable properties. These compositions may also allow for improved processability in some applications. In one aspect the present invention is a fabric as defined in claim 1, wherein said fabric comprises elastic fibers. The elastic fibers comprise the reaction product of at least one ethylene block polymer and at least one crosslinking agent. The ethylene block polymer is, for example, an ethylene/α-olefin interpolymer, wherein the ethylene/α-olefin interpolymer has one or more of the following characteristics prior to crosslinking:

(1) an average block index greater than zero and up to about 1.0 and a molecular weight distribution. Mw/Mn, greater than about 1.3: or

(2) at least one molecular fraction which elutes between 40˚C quid 130˚C when fractionated using TREF, **characterized in that** the fraction has a block index of at least 0.5 and up to about 1; or

(3) an Mw/Mn from about 1.7 to about 3.5. at least one melting point, Tm, in degrees Celsius, and a density, d, in grams/cubic centimeter, wherein the numerical values of Tm and d correspond to the relationship:

$$T_m > -2002.9 + 4538.5(d) - 2422.2(d)^2;$$

or

(4) an Mw/Mn from about 1.7 to about 3.5, and is characterized by a heat of fusion, ΔH in J/g, and a delta quantity, ΔT, in degrees Celsius defined as the temperature difference between the tallest DSC peak and the tallest CRYSTAF peak, wherein the numerical values of ΔT and ΔH have the following relationships:

$\Delta T > -0.1299(\Delta H) + 62.81$ for ΔH greater than zero and up to 130 J/g,

$\Delta T \geq 48^\circ C$ for ΔH greater than 130 J/g,

wherein the CRYSTAF peak is determined using at least 5 percent of the cumulative polymer, and if less than 5 percent of the polymer has an identifiable CRYSTAF peak, then the CRYSTAF temperature is 30˚C; or

(5) an elastic recovery. Re, in percent at 300 percent strain and 1 cycle measured with a compression-molded film of the ethylene/α-olefin interpolymer, and has a density, d, in grams cubic centimeter, wherein the numerical values of Re and d satisfy the following relationship when ethylene/α-olefin interpolymer is substantially free of a crosslinked phase:

Re >1481-1629(d);

or

(6) a molecular fraction which elutes between 40˚C and 130˚C when fractionated using TRFF, **characterized in that** the fraction has a molar comonomer content of at least 5 percent higher than that of a comparable random ethylene interpolymer fraction eluting between the same temperatures, wherein said comparable random ethylene interpolymer has the same comonomer(s) and has a melt index, density, and molar comonomer content (based on the whole polymer) within 10 percent of that of the ethylene/α-olefin interpolymer; or

(7) a storage modules at 25 ˚C, G' (25 ˚C), and a storage modulus at 100 ˚C. G' (100 ˚C), wherein the ratio of G' (25 ˚C) to G' (100 ˚C) is in the range of about 1:1 to about 9:1.

In another aspect the invention is an elastic fiber comprising the reaction product of at least one ethylene olefin block polymer as described previously and at least one crosslinking agent. The elastic fibers may be characterized (1) by a storage modulus at 85˚C of at least about 1.2 MPa and/or (2) the ability to be heat set, i.e., stretched to a desired width which is maintained when an elastic fabric comprising said fibers is released from, for example, a tenterframe.

The ethylene/α-olefin interpolymer characteristics (1) through (7) above are given with respect to the ethylene/α-olefin interpolymer before any significant crosslinking, i.e., before crosslinking. The ethylene/α-olefin interpolymers useful in the present invention are usually crosslinked to a degree to obtain the desired properties. By using characteristics (1) through (7) as measured before crosslinking is not meant to suggest that the interpolymer is not required to be crosslinked - only that the characteristic is measured with respect to the interpolymer without significant crosslinking. Crosslinking may or may not change each of these properties depending upon the specific polymer and degree of crosslinking.

BRIEF DESCRIPTION OF THE DRAWINGS

Figure 1 shows the melting point/density relationship for the inventive polymers (represented by diamonds) as compared to traditional random copolymers (represented by circles) and Ziegler-Natta copolymers (represented by triangles).

Figure 2 shows plots of delta DSC-CRYSTAF as a function of DSC Melt Enthalpy for various polymers. The diamonds represent random ethylene/octene copolymers; the squares represent polymers examples 1-4; the triangles represent polymer examples 5-9; and the circles represent polymer examples 10-19. The "X' symbols represent polymer examples A*-F*.

Figure 3 shows the effect of density on clastic recovery for unoriented films made from inventive interpolymers (represented by the squares and circles) and traditional copolymers (represented by the triangle which are various AFFINITY™ polymers (available from The Dow Chemical Company)). The squares represent inventive ethylene/butene copolymers; and the circles represent inventive ethylene/octene copolymers.

Figure 4 is a plot of octene content of TREF fractionated ethylene/ 1-octene copolymer fractions versus TREF elution temperature of the fraction for the polymer of Example 5 (represented by the circles) and comparative polymers E and F (represented by the "X" symbols). The diamonds represent traditional random ethylene/octene copolymers.

Figure 5 is a plot of octene content of TREF fractionated ethylene/ 1-octene copolymer fractions versus TREF elution temperature of the fraction for the polymer of Example 5 (curve 1) and for comparative F (curve 2). The squares represent Example F*; and the triangles represent Example 5.

Figure 6 is a graph of the log of storage modulus as a function of temperature for comparative ethylene/1-octene copolymer (curve 2) and propylene/ ethylene- copolymer (curve 3) and for two ethylene/1-octene block copolymers of the invention made with differing quantities of chain shuttling agent (curves 1).

Figure 7 shows a plot of TMA (1mm) versus flex modulus for some inventive polymers (represented by the diamonds), as compared to some known polymers. The triangles represent various Dow VERSIFY™ polymers(available from The Dow Chemical Company), the circles represent various random ethylene/styrene copolymers; and the squares represent various Dow AFFINITY™ polymers(available from The Dow Chemical Company).

Figure 8 shows the procedure for heat-setting and shrinkage testing of fibers.

Figure 9 shows shows a plot of e-beam radiation versus percent crosslinking for an olefin block copolymer.

Figure 10 shows a plot of storage modulus versus temperature for the fibers of Examples 26 and 27.

DETAILED DESCRIPTION OF THE INVENTION

**General Definitions**

"Fiber" means a material in which the length to diameter ratio is greater than about 10. Fiber is typically classified according to its diameter. Filament fiber is generally defined as having an individual fiber diameter greater than about 15 denier, usually greater than about 30 denier per filament. Fine denier fiber generally refers to a fiber having a diameter less than about 15 denier per filament. Microdenier fiber is generally defined as fiber having a diameter less than about 100 microns denier per filament.

"filament fiber" or "monofilament fiber" means a continuous strand of material of indefinite (i.e., not predetermined) length, as opposed to a "staple fiber" which is a discontinuous stand of material of definite length (i.e., a strand which has been cut or otherwise divided into segments of a predetermined length).

"Elastic" means that a fiber will recover at least about 50 percent of its stretched length alter the first pull and after the fourth to 100% strain (doubled the length). Elasticity can also be described by the "permanent set" of the fiber. Permanent set is the converse of elasticity. A fiber is stretched to a certain point and subsequently released to the original position before stretch, and then stretched again. The point at which the fiber begins to pull a load is designated as the percent permanent set. "Elastic materials" are also referred to in the art as "elastomers" and "elastomeric". Elastic material (sometimes referred to as an elastic article) includes the copolymer itself as well as, but not limited to, the copolymer in the form of a fiber, film, strip, tape, ribbon, sheet, coating, molding and the like. The preferred elastic material is fiber. The elastic material can be either cured or uncured, radiated or un-radiated, and/or crosslinked or uncrosslinked.

"Nonelastic material" means a material, e.g., a fiber, that is not elastic as defined above.

"Homofil fiber" means a fiber that has a single polymer region or domain, and that does not have any other distinct polymer regions (as do bicomponent fibers).

"Bicomponent fiber" means a fiber that has two or more distinct polymer regions or domains. Bicomponent fibers are also known as conjugated or multicomponent fibers. The polymers are usually different from each other although two or more components may comprise the same polymer. The polymers are arranged in substantially distinct zones across the cross-section of the bicomponent fiber, and usually extend continuously along the length of the bicomponent fiber. The configuration of a bicomponent fiber can be, for example, a sheath/core arrangement (in which one polymer is surrounded by another), a side by side arrangement, a pie arrangement or an "islands-in-the sea" arrangement. Bicomponent fibers are further described in U.S. Patents No. 6,225,243, 6,140.442, 5,382,400, 5,336,552 and 5,108,820.

"Meltblown fibers" are fibers formed by extruding a molten thermoplastic polymer composition through a plurality of fine, usually circular, die capillaries as molten threads or filaments into conversing high velocity gas streams (e.g. air) which function to attenuate the threads or filaments to reduced diameters. The filaments or threads are curried by the high velocity gas streams and deposited on a collecting surface to form a web of randomly dispersed fibers with average diameters generally smaller than 10 microns.

"Meltspun fibers" arc fibers formed by melting at least one polymer and then drawing the fiber in the melt to a diameter (or other cross-section shape) less than the diameter (or other cross-section shape) of the die.

"Spunbond fibers" are fibers formed by extruding a molten thermoplastic polymer composition as filaments through a plurality of fine, usually circular, die capillaries of a spinneret. The diameter of the extruded filaments is rapidly reduced, and then the filaments are deposited onto a collecting surface to form a web of randomly dispersed fibers with average diameters generally between about 7 and about 30 microns.

"Nonwoven" means a web or fabric having a structure of individual fibers or threads which are randomly interlaid, but not in an identifiable manner as is the case of a knitted fabric. The elastic fiber in accordance with embodiments of the invention can be employed to prepare nonwoven structures as well as composite structures of elastic nonwoven fabric in combination with nonelastic materials.

"Yam" means a continuous length of twisted or otherwise entangled filaments which can be used in the manufacture of woven or knitted fabrics and other articles. Yarn can be covered or uncovered. Covered yarn is yarn at least partially wrapped within an outer covering of another fiber or material, typically a natural fiber such as cotton or wool.

"Polymers" means a polymeric compound prepared by polymerizing monomers, whether of the same or a different type. The generic term "polymer" embraces the terms "homopolymer," "copolymer," "terpolymer" as well as "interpolymer."

"Interpolymer" means a polymer prepared by the polymerization of at least two different types of monomers. The generic term "interpolymer" includes the term "copolymer" (which is usually employed to refer to a polymer prepared from two different monomers) as well as the term "terpolymer" (which is usually employed to refer to a polymer prepared from three different types of monomers). It also encompasses polymers made by polymerizing four or more types of monomers.

The term "ethylene/α-olefin interpolymer" generally refers to polymers comprising ethylene and an α -olefin having 3 or more carbon atoms. Preferably, ethylene comprises the majority mole fraction of the whole polymer, i.e., ethylene comprises at least about 50 mole percent of the whole polymer. More preferably ethylene comprises at least about 60 mole percent, at least about 70 mole percent, or at least about 80 mole percent, with the substantial remainder of the whole polymer comprising at least one other comonomer that is preferably an α-olefin having 3 or more carbon atoms. For many ethylene/octene copolymers, the preferred composition comprises an ethylene content greater than about 80 mole percent of the whole polymer and an octene content of from about 10 to about 15, preferably from about 15 to about 20 mole percent of the whole polymer. In some embodiments, the ethylene/α-olefm interpolymers do not include those produced in low yields or in a minor amount or as a by-product of a chemical process. While the ethylene/α-olefin interpolymers can be blended with one or more polymers, the as-produced ethylene/α-olefin interpolymers are substantially pure and often comprise a major component of the reaction product of a polymerization process.

The ethylene/α-olefin interpolymers comprise ethylene and one or more copolymerizable α-olefin comonomers in polymerized form, characterized by multiple blocks or segments of two or more polymerized monomer units differing in chemical or physical properties. That is, the ethylene/α-olefin interpolymers are block interpolymers, preferably multi-block interpolymers or copolymers. The terms "interpolymer" and "copolymer" are used interchangeably herein. In some embodiments, the multi-block copolymer can be represented by the following formula:

$$(AB)_n$$

where n is at least 1, preferably an integer greater than 1, such as 2, 3, 4, 5, 10, 15, 20, 30, 40, 50, 60, 70, 80, 90, 100. or higher, "A" represents a hard block or segment and "B" represents a soft block or segment. Preferably, As and Bs are linked in a substantially linear fashion, as opposed to a substantially branched or substantially star-shaped fashion. In other embodiments. A blocks and B blocks are randomly distributed along the polymer chain. In other words, the block copolymers usually do not have a structure as follows.

$$AAA—AA\text{-}BBB—BB$$

In still other embodiments, the block copolymers do not usually have a third type of block, which comprises different comonomer(s). In yet other embodiments, each of block A and block B has monomers or comonomers substantially randomly distributed within the block. In other words, neither block A nor block B comprises two or more sub-segments (or sub-blocks) of distinct composition, such as a tip segment, which has a substantially different composition than the rest of the block.

The multi-block polymers typically comprise various amounts of "hard" and "soft" segments. "Hard" segments refer to brocks of polymerized units in which ethylene is present in an amount greater than about 95 weight percent, and preferably greater than about 98 weight percent based on the weight of the polymer. In other words, the comonomer content (content of monomers other than ethylene) in the hard segments is less than about 5 weight percent, and preferably less than about 2 weight percent based on the weight of the polymer. In some embodiments, the hard segments comprises all or substantially all ethylene. "Soft" segments, on the other hand, refer to blocks of polymerized units in which the comonomer content (content of monomers other than ethylene) is greater than about 5 weight percent, preferably greater than about 8 weight percent, greater than about 10 weight percent, or greater than about 15 weight percent based on the weight of the polymer. In some embodiments, the comonomer content in the soft segments can be greater than about 20 weight percent, greater than about 25 weight percent, greater than about 30 weight percent, greater than about 35 weight percent, greater than about 40 weight percent, greater than about 45 weight percent, greater than about 50 weight percent, or greater than about 60 weight percent.

The soft segments can often be present in a block interpolymer from about I weight percent to about 99 weight percent of the total weight of the block interpolymer, preferably from about 5 weight percent to about 95 weight percent, from about 10 weight percent to about 90 weight percent, from about 15 weight percent to about 85 weight percent, from about 20 weight percent to about 80 weight percent, from about 25 weight percent to about 75 weight percent, from about 30 weight percent to about 70 weight percent, from about 35 weight percent to about 65 weight percent, from about 40 weight percent to about 60 weight percent, or from about 45 weight percent to about 55 weight percent of the total weight of the block interpolymer. Conversely, the hard segments can be present in similar ranges. The soft segment weight percentage and the hard segment weight percentage can be calculated based on data obtained from DSC or NMR. Such methods and calculations are disclosed in a concurrently filed U.S. Patent Application Serial No. 11/376,835, Attorney Docket No. 385063999558, entitled "Ethylene/α-Olefins Block Interpotymers", filed on March 15, 2006, in the name of Colin L.P. Shan, Lonnie Hazlitt, et. al. and assigned to Dow Global Technologies Inc.

The term "crystalline" if employed, refers to a polymer that possesses a first order transition or crystalline melting point (Tm) as determined by differential scanning calorimetry (DSC) or equivalent technique. The term may be used interchangeably with the term "semicrystalline". The term "amorphous" refers to a polymer lacking a crystalline melting point as determined by differential scanning calorimetry (DSC) or equivalent technique.

The term "multi-block copolymer" or "segmented copolymer" refers to a polymer comprising two or more chemically distinct regions or segments (referred to as "blocks") preferably joined in a linear manner, that is, a polymer comprising chemically differentiated units which are joined end-to-end with respect to polymerized ethylenic functionality, rather than in pendent or grafted fashion. In a preferred embodiment, the blocks differ in the amount or type of comonomer incorporated therein, the density, the amount of crystallinity, the crystallite size attributable to a polymer of such composition, the type or degree of tacticity (isotactic or syndiotactic), regio-regularity or regio-irregularity, the amount of branching, including long chain branching or hyper-branching, the homogeneity, or any other chemical or physical property. The multi-block copolymers are characterized by unique distributions of both polydispersity index (PDI or Mw/Mn), block length distribution, and/or block number distribution due to the unique process making of the copolymers. More specifically, when produced in a continuous process, the polymers desirably possess PDI from 1.7 to 2.9. preferably from 1.8 to 2.5, more preferably from 1.8 to 2.2, and most preferably from 1.8 to 2.1. When produced in a batch or semi-batch process, the polymers possess PDI from 1.0 to 2.9, preferably from 1.3 to 2.5, more preferably from 1.4 to 2.0, and most preferably from 1.4 to 1.8.

In the following description, all numbers disclosed herein are approximate values, regardless whether the word "about" or "approximate" is used in connection therewith, They may vary by i percent, 2 percent, 5 percent, or, sometimes, 10 to 20 percent. Whenever a numerical range with a lower limit, $R^L$ and an upper limit, $R^U$, is disclosed, any number falling within the range is specifically disclosed. In particular, the following numbers within the range are specifically disclosed: $R=R^L+k*(R^U-R1)$, wherein k is a variable ranging from 1 percent to 100 percent with a 1 percent increment, i.e.. k is 1 percent, 2 percent, 3 percent. 4 percent, 5 percent..... 50 percent, 51 percent, 52 percent...., 95 percent, 96 percent, 97 percent, 98 percent, 99 percent, or 100 percent. Moreover, any numerical range defined by two R numbers as defined in the above is also specifically disclosed.

**Ethylene/α-Olefin Interpolymers**

The ethylene/α-olefin interpolymers used in embodiments of the invention (also referred to as "inventive interpolymer" or "inventive polymer") comprise ethylene and one or more copolymerizable α-olefin comonomers in polymerized form characterized by multiple blocks or segments of two or more polymerized monomer units differing in chemical or physical properties (block interpolymer), preferably a multi-block copolymer. The ethylene/α-olefin interpolymers are characterized by one or more of the aspects described as follows.

In one aspect, the ethylene/α-olefin interpolymers used in embodiments of the invention have a $M_w/M_n$ from about 1.7 to about 3.5 and at least one melting point, $T_m$, in degrees Celsius and density, d, in grams/cubic centimeter, wherein the numerical values of the variables correspond to the relationship:

$$T_m > -2002.9 + 4538.5(d) - 2422.2(d)^2,$$

and preferably

$$T_m \geq -6288.1 + 13141(d) - 6720.3(d)^2,$$

and more preferably

$$T_m \geq 858.91 - 1825.3(d) + 1112.8(d)^2.$$

Such melting point/density relationship is illustrated in Figure 1. Unlike the traditional random copolymers of ethylene/α-olefins whose melting points decrease with decreasing densities, the inventive interpolymers (represented by diamonds) exhibit melting points substantially independent of the density, particularly when density is between about 0.87 g/cc to about 0.95 g/cc. For example, the melting point of such polymers are in the range of about 110 ˚C to about 130 ˚C when density ranges from 0.875 g/cc to about 0.945 g/cc. In some embodiments, the melting point of such

polymers are in the range of about 115 ˚C to about 125 ˚C when density ranges from 0.875 g/cc to about 0.945 g/cc.

In another aspect, the ethylene/α-olefin interpolymers comprise, in polymerized form, ethylene and one or more α-olefins and are characterized by a ΔT, in degree Celsius, defined as the temperature for the tallest Differential Scanning Calorimetry ("DSC") peak minus the temperature for the tallest Crystallization Analysis Fractionation ("CRYSTAF") peak and a heat of fusion in J/g. ΔH, and ΔT and ΔH satisfy the following relationships:

$$\Delta T > -0.1299(\Delta H) + 62.81.$$

and preferably

$$\Delta T \geq -0.1299(\Delta H) + 64.38.$$

and more preferably

$$\Delta T \geq -0.1299(\Delta H) + 65.95.$$

for ΔH up to 130 J/g. Morever, ΔT is equal to or greater than 48˚C for ΔH greater than 130 J/g. The CRYSTAF peak is determined using at least 5 percent of the cumulative polymer (that is, the peak must represent at least 5 percent of the cumulative polymer), and if less than 5 percent of the polymer has an identifiable CRYSTAF peak, then the CRYSTAF temperature is 30˚C. and ΔH is the numerical value of the heat of fusion in J/g. More preferably, the highest CRYSTAF peak contains at least 10 percent of the cumulative polymer. Figure 2 shows plotted data for inventive polymers as well as comparative examples, Integrated peak areas and peak temperatures are calculated by the computerized drawing program supplied by the instrument maker. The diagonal line shown for the random ethylene octene comparative polymers corresponds to the equation ΔT = -0.1299 (ΔH) + 62.81.

In yet another aspect, the ethylene/α-olefin interpolymers have a molecular fraction which elutes between 40˚C and 130˚C when fractionated using Temperature Rising Elution Fractionation ("TREF"), **characterized in that** said fraction has a molar comonomer content higher, preferably at least 5 percent higher, more preferably at least 10 percent higher, than that of a comparable random ethylene interpolymer fraction eluting between the same temperatures, wherein the comparable random ethylene interpolymer contains the same comonomer(s), and has a melt index, density, and molar comonomer content (based on the whole polymer) within 10 percent of that of the block interpolymer. Preferably, the Mw/Mn of the comparable interpolymer is also within 10 percent of that of the block interpolymer and/or the comparable interpolymer has a total comonomer content within 10 weight percent of that of the block interpolymer.

In still another aspect, the ethylene/α-olefin interpolymers are characterized by an elastic recovery. Re, in percent at 300 percent strain and 1 cycle measured on a compression-molded film of an ethylene/α-olefin interpolymer, and has a density, d, in grams/cubic centimeter, wherein the numerical values of Re and d satisfy the following relationship when ethylene/α-olefin interpolymer is substantially free of a cross-linked phase:

$$Re > 1481-1629(d);$$

and preferably

$$Re \geq 1491-1629(d);$$

and more preferably

$$Re \geq 1501-1629(d);$$

and even more preferably

$$Re \geq 1511-1629(d).$$

Figure 3 shows the effect of density on elastic recovery for unoriented films made from certain inventive interpolymers and traditional random copolymers. For the same density, the inventive interpolymers have substantially higher elastic recoveries.

In some embodiments, the ethylene/α-olefin interpolymers have a tensile strength above 10 MPa, preferably a tensile strength ≥ 11 MPa, more preferably a tensile strength ≥ 13MPa and/or an elongation at break of at least 600 percent, more preferably at least 700 percent, highly preferably at least 800 percent, and most highly preferably at least 900 percent at a crosshead separation rate of 11 cm/minute.

In other embodiments, the ethylene/α-olefin interpolymers have (1) a storage modulus ratio, G'(25˚C)/G'(100˚C), of from I to 50, preferably from 1 to 20, more preferably from 1 to 10; and/or (2) a 70˚C compression set of less than 80 percent, preferably less than 70 percent, especially less than 60 percent, less than 50 percent, or less than 40 percent, down to a compression set of 0 percent.

In still other embodiments, the ethylene/α-olefin interpolymers have a 70˚C compression set of less than 80 percent, less than 70 percent, less than 60 percent, or less than 50 percent. Preferably, the 70˚C compression set of the interpolymers is less than 40 percent, less than 30 percent, less than 20 percent, and may go down to about 0 percent.

In some embodiments, the ethylene/α-olefin interpolymers have a heat of fusion of less than 85 J/g and/or a pellet blocking strength of equal to or less than 100 pounds/foot$^2$ (4800 Pa), preferably equal to or less than 50 lbs/ft$^2$ (2400 Pa), especially equal to or less than 5 lbs/ft$^2$ (240 Pa), and as low as 0 lbs/ft$^2$ (0 Pa).

In other embodiments, the ethylene/α-olefin interpolymers comprise, in polymerized form, at least 50 mole percent ethylene and have a 70˚C compression set of less than 80 percent, preferably less than 70 percent or less than 60 percent, most preferably less than 40 to 50 percent and down to close to zero percent.

In some embodiments, the multi-block copolymers possess a PDI fitting a Schultz-Flory distribution rather than a Poisson distribution. The copolymers are further characterized as having both a polydisperse block distribution and a polydisperse distribution of block sizes and possessing a most probable distribution of block lengths. Preferred multi-block copolymers are those containing 4 or more blocks or segments including terminal blocks. More preferably, the copolymers include at least 5, 10 or 20 blocks or segments including terminal blocks.

Comonomer content may be measured using any suitable technique, with techniques based on nuclear magnetic resonance ("NMR") spectroscopy preferred. Moreover, for polymers or blends of polymers having relatively broad TREF curves, the polymer desirably is first fractionated using TREF into fractions each having an eluted temperature range of 10˚C or less. That is, each eluted fraction has a collection temperature window of 10˚C or less. Using this technique, said block interpolymers have at least one such fraction having a higher molar comonomer content than a corresponding fraction of the comparable interpolymer.

In another aspect, the inventive polymer is an olefin interpolymer, preferably comprising ethylene and one or more copolymerizable comonomers in polymerized form, characterized by multiple blocks (i.e., at least two blocks) or segments of two or more polymerized monomer units differing in chemical or physical properties (blocked interpolymer), most preferably a multi-block copolymer, said block interpolymer having a peak (but not just a molecular fraction) which elutes between 40˚C and 130˚C (but without collecting and/or isolating individual fractions), **characterized in that** said peak, has a comonomer content estimated by infra-red spectroscopy when expanded using a full width/half maximum (FWHM) area calculation, has an average molar comonomer content higher, preferably at least 5 percent higher, more preferably at least 10 percent higher, than that of a comparable random ethylene interpolymer peak at the same elution temperature and expanded using a full width/half maximum (FWHM) area calculation, wherein said comparable random ethylene interpolymer has the same comonomer(s) and has a melt index, density, and molar comonomer content (based on the whole polymer) within 10 percent of that of the blocked interpolymer. Preferably, the Mw/Mn of the comparable interpolymer is also within 10 percent of that of the blocked interpolymer and/or the comparable interpolymer has a total comonomer content within 10 weight percent of that of the blocked interpolymer. The full width/half maximum (FWHM) calculation is based on the ratio of methyl to methylene response area [$CH_3$/$CH_2$] from the ATREF infra-red detector, wherein the tallest (highest) peak is identified from the base line, and then the FWHM area is determined. For a distribution measured using an ATREF peak, the FWHM area is defined as the area under the curve between $T_1$ and $T_2$, where $T_1$ and $T_2$ are points determined, to the left and right of the ATREF peak, by dividing the peak height by two, and then drawing a line horizontal to the base line, that intersects the left and right portions of the ATREF curve. A calibration curve for comonomer content is made using random ethylene/α-olefin copolymers, plotting comonomer content from NMR versus FWHM area ratio of the TREF peak. For this infra-red method, the calibration curve is generated for the same comonomer type of interest. The comonomer content of TREF peak of the inventive polymer can be determined

by referencing this calibration curve using its FWHM methyl : methylene area ratio [$CH_3/CH_2$] of the TREF peak.

Comonomer content may be measured using any suitable technique, with techniques based on nuclear magnetic resonance (NMR) spectroscopy preferred. Using this technique, said blocked interpolymer has higher molar comonomer content than a corresponding comparable interpolymer.

Preferably, for interpolymers of ethylene and 1-octene, the block interpolymer has a comonomer content of the TREF fraction eluting between 40 and 130°C greater than or equal to the quantity (- 0.2013) T + 20.07, more preferably greater than or equal to the quantity (-0.2013) T+ 21.07, where T is the numerical value of the peak elution temperature of the TREF fraction being compared, measured in °C.

Figure 4 graphically depicts an embodiment of the block interpolymers of ethylene and 1-octene where a plot of the comonomer content versus TREF elution temperature for several comparable ethylene/1-octene interpolymers (random copolymers) are fit to a line representing (-0.2013) T + 20.07 (solid line). The line for the equation (-0.2013) T + 21.07 is depicted by a dotted line. Also depicted are the comonomer contents for fractions of several block ethylene/1-octene interpolymers of the invention (multi-block copolymers). All of the block interpolymer fractions have significantly higher 1-octene content than either line at equivalent elution temperatures. This result is characteristic of the inventive interpolymer and is believed to be due to the presence of differentiated blocks within the polymer chains, having both crystalline and amorphous nature.

Figure 5 graphically displays the TREF curve and comonomer contents of polymer fractions for Example 5 and Comparative F discussed below. The peak eluting from 40 to 130°C, preferably from 60°C to 95°C for both polymers is fractionated into three parts, each part eluting over a temperature range of less than 10°C. Actual data for Example 5 is represented by triangles. The skilled artisan can appreciate that an appropriate calibration curve may be constructed for interpolymers containing different comonomers and a line used as a comparison fitted to the TREF values obtained from comparative interpolymers of the same monomers, preferably random copolymers made using a metallocene or other homogeneous catalyst composition. Inventive interpolymers are characterized by a molar comonomer content greater than the value determined from the calibration curve at the same TREF elution temperature, preferably at least 5 percent greater, more preferably at least 10 percent greater.

In addition to the above aspects and properties described herein, the inventive polymers can be characterized by onc or more additional characteristics. In one aspect, the inventive polymer is an olefin interpolymer, preferably comprising ethylene and one or more copolymerizable comonomers in polymerized form, characterised by multiple blocks or segments of two or more polymerized monomer units differing in chemical or physical properties (blocked interpolymer), most preferably a multi-block copolymer, said block interpolymer having a molecular fraction which elutes between 40°C and 130°C, when fractionated using TREF increments, **characterized in that** said fraction has a molar comonomer content higher, preferably at least 5 percent higher, more preferably at least 10, 15, 20 or 25 percent higher, than that of a comparable random ethylene interpolymer fraction eluting between the same temperatures, wherein said comparable random ethylene interpolymer comprises the same comonomer(s), preferably it is the same comonomer (s), and a melt index, density, and molar comonomer content (based on the whole polymer) within 10 percent of that of the blocked interpolymer. Preferably, the Mw/Mn of the comparable interpolymer is also within 10 percent of that of the blocked interpolymer and/or the comparable interpolymer has a total comonomer content within 10 weight percent of that of the blocked interpolymer.

Preferably, the above interpolymers are interpolymers of ethylene and at least one $\alpha$-olefin, especially those interpolymers having a whole polymer density from about 0.855 to about 0.935 g/cm$^3$, and more especially for polymers having more than about 1 mole percent comonomer, the blocked interpolymer has a comonomer content of the TREF fraction eluting between 40 and 130°C greater than or equal to the quantity (-0.1356) T + 13.89. more preferably greater than or equal to the quantity (-0.1356) T+ 14.93, and most preferably greater than or equal to the quantity (-0.2013)T + 21.07, where T is the numerical value of the peak ATREF elution temperature of the TREF fraction being compared, measured in °C.

Preferably, for the above interpolymers of ethylene and at least one alpha-olefin especially those interpolymers having a whole polymer density from about 0.855 to about 0.935 g/cm$^3$, and more especially for polymers having more than about 1 mole percent comonomer, the blocked interpolymer has a comonomer content of the TREF fraction eluting between 40 and 130°C greater than or equal to the quantity (- 0.2013) T + 20.07, more preferably greater than or equal to the quantity (-0.2013) T+ 21.07, where T is the numerical value of the peak elution temperature of the TREF fraction being compared, measured in °C.

In still another aspect, the inventive polymer is an olefin interpolymer, preferably comprising ethylene and one or more copolymerizable comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between
40°C and 130°C, when fractionated using TREF increments, **characterized in that** every fraction having a comonomer content of at least about 6 mole percent, has a melting point greater than about 100°C. For those fractions having a comonomer content from about 3 mole percent to about 6 mole percent, every fraction has a DSC melting point of about

110˚C or higher. More preferably, said polymer fractions, having at least I mole percent comonomer, has a DSC melting point that corresponds to the equation:

$$Tm \geq (-5.5926)(\text{mole percent comonomer in the fraction}) + 135.90.$$

In yet another aspect, the inventive polymer is an olefin interpolymer, preferably comprising ethylene and one or more copolymerizable comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40˚C and 130˚C, when fractionated using TREF increments, **characterized in that** every fraction that has an ATREF elution temperature greater than or equal to about 76˚C, has a melt enthalpy (heat of fusion) as measured by DSC, corresponding to the equation:

$$\text{Heat of fusion (J/gm)} \leq (3.1718)(\text{ATREF elution temperature in Celsius}) - 136.58,$$

The inventive block interpolymers have a molecular fraction which elutes between 40˚C and 130˚C, when fractionated using TREF increments, **characterized in that** every fraction that has an ATREF elution temperature between 40˚C and less than about 76˚C, has a melt enthalpy (heat of fusion) as measured by DSC, corresponding to the equation:

$$\text{Heat of fusion (J/gm)} \leq (1.1312)(\text{ATREF elution temperature in Celsius}) + 22.97.$$

**ATREF Peak Comonomer Composition Measurement by Infra-Red Detector**

The comonomer composition of the TREF peak can be measured using an IR4 infra-red detector available from Polymer Char, Valencia, Spain

(http://www.polymerchor.com).

The "composition mode" of the detector is equipped with a measurement sensor ($CH_2$) and composition sensor ($CH_3$) that are fixed narrow band infra-red filters in the region of 2800-3000 $cm^{-1}$. The measurement sensor detects the methylene ($CH_2$) carbons on the polymer (which directly relates to the polymer concentration in solution) while the composition sensor detects the methyl ($CH_3$) groups of the polymer. The mathematical ratio of the composition signal ($CH_3$) divided by the measurement signal ($CH_2$) is sensitive to the comonomer content of the measured polymer in solution and its response is calibrated with known ethylene alpha-oletin copolymer standards.

The detector when used with an ATREF instrument provides both a concentration ($CH_2$) and composition ($CH_3$) signal response of the eluted polymer during the TREF process. A polymer specific calibration can be created by measuring the area ratio of the $CH_3$ to $CH_2$ for polymers with known comonomer content (preferably measured by NMR). The comonomer content of an ATREF peak of a polymer can be estimated by applying a the reference calibration of the ratio of the areas for the individual $CH_3$ and $CH_2$ response (i.e. area ratio $CH_3/CH_2$ versus comonomer content).

The area of the peaks can be calculated using a full width/half maximum (FWHM) calculation after applying the appropriate baselines to integrate the individual signal responses from the TREF chromatogram. The full width/half maximum calculation is based on the ratio of methyl to methylene response area [$CH_3/CH_2$] from the ATREF infra-rcd detector, wherein the tallest (highest) peak is identified from the base line, and then the FWHM area is determined. For a distribution measured using an ATREF peak, the FWHM area is defined as the area under the curve between T1 and T2, where T1 and T2 are points determined, to the left and right of the ATREF peak, by dividing the peak height by two, and then drawing a line horizontal to the base line, that intersects the left and right portions of the ATREF curve.

The application of infra-red spectroscopy to measure the comonomer content of polymers in this ATREF-infra-red method is, in principle, similar to that of GPC/FTIR systems as described in the following references: Markovich, Ronald P.; Hazlitt, Lonnie G.; Smith, Linley, "Development of gel-permeation chromatography-Fourier transform infrared spectroscopy for characterization of ethylene-based polyolefin copolymers". Polymeric Materials Science and Engineering (1991), 65, 98-100.; and Deslauriers, P.J.: Rohlfing. D.C.; Shieh, E.T.; "Quantifying short chain branching microstructures in ethylene-1-olefin copolymers using size exclusion chromatography and Fourier transform infrared spectroscopy (SEC-FTIR)", Polymer (2002). 43. 59-170.

In other embodiments, the inventive ethylene/α-olefin interpolymer is characterized by an average block index, ABI, which is greater than zero and up to about 1.0 and a molecular weight distribution, $M_w/M_n$, greater than about 1.3. The average block index, ABI, is the weight average of the block index ("BI") for each of the polymer fractions obtained in preparative TREF from 20°C and 110°C, with an increment of 5°C:

$$ABI = \sum (w_i BI_i)$$

where $BI_i$ is the block index for the ith fraction of the inventive ethylene/α-olefin interpolymer obtained in preparative TREF, and $w_i$ is the weight percentage of the ith fraction.

For each polymer fraction, BI is defined by one of the two following equations (both of which give the same BI value):

$$BI = \frac{1/T_X - 1/T_{XO}}{1/T_A - 1/T_{AB}} \text{ or } BI = -\frac{LnP_X - LnP_{XO}}{LnP_A - LnP_{AB}}$$

where $T_x$ is the preparative ATREF elution temperature for the ith fraction (preferably expressed in Kelvin), $P_X$ is the ethylene mole fraction for the ith fraction, which can be measured by NMR or IR as described above. $P_{AB}$ is the ethylene mole fraction of the whole ethylene/α-olefin interpolymer (before fractionation), which also can be measured by NMR or IR. $T_X$ and $P_A$ are the ATREF elution temperature and the ethylene mole fraction for pure "hard segments" (which refer to the crystalline segments of the interpolymer). As a first order approximation, the $T_A$ and $P_A$ values are set to those tor high density polyethylene homopolymer, if the actual values for the "hard segments" are not available. For calculations performed herein, $T_A$ is 372°C, $P_A$ is 1.

$T_{AB}$ is the ATREF temperature for a random copolymer of the same composition and having an ethylene mole fraction of $P_{AB}$. $T_{AB}$ can be calculated from the following equation:

$$\text{Ln } P_{AB} = \alpha/T_{AB} + \beta$$

where u and β are two constants which can be determined by calibration using a number of known random ethylene copolymers. It should be noted that α and β may vary from instrument to instrument. Moreover, one would need to create their own calibration curve with the polymer composition of interest and also in a similar molecular weight range as the fractions. There is a slight molecular weight effect. If the calibration curve is obtained from similar molecular weight ranges, such effect would be essentially negligible. In some embodiments, random ethylene copolymers satisfy the following relationship:

$$\text{Ln } P = -237.83/T_{ATREF} + 0.639$$

$T_{XO}$ is the ATREF temperature for a random copolymer of the same composition and having an methylene mole traction of $P_X$. $T_{XO}$ can be calculated from $LnP_X = \alpha/T_{XO} + \beta$. Conversely. $P_{XO}$ is the ethylene mole fraction for a random copolymer of the same composition and having an ATREF temperature of $T_X$. which can be calculated from Ln $P_{XO} = \alpha/TX+\beta$.

Once the block index (BI) for each preparative ATREF fraction is obtained, the weight average block index, ABI, for the whole polymer can be calculated. In some embodiments, ABI is greater than zero but less than about 0.3 or from about 0.1 to about 0.3. In other embodiments, ABI is greater than about 0.3 and up to about 1.0. Preferably. ABI should be in the range of from about 0.4 to about 0.7, from about 0.5 to about 0.7, or from about 0.6 to about 0.9. In some embodiments, ABI is in the range of from about 0.3 to about 0.9, from about 0.3 to about 0.8, or from about 0.3 to about 0.7, from about 0.3 to about 0.6, from about 0.3 to about 0.5, or from about 0.3 to about 0.4. In other embodiments, ABI is in the range of from about 0.4 to about 1.0, from about 0.5 to about 1.0, or from about 0.6 to about 1.0, from about

0.7 to about 1.0, from about 0.8 to about 1.0, or from about 0.9 to about 1.0.

Another characteristic of the inventive ethylene/α-olefin interpolymer is that the inventive ethylene/α-olefin interpolymer comprises at least one polymer fraction which can be obtained by preparative TREF, wherein the fraction has a block index greater than about 0.1 and up to about 1.0 and a molecular weight distribution, $M_w/M_n$, greater than about 1.3. In some embodiments, the polymer fraction has a block index greater than about 0.6 and up to about 1.0, greater than about 0.7 and up to about 1.0. greater than about 0.8 and up to about 1.0, or greater than about 0.9 and up to about 1.0. In other embodiments, the polymer fraction has a block index greater than about 0.1 and up to about 1.0. greater than about 0.2 and up to about 1.0, greater than about 0.3 and up to about 1.0, greater than about 0.4 and up to about 1.0, or greater than about 0.4 and up to about 1.0. In still other embodiments, the polymer fraction has a block index greater than about 0.1 and up to about 0.5, greater than about 0.2 and up to about 0.5, greater than about 0.3 and up to about 0.5, or greater than about 0.4 and up to about 0.5. In yet other embodiments, the polymer fraction has a block index greater than about 0.2 and up to about 0.9, greater than about 0.3 and up to about 0.8. greater than about 0.4 and up to about 0.7. or greater than about 0.5 and up to about 0.6.

For copolymers of ethylene and an α-olefin, the inventive polymers preferably possess (1) a PDI or at least 1.3, more preferably at least 1.5, at least 1.7, or at least 2.0. and most preferably at least 2.6, up to a maximum value of 5.0, more preferably up to a maximum of 3.5, and especially up to a maximum of 2.7; (2) a heat of fusion of 80 J/g or less; (3) an ethylene content of at least 50 weight percent; (4) a glass transition temperature, $T_g$, of less than -25˚C, more preferably less than -30˚C; and/or (5) one and only one $T_m$.

Further, the inventive polymers can have, alone or in combination with any other properties disclosed herein, a storage modulus. G', such that log (G-) is greater than or equal to 400 kPa, preferably greater than or equal to 1.0 MPa, at a temperature of 100˚C. Moreover, the inventive polymers possess a relatively flat storage modulus as a function of temperature in the range from 0 to 100˚C (illustrated in Figure 6) that is characteristic of block copolymers, and heretofore unknown for an olefin copolymer, especially a copolymer of ethylene and one or more $C_{3-8}$ aliphatic α-olefins. (By the term "relatively flat" in this context is meant that log G' (in Pascals) decreases by less than one order of magnitude between 50 and 100˚C. preferably between 0 and 100˚C).

The inventive interpolymers may be further characterized by a thermomechanical analysis penetration depth of 1 mm at a temperature of at least 90˚C as well as a flexural modulus of from 3 kpsi (20 MPa) to 13 kpsi (90 MPa). Alternatively, the inventive interpolymers can have a thermomechanical analysis penetration depth of 1 mm at a temperature of at least 104˚C as well as a flexural modulus of at least 3 kpsi (20 MPa). They may be characterized as having an abrasion resistance (or volume loss) of less than 90 $mm^3$. Figure 7 shows the TMA (1 mm) versus flex modulus for the inventive polymers, as compared to other known polymers. The inventive polymers have significantly better flexibilitv-heat resistance balance than the other polymers.

Additionally, the ethylene/α-olefin interpolymers can have a melt index, $I_2$, from 0.01 to 2000 g/10 minutes, preferably from 0.01 to 1000 g/10 minutes, more preferably from 0.01 to 500 g/10 minutes, and especially from 0.01 to 100 g/10 minutes. In certain embodiments, the ethylene/α-olefin interpolymers have a melt index, $I_2$, from 0.01 to 10 g/10 minutes, from 0.5 to 50 g/10 minutes, from 1 to 30 g/10 minutes, from 1 to 6 g/10 minutes or from 0.3 to 10 g/10 minutes. In certain embodiments, the melt index for the ethylene/α-olefin polymers is 1 g/10 minutes, 3 g/10 minutes or 5 g/10 minutes.

The polymers can have molecular weights, $M_w$, from 1,000 g/mole to 5,000.000 g/mole, preferably from 1000 g/mole to 1,000,000, more preferably from 10,000 g/mole to 500,000 g/mole, and especially from 10.000 g/mole to 300.000 g/mole. The density of the inventive polymers can be from 0.80 to 0.99 $g/cm^3$ and preferably for ethylene containing polymers from 0.85 $g/cm^3$ to 0.97 $g/cm^3$. In certain embodiments, the density of the ethylene/α-olefin polymers ranges from 0.860 to 0.925 $g/cm^3$ or 0.867 to 0.910 $g/cm^3$.

The process of making the polymers has been disclosed in the following patent applications: U.S. Provisional Application No. 60/553,906, filed March 17, 2004; U.S. Provisional Application No. 60/662,937, filed March 17,2005; U.S. Provisional Application No. 60/662,939, filed March 17,2005; U.S. Provisional Application No. 60/662,938, filed March 17,200; PCT Application No. PCT/US2005/008916, filed March 17,2005; PCT Application No. PCT/US2005/008915, filed March 17, 2005; and PCT Application No. PCT/US2005/008917, filed March 17, 2005. For example, one such method comprises contacting ethylene and optionally one or more addition polymerizable monomers other than ethylene under addition polymerization conditions with a catalyst composition comprising:

the admixture or reaction product resulting from combining:

(A) a first olefin polymerization catalyst having a high comonomer incorporation index,

(B) a second olefin polymerization catalyst having a comonomer incorporation index less than 90 percent, preferably less than 50 percent, most preferably less than 5 percent of the comonomer incorporation index of catalyst (A), and

(C) a chain shuttling agent.

Representative catalysts and chain shuttling agent are as follows.

Catalyst (A1) is [N-(2,6-di(1-methylethyl)phenyl)amido)(2-isopropylphenyl)(α-naphthalen-2-diyl(6-pyridin-2-diyl)methane)]hafinium dimethyl, prepared according to the teachings of WO 03/40195, 2003US0204017, USSN 10/429,024, filed May 2, 2003, and WO 04/24740.

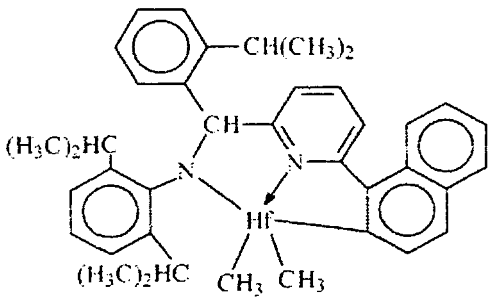

Catalyst (A2) is [N-(2,6-di(1-methylethyl)phenyl)amido)(2-methlphenyl(1,2-phenylene-(6-pyridin-2-diyl)methane)]hafnium dimethyl, prepared according to the teachings of WO 03/40195, 2003US0204017, USSN 10/429,024, filed May 2, 2003, and WO 04/24740.

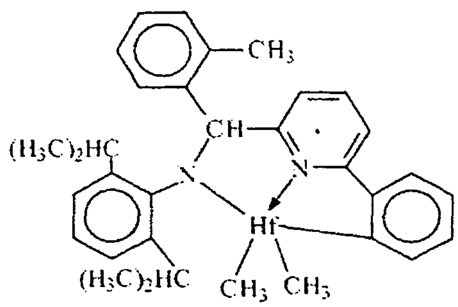

Catalyst (A3) is bis[N,N'''-(2,4,6-tri(methylphenyl)amido)ethylenediamine]hafnium dibenzyl.

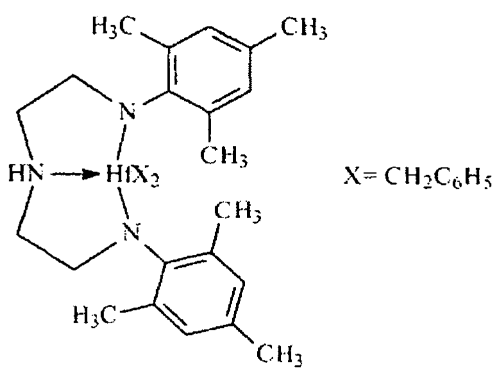

Catalyst (A4) is bis(2-oxoyl-3-(dibenzo-1H-pyrrole-1-yl)-5-(methyl)phenyl)-2-phenoxymethyl)cyclohexane-1,2,diyl zirconium (IV) dibenzyl, prepared substantially according to the teachings of US-A-2004/0010103.

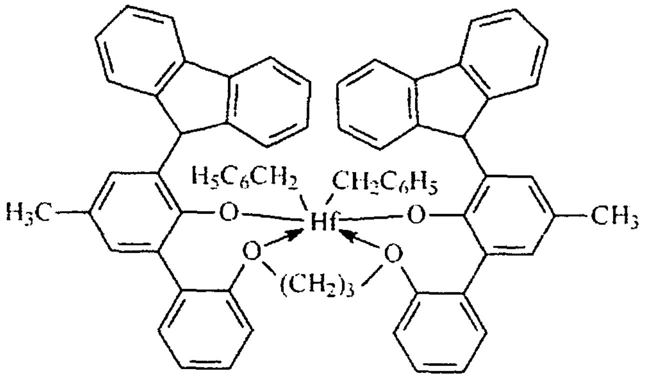

Catalyst (B1) is 1,2-bis-(3,5-di-t-butylphenylene)(1-(N-(1-methylethyl)immino)methyl)(2-oxoyl) zirconium dibenzyl

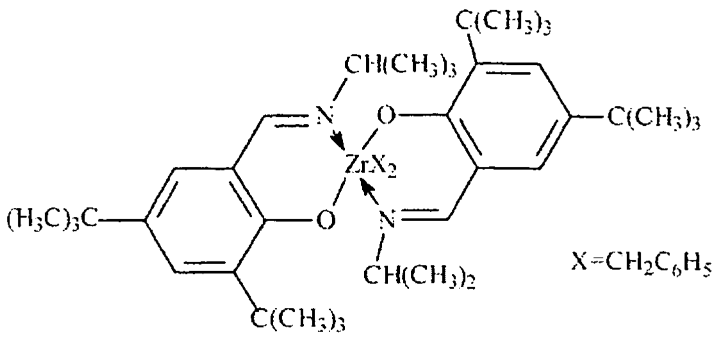

Catalyst (B2) is 1,2-bis-(3,5-di-t-butylphenylene)(1-(1-N-(2-methylcyclohexyl)-imnino)methyl)(2-oxoyl) zirconium dibenzyl

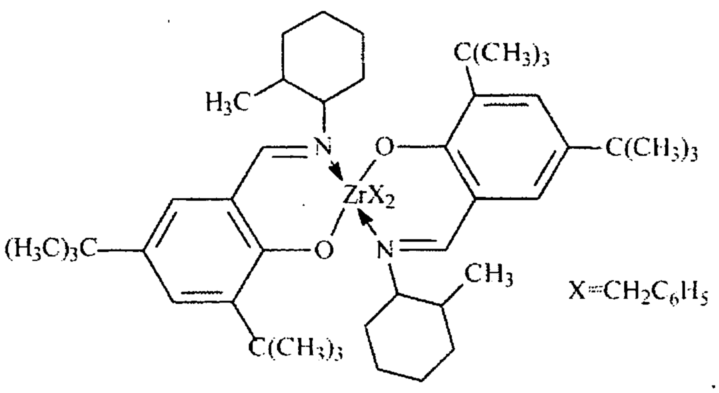

Catalyst (C1) is (t-butylamido)dimethyl(3-N-pyrrolyl-1,2,3,3a, 7a-η-inden-1-yl)silanetitanium dimethyl prepared substantially according to the techniques of USP 6,268,444:

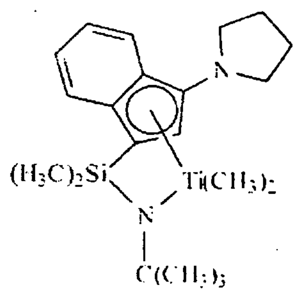

Catalyst (C2) is (t-butylamido)di-(4-methylphenyl)(2-methyl-1,2,3,3a,7a-η-inden-1-yl)silanetitanium dimethyl prepared substantially according to the teachings of US-A-2003/004286:

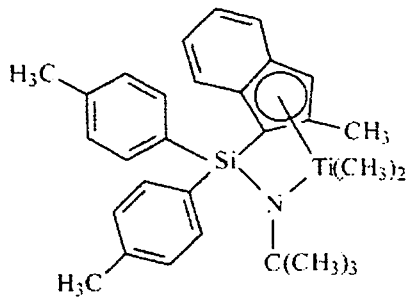

Catalyst (C3) is (t-butylamido)di(4-methylphenyl)(2-methyl-1,2,3,3a,8a-η-s-indacen-1-yl)silanetitanium dimethyl prepared substantially according to the teachings of US-A-2003/004286:

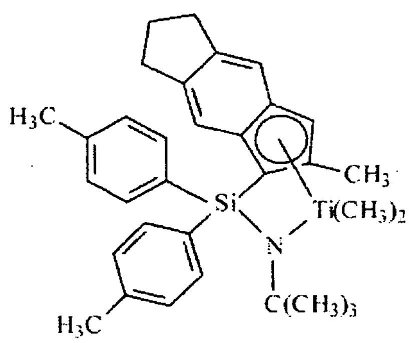

Catalyst (D1) is bis(dimethyldisiloxane)(indene-1-yl)zirconium dichloride available from Sigma-Aldrich:

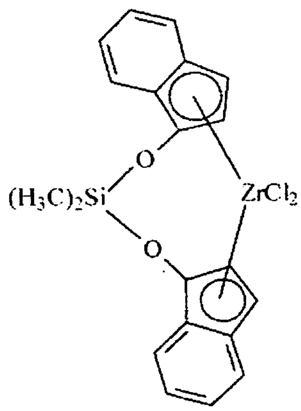

**Shuttling Agents** The shuttling agents employed include diethylzinc, di(i-butyl)zinc, di(n-hexyi)zinc, triethylaluminum, trioctylaluminum, triethylgallium, i-butylaluminum bis(dimethyl(t-butyl)siloxane), i-butylaluminum bis(di(trimethylsilyl)amide), n-octylaluminum di(pyridine-2-methoxide), bis(n-octadecyl)i-butylaluminum. i-butylaluminum bis(di (n-pentyl)amide), n-octyialtrminum bis(2,6-di-t-butylphenoxide, n-octylaluminum di(ethyl(1-naphthyl)amide), ethylaluminum bis(t-butyldimethylsiloxide), ethylaluminum di(bis(trimethylsilyl)amide, ethylaluminum bis(2,3,6,7-dibenzo-1-azacycloheptaneamide), n-octytaluminum bis(2,3,6,7-dibenzo-1-azacycloheptancamide), n-octylaluminum bis(dimethyl(t-butyl)siloxide, ethylzinc (2,6-diphenylphenoxide), and ethylzinc (t-butoxide).

Preferably, the foregoing process takes the form of a continuous solution process for forming block copolymers, especially multi-block copolymers, preferably linear multi-block copolymers of two or more monomers, more especially ethylene and a $C_{3-20}$ olefin or cycloolefin, and most especially ethylene and a $C_{4-20}$ $\alpha$-olefin, using multiple catalysis that are incapable of interconversion. That is, the catalysts are chemically distinct. Under continuous solution polymerization conditions, the process is ideally suited for polymerization of mixtures of monomers at high monomer conversions. Under these polymerization conditions, shuttling from the chain shuttling agent to the catalyst becomes advantaged compared to chain growth, and multi-block copolymers, especially linear multi-block copolymers are formed in high efficiency.

The inventive interpolymers may be differentiated from conventional, random copolymers, physical blends of polymers, and block copolymers prepared via sequential monomer addition, fluxional catalysts, anionic or cationic living polymerization techniques. In particular, compared to a random copolymer of the same monomers and monomer content at equivalent crystallinity or modulus, the inventive interpolymers have better (higher) heat resistance as measured by melting point, higher TMA penetration temperature, higher high-temperature tensile strength, and/or higher high-temperature torsion storage modulus as determined by dynamic mechanical analysis. Compared to a random copolymer containing the same monomers and monomer content, the inventive interpolymers have lower compression set, particularly at elevated temperatures, lower stress relaxation, higher creep resistance, higher tear strength, higher blocking resistance, faster setup due to higher crystallization (solidification) temperature, higher recovery (particularly at elevated temperatures), better abrasion resistance, higher retractive force, and better oil and filler acceptance.

The inventive interpolymers also exhibit a unique crystallization and branching distribution relationship. That is, the inventive interpolymers have a relatively large difference between the tallest peak temperature measured using CRYSTAF and DSC as a function of heal of fusion, especially as compared to random copolymers containing the same monomers and monomer level or physical blends of polymers, such as a blend of a high density polymer and a lower density copolymer, at equivalent overall density. It is believed that this unique feature of the inventive interpolymers is due to the unique distribution of the comonomer in blocks within the polymer backbone. In particular, the inventive interpolymers may comprise alternating blocks of differing comonomer content (including homopolymer blocks). The inventive interpolymers may also comprise a distribution in number and/or block size of polymer blocks of differing density or comonomer content, which is a Schultz-Flory type of distribution. In addition, the inventive interpolymers also have a unique peak melting point and crystallization temperature profile that is substantially independent of polymer density, modulus, and morphology. In a preferred embodiment, the microcrystalline order of the polymers demonstrates characteristic spherulites and lamellae that are distinguishable from random or block copolymers, even at PDI values that are less than 1.7, or even less than 1.5, down to less than 1.3.

Moreover, the inventive interpolymers may be prepared using techniques to influence the degree or level of blockiness. That is the amount of comonomer and length of each polymer block or segment can be altered by controlling the ratio and type of catalysts and shuttling agent as well as the temperature of the polymerization, and other polymerization variables. A surprising benefit of this phenomenon is the discovery that as the degree of blockiness is increased,

the optical properties, tear strength, and high temperature recovery properties of the resulting polymer are improved. In particular, haze decreases while clarity, tear strength, and high temperature recovery properties increase as the average number of blocks in the polymer increases. By selecting shuttling agents and catalyst combinations having the desired chain transferring ability (high rates of shuttling with low levels of chain termination) other forms of polymer termination are effectively suppressed. Accordingly, little if any β-hydride elimination is observed in the polymerization of ethylene/α-olefin comonomer mixtures according to embodiments of the invention, and the resulting crystalline blocks are highly, or substantially completely, linear, possessing little or no long chain branching.

Polymers with highly crystalline chain ends can be selectively prepared in accordance with embodiments of the invention. In elastomer applications, reducing the relative quantity of polymer that terminates with an amorphous block reduces the intermolecular dilutive effect on crystalline regions. This result can be obtained by choosing chain shuttling agents and catalysts having an appropriate response to hydrogen or other chain terminating agents. Specifically, if the catalyst which produces highly crystalline polymer is more susceptible to chain termination (such as by use of hydrogen) than the catalyst responsible for producing the less crystalline polymer segment (such as through higher comonomer incorporation, regio-error, or atactic polymer formanon), then the highly crystalline polymer segments will preferentially populate the terminal portions of the polymer. Not only are the resulting terminated groups crystalline, but upon termination, the highly crystalline polymer forming catalyst site is once again available for reinitiation of polymer formation. The initially formed polymer is therefore another highly crystalline polymer segment. Accordingly, both ends of the resulting multi-block copolymer are preferentially highly crystalline.

The ethylene α-olefin interpolymers used in the embodiments of the invention are preferably interpolymers of ethylene with at least one $C_3$-$C_{20}$ α-olefin, Copolymers of ethylene and a $C_3$-$C_{20}$ α-olefin are especially preferred. The interpolymers may further comprise $C_4$-$C_{18}$ diolefin and/or alkenylbenzene. Suitable unsaturated comonomers useful for polymerizing with ethylene include, for example, ethylenically unsaturated monomers, conjugated or nonconjugated dienes, polyenes, alkenylbenzenes, etc. Examples of such comonomers include $C_3$-$C_{20}$ α-olefins such as propylene, isobutylene, 1-butene, 1-hexene, 1-pentene, 4-methyl-1-pentene, 1-heptene, 1-octene, 1-nonene, 1-decene, and the like. 1-butene and 1-octene are especially preferred. Other suitable monomers include styrene, halo-or alkyl-substituted styrenes, vinylbenzocyclobutane, 1,4-hexadiene, 1,7-octadiene, and naphthenics (e.g., cyclopentene, cyclohexene and cyclooctene).

While ethytene/α-olefin interpolymers are preferred polymers, other ethylene/olefin polymers may also be used. Olefins as used herein refer to a family of unsaturated hydrocarbon-based compounds with at least one carbon-carbon double bond. Depending on the selection of catalysts, any olefin may be used in embodiments of the invention. Preferably, suitable olefins are $C_3$-$C_{20}$ aliphatic and aromatic compounds containing vinylic unsaturation, as well as cyclic compounds, such as cyclobutene, cyclopentene, dicyclopentadiene, and norbornene, including but not limited to, norbornene substituted in the 5 and 6 position with $C_1$-$C_{20}$ hydrocarbyl or cyclohydrocarbyl groups. Also included are mixtures of such olefins as well as mixtures of such olefins with $C_4$-$C_{40}$ diolefin compounds.

Examples of olefin monomers include, but arc not limited to propylene, isobutylene, 1-butene, 1-pentene, 1-hexene, 1-heptene, 1-octene, 1-nonene, 1-decene, and 1-dodecene. 1-tetradecene, 1-hexadecene, 1-octadecene, 1-eicosene, 3-methyl-1-burene, 3-methyl-1-pentene, 4-methyl-1-pentene, 4,6-dimethyl-1-heptene, 4-vinylcyclohexene, vinylcyclohexane, norbornadiene, ethylidene norbornene, cyclopentene, cyclohexene, dicyclopentadiene, cyclooctene, $C_4$-$C_{40}$ dienes, including but not limited to 1,3-butadiene, 1,3-pentadiene, 1,4-hexadiene, 1,5-hexadiene, 1,7-octadiene, 1,9-decadiene, other $C_4$-$C_{40}$ α-olefins, and the like. In certain embodiments, the α-olefin is propylene-1-butene, 1-pentene, 1-hexene, 1-octene or a combination thereof. Although any hydrocarbon containing a vinyl group potentially may be used in embodiments of the invention, practical issues such as monomer availability, cost, and the ability to conveniently remove unreacted monomer from the resulting polymer may become more problematic as the molecular weight of the monomer becomes too high.

The polymerization processes described herein are well suited for the production of olefin polymers comprising monovinylidene aromatic monomers including styrene, o-methyl styrene, p-methyl styrene, t-butylstyrene, and the like. In particular, interpolymers comprising ethylene and styrene can be prepared by following the teachings herein. Optionally, copolymers comprising ethylene, styrene and a $C_3$-$C_{20}$ alpha olefin, optionally comprising a $C_4$-$C_{20}$ diene, having improved properties can be prepared.

Suitable non-conjugated diene monomers can be a straight chain, branched chain or cyclic hydrocarbon diene having from 6 to 15 carbon atoms. Examples of suitable non-conjugated dienes include, but are not limited to, straight chain acyclic dienes, such as 1,4-hexadiene, 1,6-octadiene, 1,7-octadiene, 1,9-decadiene, branched chain acyclic dienes, such as 5-methyl-1,4-hexadiene; 3,7-dimethyl-1,6-octadiene; 3,7-dimethyl-1,7-octadiene and mixed isomers of dihydromyricene and dihydroocinene, single ring alicyclic dienes, such as 1,3-cyclopentadiene; 1,4-cyclohexadiene; 1,5-cyclooctadiene and 1,5-cyclododecadiene, and multi-ring alicyclic fused and bridged ring dienes, such as tetrahydroindene, methyl tetrahydroindene, dicyclopentadiene, bicyclo-(2,2,1)-hepta-2,5-diene; alkenyl, alkylidene, cycloalkenyl and cycloalkylidene norbornenes, such as 5-methylene-2-norbornene (MNB); 5-propenyl-2-norbomene, 5-isopropylidene-2-norbornene, 5-(4-cyclopentenyl)-2-norbornene, 5-cyclohexylidene-2-norbomene, 5-vinyl-2-norbomene, and

norbornadiene. Of the dienes typically used to prepare EPDMs, the particularly preferred dienes are 1,4-hexadiene (HD), 5-ethylidene-2-norbomene (ENB), 5-vinylidene-2-norbornene (VNB), 5-methylene-2-norbornene (MNB), and dicyclopentadiene (DCPD). The especially preferred dienes are 5-ethylidene-2-norbornene (ENB) and 1,4-hexadiene (HD).

One class of desirable polymers that can be made in accordance with embodiments of the invention are elastomeric interpolymers of ethylene, a $C_3$-$C_{20}$ $\alpha$-olefin, especially propylene, and optionally one or more diene monomers. Preferred $\alpha$-olefins for use in this embodiment of the present invention are designated by the formula $CH_2$=CHR‡. where R* is a linear or branched alkyl group of from 1 to 12 carbon atoms. Examples of suitable $\alpha$-olefins include, but are not limited to, propylene, isobutylene, 1-butene, 1-pentene, 1-hexene, 4-methyl-1-pentene, and 1-octene. A particularly preferred $\alpha$-olefin is propylene. The propylene based polymers are generally referred to in the art as EP or EPDM polymers. Suitable dienes for use in preparing such polymers, especially multi-block EPDM type polymers include conjugated or non-conjugated, straight or branched chain-, cyclic- or polycyclic- dienes comprising from 4 to 20 carbons. Preferred dienes include 1,4-pentadiene, 1,4-hexadiene, 5-ethylidene-2-norbornene, dicyclopentadiene, cyclohexadiene, and 5-butylidene-2-norbomene. A particularly preferred diene is 5-ethylidene-2-norbomene.

Because the diene containing polymers comprise alternating segments or blocks containing greater or lesser quantities of the diene (including none) and $\alpha$-olefin (including none), the total quantity of diene and $\alpha$-olefin may be reduced without loss of subsequent polymer properties. That is, because the diene and $\alpha$-olefin monomers are preferentially incorporated into one type of block of the polymer rather than uniformly or randomly throughout the polymer, they are more efficiently utilized and subsequently the crosslink density of the polymer can be better controlled. Such crosslinkable elastomers and the cured products have advantaged properties, including higher tensile strength and better elastic recovery.

In some embodiments, the inventive interpolymers made with two catalysts incorporating differing quantities of comonomer have a weight ratio of blocks formed thereby from 95:5 to 5:95. The elastomeric polymers desirably have an ethylene content of from 20 to 90 percent, a diene content of from 0.1 to 10 percent, and an $\alpha$-olefin content of from 10 to 80 percent, based on the total weight of the polymer. Further preferably, the multi-block elastomeric polymers have an ethylene content of from 60 to 90 percent, a diene content of from 0.1 to 10 percent, and an $\alpha$-olefin content of from 10 to 40 percent, based on the total weight of the polymer. Preferred polymers are high molecular weight polymers, having a weight average molecular weight (Mw) from 10,000 to about 2,500,000, preferably from 20.000 to 500,000, more preferably from 20,000 to 350,000, and a polydispersity less than 3.5, more preferably less than 3.0, and a Money viscosity (ML (1+4) 125°C.) from 1 to 250. More preferably, such polymers have an ethylene content from 65 to 75 percent, a diene content from 0 to 6 percent, and an $\alpha$-olefin content from 20 to 35 percent.

The ethylene/$\alpha$-olefin interpolymers can be functionalized by incorporating at least one functional group in its polymer structure. Exemplary functional groups may include, for example, ethylenically unsaturated mono- and di-functional carboxylic acids, ethylenically unsaturated mono- and di-functional carboxylic acid anhydrides, salts thereof and esters thereof. Such functional groups may be grafted to an ethylene/$\alpha$ -olefin interpolymer, or it may be copolymerized with ethylene and an optional additional comonomer to form an interpolymer of ethylene, the functional comonomer and optionally other comonomer(s). Means for grafting functional groups onto polyethylene are described for example in U.S. Patents Nos. 4,762,890, 4,927,888, and 4,950,541.
One particularly useful functional group is malic anhydride.

The amount of the functional group present in the functional interpolymer can vary. The functional group can typically be present in a copolymer-type functionalized interpolymer in an amount of at least about 1.0 weight percent, preferably at least about 5 weight percent, and more preferably at least about 7 weight percent. The functional group will typically be present in a copolymer-type functionalized interpolymer in an amount less than about 40 weight percent, preferably less than about 30 weight percent, and more preferably less than about 25 weight percent.

## Testing Methods

In the examples that follow, the following analytical techniques are employed:

## GPC Method for Samples 1-4 and A-C

An automated liquid-handling robot equipped with a heated needle set to 160°C is used to add enough 1,2,4-trichlorobenzene stabilized with 300 ppm Ionol to each dried polymer sample to give a final concentration of 30 mg/mL. A small glass stir rod is placed into each tube and the samples are heated to 160°C for 2 hours on a heated, orbital-shaker rotating at 250 rpm. The concentrated polymer solution is then diluted to 1 mg/ml using the automated liquid-handling robot and the heated needle set to 160°C.

A Symyx Rapid GPC system is used to determine the molecular weight data for each sample. A Gilson 350 pump set at 2.0 ml/min flow rate is used to pump helium-purged 1,2-dichlorobenzene stabilized with 300 ppm Ionol as

the mobile phase through three Plgel 10 micrometer ($\mu$m) Mixed B 300mm x 7.5mm columns placed in series and heated to 160˚C. A Polymer Labs ELS 1000 Detector is used with the Evaporator set to 250˚C, the Nebulizer set to 165˚C, and the nitrogen flow rate set to 1.8 SLM at a pressure of 60-80 psi (400-600 kPa) $N_2$. The polymer samples are heated to 160˚C and each sample injected into a 250 $\mu$l loop using the liquid-handling robot and a heated needle. Serial analysis of the polymer samples using two switched loops and overlapping injections are used. The sample data is collected and analyzed using Symyx Epoch™ software. Peaks are manually integrated and the molecuiar weight information reported uncorrected against a polystyrene standard calibration curve.

**Standard CRYSTAF Method**

Branching distributions are determined by crystallization analysis fractionation (CRYSTAF) using a CRYSTAF 200 unit commercially available from PolymerChar, Valencia, Spain. The samples are dissolved in 1,2,4 trichlorobenzene at 160˚C (0.66 mg/mL) for 1 hour and stabilized at 95˚C for 45 minutes. The sampling temperatures range from 95 to 30˚C at a cooling rate of 0.2˚C/min. An infrared detector is used to measure the polymer solution concentrations. The cumulative soluble concentration is measured as the polymer crystallizes while the temperature is decreased. The analytical derivative of the cumulative profile reflects the short chain branching distribution of the polymer.

The CRYSTAF peak temperature and area are identified by the peak analysis module included in the CRYSTAF Software (Version 2001.b, PolymerChar, Valencia, Spain). The CRYSTAF peak finding routine identifies a peak temperature as a maximum in the dW/dT curve and the area between the largest positive inflections on either side of the identified peak in the derivative curve. To calculate the CRYSTAF curve, the preferred processing parameters are with a temperature limit of 70˚C and with smoothing parameters above the temperature limit of 0.1. and below the temperature limit of 0.3.

**DSC Standard Method (Excluding Samples 1-4 and A-C)**

Differential Scanning Calorimetry results are determined using a TAI model Q1000 DSC equipped with an RCS cooling accessory and an autosampler. A nitrogen purge gas flow of 50 ml/min is used. The sample is pressed into a thin film and melted in the press at about 175˚C and then air-cooled to room temperature (25˚C). 3-10 mg of material is then cut into a 6 mm diameter disk, accurately weighed, placed in a light aluminum pan (ca 50 mg), and then crimped shut. The thermal behavior of the sample is investigated with the following temperature profile. The sample is rapidly heated to 180˚C and held isothermal for 3 minutes in order to remove any previous thermal history. The sample is then cooled to - 40˚C at 10˚C/min cooling rate and held at -40˚C for 3 minutes. The sample is then heated to 150˚C at 10˚C/min, hearing rate. The cooling and second heating curves are recorded.

The DSC melting peak is measured as the maximum in heat flow rate (W/g) with respect to the linear baseline drawn between -30˚C. and end of melting. The heat of fusion is measured as the area under the melting curve between -30˚C and the end of melting using a linear baseline.

**GPC Method (Excluding Samples 1-4 and A-C)**

The gel permeation chromatographic system consists of either a Polymer Laboratories Model PL-210 or a Polymer Laboratories Model PL-220 instrument. The column and carousel compartments are operated at 140˚C. Three Polymer Laboratories 10-micron Mixed-B columns are used. The solvent is 1,2,4 trichlorobenzene. The samples are prepared at a concentration of 0.1 grams of polymer in 50 milliliters of solvent containing 200 ppm of butylated hydroxytoluene (BHT). Samples are prepared by agitating lightly for 2 hours at 160˚C. The injection volume used is 100 microliters and the flow rate is 1.0 ml/minute.

Calibration of the GPC column set is performed with 21 narrow molecular weight distribution polystyrene standards with molecular weights ranging from 580 to 8,400,000, arranged in 6 "cocktail" mixtures with at least a decade of separation between individual molecular weights. The standards are purchased from Polymer Laboratories (Shropshire, UK). The polystyrene standards are prepared at 0.025 grams in 50 milliliters of solvent for molecular weights equal to or greater than 1,000,000, and 0.05 grams in 50 milliliters of solvent for molecular weights less than 1,000,000. The polystyrene standards are dissolved at 80˚C with gentle agitation for 30 minutes. The narrow standards mixtures are run first and in order of decreasing highest molecular weight component to minimize degradation. The polystyrene standard peak molecular weights are converted to polyethylene molecular weights using the following equation (as described in Williams and Ward, J. Polym. Sci., Polym, Let., 6, 621 (1968)): $M_{polyethylene} = 0.431 (M_{polystyrene})$.

Polyethylene equivalent molecular weight calculations are performed using Viscotek TriSEC software Version 3.0.

## Compression Set

Compression set is measured according to ASTM D 395. The sample is prepared by stacking 25.4 mm diameter round discs of 3.2 mm, 2.0 mm, and 0.25 mm thickness until a total thickness of 12.7 mm is reached. The discs are cut from 12.7 cm x 12.7 cm compression molded plaques molded with a hot press under the following conditions: zero pressure for 3 minutes at 190˚C, followed by 86 MPa for 2 minutes at 190˚C, followed by cooling inside the press with cold running water at 86 MPa.

## Density

Samples for density measurement are prepared according to ASTM D 1928. Measurements are made within one hour of sample pressing using ASTM D792, Method B.

## Flexural/Secant Modulus/ Storage Modulus

Samples are compression molded using ASTM D 1928. Flexural and 2 percent secant moduli are measured according to ASTM D-790. Storage modulus is measured according to ASTM D 5026-01 or equivalent technique.

## Optical properties

Films of 0.4 mm thickness are compression molded using a hot press (Carver Model #4095-4PR1001R). The pellets are placed between polytetrafluoroethylene sheets, heated at 190 ˚C at 55 psi (380 kPa) for 3 minutes, followed by 1.3 MPa for 3 minutes, and then 2.6 MPa for 3 minutes. The film is then cooled in the press with running cold water at 1.3 MPa for 1 minute. The compression molded films are used for optical measurements, tensile behavior, recovery, and stress relaxation.

Clarity is measured using BYK Gardner Haze-gard as specified in ASTM D 1746.

45˚ gloss is measured using BYK Gardner Glossmeter Microgloss 45˚ as specified in ASTM D-2457.

Internal haze is measured using BYK Gardner Haze-gard based on ASTM D 1003 Procedure A. Mineral oil is applied to the film surface to remove surface scratches.

## Mechanical Properties - Tensile, Hysteresis, and Tear

Stress-strain behavior in uniaxial tension is measured using ASTM D 1708 microtensile specimens. Samples are stretched with an Instron at 500% min$^{-1}$ at 21˚C. Tensile strength and elongation at break are reported from an average of 5 specimens.

100% and 300% Hysteresis is determined from cyclic loading to 100% and 300% strains using ASTM D 1708 microtensile specimens with an Instron™ instrument. The sample is loaded and unloaded at 267 % min$^{-1}$ for 3 cycles at 21˚C. Cyclic experiments at 300% and 80˚C are conducted using an environmental chamber. In the 80˚C experiment, the sample is allowed to equilibrate for 45 minutes at the test temperature before testing. In the 21˚C, 300% strain cyclic experiment, the retractive stress at 150% strain from the first unloading cycle is recorded. Percent recovery for all experiments are calculated from the first unloading cycle using the strain at which the load returned to the base line. The percent recovery is defined as:

$$\%Recovery = \frac{\varepsilon_f - \varepsilon_s}{\varepsilon_f} \times 100$$

where $\varepsilon_r$ is the strain taken for cyclic loading and $\varepsilon_s$ is the strain where the load returns to the baseline during the 1$^{st}$ unloading cycle.

Stress relaxation is measured at 50 percent strain and 37˚C for 12 hours using an Instron™ instrument equipped with an environmental chamber. The gauge geometry was 76 mm x 25 mm x 0.4 mm. After equilibrating at 37˚C for 45 min in the environmental chamber, the sample was stretched to 50% strain at 333% min$^{-1}$. Stress was recorded as a function of time for 12 hours. The percent stress relaxation after 12 hours was calculated using the formula:

$$\% \, Stress \; Relaxation = \frac{L_0 - L_{12}}{L_0} \times 100$$

where $L_0$ is the load at 50% strain at 0 time and $L_{12}$ is the load at 50 percent strain after 12 hours.

Tensile notched tear experiments are carried out on samples having a density of 0.88 g/cc or less using an Instron™ instrument. The geometry consists of a gauge section of 76 mm x 13 mm x 0.4 mm with a 2 mm notch cut into the sample at half the specimen length. The sample is stretched at 508 mm $min^{-1}$ at 21 °C until it breaks. The tear energy is calculated as the area under the stress-elongation curve up to strain at maximum load. An average of at least 3 specimens are reported.

**TMA**

Thermal Mechanical Analysis (Penetration Temperature) is conducted on 30mm diameter x 3.3 mm thick, compression molded discs, formed at 180°C and 10 MPa molding pressure for 5 minutes and then air quenched. The instrument used is a TMA 7. brand available from Perkin-Elmer. In the test, a probe with 1.5 mm radius tip (P/N N519-0416) is applied to the surface of the sample disc with 1N force. The temperature is raised at 5°C/min from 25°C. The probe penetration distance is measured as a function of temperature. The experiment ends when the probe has penetrated 1 mm into the sample.

**DMA**

Dynamic Mechanical Analysis (DMA) is measured on compression molded disks formed in a hot press at 180°C at 10 MPa pressure for 5 minutes and then water cooled in the press at 90°C / min. Testing is conducted using an ARES controlled strain rheometer (TA instruments) equipped with dual cantilever fixtures for torsion testing.

A 1.5mm plaque is pressed and cut in a bar of dimensions 32x12mm. The sample is clamped at both ends between fixtures separated by 10mm (grip separation $\Delta L$) and subjected to successive temperature steps from -100°C to 200°C (5°C per step). At each temperature the torsion modulus G' is measured at an angular frequency of 10 rad/s, the strain amplitude being maintained between 0.1 percent and 4 percent to ensure that the torque is sufficient and that the measurement remains in the linear regime.

An initial static force of 10 g is maintained (auto-tension mode) to prevent slack in the sample when thermal expansion occurs. As a consequence, the grip separation $\Delta L$ increases with the temperature, particularly above the melting or softening point of the polymer sample. The test stops at the maximum temperature or when the gap between the fixtures reaches 65 mm.

**Melt Index**

Melt index or $I_2$ is measured in accordance with ASTM D 1238. Condition 190°C/2.16 kg. Melt index, or $I_{10}$ is also measured in accordance with ASTM D 1238, Condition 190°C/10kg.

**ATREF**

Analytical temperature rising elution fractionation (ATREF) analysis is conducted according to the method described in U.S. Patent No. 4,798,081 and Wilde, L.; Ryle, T.R.; Knobeloch, D.C.: Peat, I.R.; Determination of Branching Distributions in Polyethylene and Ethylene Copolymers, J. Polym. Sci., 20, 411-455 (1982).
The composition to be analyzed is dissolved in trichlorobenzene and allowed to crystallize in a column containing an inert support (stainless steel shot) by slowly reducing the temperature to 20°C at a cooling rate of 0.1°C/min. The column is equipped with an infrared detector. An ATREF chromatogram curve is then generated by eluding the crystallized polymer sample from the column by slowly increasing the temperature of the eluting solvent (trichlorobenzene) from 20 to 120°C at a rate of 1.5°C/min.

**$^{13}C$ NMR Analysis**

The samples are prepared by adding approximately 3g of a 50/50 mixture of tetrachloroethane-$d^2$/orthodichlorobenzene to 0.4 g sample in a 10 mm NMR tube. The samples are dissolved and homogenized by heating the tube and its contents to 150°C. The data are collected using a JEOL Eclipse™ 400MHz spectrometer or a Varian Unity Plus™ 400MHz spectrometer, corresponding to a $^{13}C$ resonance frequency of 100.5 MHz. The data are acquired using 4000

transients per data file with a 6 second pulse repetition delay. To achieve minimum signal-to-noise for quantitative analysis, multiple data files are added together. The spectral width is 25,000 Hz with a minimum file size of 32K data points. The samples are analyzed at 130 °C in a 10 mm broad band probe. The comonomer incorporation is determined using Randall's triad method (Randall, J.C.; JMS-Rev. Macromol. Chem. Phys., C29, 201-317 (1989).

**Polymer Fractionation by TREF**

Large-scale TREF fractionation is carried by dissolving 15-20 g of polymer in 2 liters of 1.2,4-trichlorobenzene (TCB)by stirring for 4 hours at 160°C. The polymer solution is forced by 15 psig (100 kPa) nitrogen onto a 3 inch by 4 foot (7.6 cm x 12 cm) steel column packed with a 60:40 (v:v) mix of 30-40 mesh (600-425 μm) spherical, technical quality glass beads (available from Potters Industries, HC 30 Box 20, Brownwood, TX, 76801) and stainless steel. 0.028" (0.7mm) diameter cut wire shot (available from Pellets, Inc. 63 Industrial Drive, North Tonawanda, NY, 14120). The column is immersed in a thermally controlled oil jacket, set initially to 160°C. The column is first cooled ballistically to 125°C, then slow cooled to 20°C at 0.04°C per minute and held for one hour. Fresh TCB is introduced at about 65 ml/min while the temperature is increased at 0.167°C per minute.

Approximately 2000 ml portions of eluant from the preparative TREF column are collected in a 16 station, heated fraction collector. The polymer is concentrated in each fraction using a rotary evaporator until about 50 to 100 ml of the polymer solution remains. The concentrated solutions are allowed to stand overnight before adding excess methanol, filtering, and rinsing (approx. 300-500 ml of methanol including the final rinse). The filtration step is performed on a 3 position vacuum assisted filtering station using 5.0 μm polytetrafluoroethylene coated filter paper (available from Osmonics Inc., Cat# Z50WP04750). The filtrated fractions are dried overnight in a vacuum oven at 60°C and weighed on an analytical balance before further testing.

**Melt Strength**

Melt Strength (MS) is measured by using a capillary rheometer fitted with a 2.1 mm diameter, 20:1 die with an entrance angle of approximately 45 degrees. After equilibrating the samples at 190°C for 10 minutes, the piston is run at a speed of 1 inch/minute (2.54 cm/minute). The standard test temperature is 190°C. The sample is drawn uniaxially to a set of accelerating nips located 100 mm below the die with an acceleration of 2.4 mm/sec$^2$. The required tensile force is recorded as a function of the take-up speed of the nip rolls. The maximum tensile force attained during the test is defined as the melt strength. In the case of polymer melt exhibiting draw resonance, the tensile force before the onset of draw resonance was taken as melt strength. The melt strength is recorded in centiNewtons ("cN").

**Catalysts**

The term "overnight", if used, refers to a time of approximately 16-18 hours, the term "room temperature", refers to a temperature of 20-25 °C. and the term "'mixed alkanes" refers to a commercially obtained mixture of $C_{6-9}$ aliphatic hydrocarbons available under the trade designation Isopar F®. from ExxonMobil Chemical Company. In the event the name of a compound herein does not conform to the structural representation thereof, the structural representation shall control. The synthesis of all metal complexes and the preparation of all screening experiments were carried out in a dry nitrogen atmosphere using dry box techniques. All solvents used were HPLC grade and were dried before their use.

MMAO refers to modified methylalumoxane, a triisobutylaluminum modified methylalumoxane available commercially from Akzo-Noble Corporation.

The preparation of catalyst (B1) is conducted as follows.

a) <u>Preparation of (1-methylethyl)(2-hydroxy-3,5-di(t-butyl)phenyl)methylimine</u>

3,5-Di-t-butyl Isalicylaldehyde (3.00 g) is added to 10 mL of isopropylamine. The solution rapidly turns bright yellow After stirring at ambient temperature for 3 hours, volatiles are removed under vacuum to yield a bright yellow, crystalline solid (97 percent yield).

b) <u>Preparation of 1,2-bis-(3.5-di-t-butylphenylene)(1-(N-(1-methylethyl)immino)methyl)(2-oxoyl)zirconium dibenzyl zirconium dibenzyl</u>

A solution of (1-methylethyl)(2-hydroxw-3.5-di(t-butyl)phenyl)imine (605 mg. 2.2 mmol) in 5 mL toluene is slowly added to a solution of $Zr(CH_2Ph)_4$ (500 mg, 1.1 mmol) in 50 mL toluene. The resulting dark yellow solution is stirred for 30 minutes. Solvent is removed under reduced pressure to yield the desired product as a reddish-brown solid.

The preparation of catalyst (B2) is conducted as follows.

a) Preparation of (1-(2-methylcyctohexy)ethyl)(2-oxoyl-3.5-di(t-butyl)phenyl)imine

2-Methylcyclohexylamine (8.44 mL, 64.0 mmol) is dissolved in methanol (90 mL), and di-t-butylsalicaidehyde (10.00 g, 42.67 mmol) is added. The reaction mixture is stirred for three hours and then cooled to -25˚C for 12 hours. The resulting yellow solid precipitate is collected by filtration and washed with cold methanol (2 x 15 mL), and then dried under reduced pressure. The yield is 11.17 g of a yellow solid. $^{1}$H NMR is consistent with the desired product as a mixture of isomers.

b) Preparation of bis-(1-(2-methylcyclohexyl)ethyl)(2-oxoyl-3.5-di(t-butyl)phenyl) immino)zirconium dibenzyl

A solution of (1-(2-methylcyclohcxyl)ethyl)(2-oxoyl-3,5-di(t-butyl)phenyl)imine (7.63 g, 23.2 mmol) in 200 my toluene is slowly added to a solution of $Zr(CH_2Ph)_4$ (5.28 g, 11.6 mmol) in 600 mL toluene. The resulting dark yellow solution is stirred for 1 hour at 25˚C. The solution is diluted further with 680 mL toluene to give a solution having a concentration of 0.00783 M.

Cocatalyst I A mixture of methyldi($C_{14-18}$alkyl)ammonium salts of tetrakis(pentafluoraphenyl)borate (here-inafter armeenium borate), prepared by reaction of a long chain trialkylamine (Armeen™ M2HT, available from Akzo-Nobel, Inc.), HCl and $Li[B(C_6F_5)_4]$, substantially as disclosed in USP 5,919,9883. Ex. 2.

Cocatalyst 2 Mixed $C_{14-18}$ alkyldimethylammonium salt of bis(trisjpentafluorophenyl-alumane)-2-undecylimidazolide, prepared according to USP 6.395.671 Ex. 16.

Shuttling Agents The shuttling agents employed include diethylzinc (DEZ, SA1), di(i-buryl)zinc (SA2), di(n-hexyl)zinc (SA3), triethylaluminum (TEA, SA4), trioctylaluminum (SA5), triethylgallium (SA6), i-bulylaluminum bis(dimethyl(t-butyl)siloxane) (SA7), i-butvlaluminum bis(di(trimethylsilyl)amide) (SA8), n-octylaluminum di(pyridine-2-methoxide) (SA9), bis(n-octadecyl)i-butylaluminum (SA10), i-butylaiuminum bis(di(n-pentyl)amide) (SA11), n-octytaluminum bis(2,6-di-t-butylphenoxide) (SA12), n-octylaluminum di(ethyl(1-naphthyl)amide) (SA13), ethylaluminum bis(t-butyldimethylsiloxide) (SA14), ethylaluminum di(bis(trimethylsilyl)amide) (SA15), ethylaluminum bis(2,3,6,7-dibenzo-1-azacycloheplaneamide) (SA16), n-octylaluminum bis(2,3,6,7-dibenzo-1-azacycloheptaneamide) (SA17), n-octylaluminum bis (dimethyl(t-butyl)siloxide(SA18), ethylzinc (2.6-diphenylphenoxide) (SA19), and ethylzinc (t-butoxide) (SA20).

## Examples 1-4, Comparative A-C

### General High Throughput Parallel Polymerization Conditions

Polymerizations are conducted using a high throughput, parallel polymerization reactor (PPR) available from Symyx Technologies, Inc. and operated substantially according to US Patents No. 6,248,540, 6,030,917, 6,362,309, 6,306,658, and 6,316,663. Ethylene copolymerizations are conducted at 130˚C and 200 psi (1.4 MPa) with ethylene on demand using 1.2 equivalent of cocatalyst 1 based on total catalyst used (1.1 equivalents when MMAO is present). A series of polymerizations are conducted in a parallel pressure reactor (PPR) contained of 48 individual reactor cells in a 6 x 8 array that are fitted with a preweighed grass tube. The working volume in each reactor cell is 6000 μL. Each cell is temperature and pressure controlled with stirring provided by individual stirring paddles. The monomer gas and quench gas are plumbed directly into the PPR unit and controlled by automatic valves. Liquid reagents are robotically added to each reactor cell by syringes and the reservoir solvent is mixed alkanes. The order of addition is mixed alkanes solvent (4 ml), ethylene, I-octene comonomer (1 ml), cocatalyst 1 or cocatalyst 1/MMAO mixture, shuttling agent, and catatyst or catalyst mixture. When a mixture of cocatalyst 1 and MMAO or a mixture of two catalysts is used, the reagents are premixed in a small vial immediately prior to addition to the reactor. When a reagent is omitted in an experiment, the above order of addition is otherwise maintained. Polymerizations are conducted for approximately 1-2 minutes, until predetermined ethylene consumptions are reached. After quenching with CO. the readers are cooled and the glass tubes are unloaded. The tubes are transferred to a centrifuge/vacuum drying unit, and dried for 12 hours at 60˚C. The tubes containing dried polymer are weighed and the difference between this weight and the tare weight gives the net yield of polymer. Results are contained in Table 1. In Table 1 and elsewhere in the application, comparative compounds are indicated by an asterisk (*).

Examples 1-4 demonstrate the synthesis of linear block copolymers by the present invention as evidenced by the formation of a very narrow MWD, essentially monomodal copolymer when DEZ is present and a bimodal, broad molecular weight distribution product (a mixture of separately produced polymers) in the absence of DEZ. Due to the fact that Catalyst (A1) is known to incorporate more octene than Catalyst (B1), the different blocks or segments of the resulting copolymers of the invention are distinguishable based on branching or density.

**Table 1**

| Ex. | Cat. (A1) (μmol) | Cat (B1) (μmol) | Cocat (μmol) | MMAO (μmol) | shuttling agent(μmol) | Yield (g) | Mn | Mw/Mn | hexyls[1] |
|---|---|---|---|---|---|---|---|---|---|
| A* | 0.06 | - | 0.066 | 0.3 | - | 0.1363 | 300502 | 3.32 | - |
| B* | - | 0.1 | 0.110 | 0.5 | - | 0.1581 | 36957 | 1.22 | 2.5 |
| C* | 0.06 | 0.1 | 0.176 | 0.8 | - | 0.2038 | 45526 | 5.30[2] | 5.5 |
| 1 | 0.06 | 0.1 | 0.192 | - | DEZ (8.0) | 0.1974 | 28715 | 1.19 | 4.8 |
| 2 | 0.06 | 0.1 | 0.192 | - | DEZ (80.0) | 0.1468 | 2161 | 1.12 | 14.4 |
| 3 | 0.06 | 0.1 | 0.192 | - | TEA (8.0) | 0.208 | 22675 | 1.71 | 4.6 |
| 4 | 0.06 | 0.1 | 0.192 | - | TEA (80.0) | 0.1879 | 3338 | 1.54 | 9.4 |

[1] $C_6$ or higher chain content per 1000 carbons
[2] Bimodal molecular weight distribution

It may be seen the polymers produced according to the invention have a relatively narrow polydispersity (Mw/Mn) and larger block-copolymer content (trimer, tetramer, or larger) than polymers prepared in the absence of the shuttling agent.

Further characterizing data for the polymers of Table I are determined by reference to the figures. More specifically DSC and ATREF results show the following:

The DSC curve for the polymer of example 1 shows a 115.7°C melting point (Tm) with a heat of fusion of 158.1 J/g. The corresponding CRYSTAF curve shows the tallest peak at 34.5°C with a peak area of 52.9 percent. The difference between the DSC Tm and the Tcrystaf is 81.2°C.

The DSC curve for the polymer of example 2 shows a peak with a 109.7°C melting point (Tm) with a heat of fusion of 214.0 J/g. The corresponding CRYSTAF curve shows the tallest peak at 46.2°C with a peak area of 7.0 percent. The difference between the DSC Tm and the Tcrystaf is 63.5°C.

The DSC curve for the polymer of example 3 shows a peak with a 120.7°C melting point (Tm) with a heat of fusion of 160.1 J/g. The corresponding CRYSTAF curve shows the tallest peak at 66.1°C with a peak area of 71.8 percent. The difference between the DSC Tm and the Tcrystaf is 54.6°C.

The DSC curve for the polymer of example 4 shows a peak with a 104.5°C melting point (Tm) with a heat of fusion of 170.7 J/g. The corresponding CRYSTAF curve shows the tallest peak at 30 °C with a peak area of 18.2 percent. The difference between the DSC Tm and the Tcrystaf is 74.5°C.

The DSC curve for comparative A shows a 90.0°C melting point (Tm) with a heat of fusion of 86.7 J/g. The corresponding CRYSTAF curve shows the tallest peak at 48.5°C with a peak area of 29.4 percent. Both of these values are consistent with a resin that is low in density. The difference between the DSC Tm and the Tcrystaf is 41.8°C.

The DSC curve for comparative B shows a 129.8°C melting point (Tm) with a heat of fusion of 237.0 J/g. The corresponding CRYSTAF curve shows the tallest peak at 82.4°C with a peak area of 83.7 percent. Both of these values are consistent with a resin that is high in density. The difference between the DSC Tm and the Tcrystaf is 47.4°C.

The DSC curve for comparative C shows a 125.3°C melting point (Tm) with a heat of fusion of 143.0 J/g. The corresponding CRYSTAF curve shows the tallest peak at 81.8 °C with a peak area of 34.7 percent as well as a lower crystalline peak at 52.4 °C. The separation between the two peaks is consistent with the presence of a high crystalline and a low crystalline polymer. The difference between the DSC Tm and the Tcrystaf is 43.5°C.

## Examples 5-19, Comparatives D-F, Continuous Solution Polymerization, Catalyst A1/B2 + DEZ

Continuous solution polymerizations are carried out in a computer controlled autoclave reactor equipped with an internal stirrer. Purified mixed alkanes solvent (Isopar™ E available from ExxonMobil Chemical Company), ethylene at 2.70 lbs/hour (1.22 kg/hour), 1-octene, and hydrogen (where used) are supplied to a 3.8 L reactor equipped with a jacket for temperature control and an internal thermocouple. The solvent feed to the reactor is measured by a mass-flow controller. A variable speed diaphragm pump controls the solvent flow rate and pressure to the reactor. At the discharge of the pump, a side stream is taken to provide flush flows for the catalyst and cocatalyst 1 injection lines and the reactor agitator. These flows are measured by Micro-Motion mass flow meters and controlled by control valves or by the manual adjustment of needle valves. The remaining solvent is combined with 1-octene, ethylene, and hydrogen (where used) and fed to the reactor. A mass flow controller is used to deliver hydrogen to the reactor as needed. The temperature of the solvent/monomer solution is controlled by use of a heat exchanger before entering the reactor. This stream enters the bottom of the reactor. The catalyst component solutions are metered using pumps and mass flow

meters and are combined with the catalyst flush solvent and introduced into the bottom of the reactor. The reactor is run liquid-full at 500 psig (3.45 MPa) with vigorous stirring. Product is removed through exit lines at the top of the reactor. All exit lines from the reactor are steam traced and insulated. Polymerization is stopped by the addition of a small amount of water into the exit line along with any stabilizers or other additives and passing the mixture through a static mixer. The product stream is then heated by passing through a heat exchanger before devolatilization. The polymer product is recovered by extrusion using a devolatilizing extruder and water cooled pelletizer. Process details and results are contained in Table 2. Selected polymer properties are provided in Table 3.

**Table 2 Process details for preparation of exemplary polymers**

| Ex. | $C_8H_{10}$ kg/hr | Solv. kg/hr | $H_2$ sccm[1] | T ˚C | Cat A1[2] ppm | Cat A1 Flow kg/hr | Cat B2[3] ppm | B2 Flow kg/hr | DEZ Conc % | DEZ Flow kg/hr | Cocat Conc. ppm | Cocat Flow kg/hr | $[C_2H_4]/[DEZ]$[4] | Poly Rate[5] kg/hr | Conv | Solids %[6] % | Eff.[7] |
|---|---|---|---|---|---|---|---|---|---|---|---|---|---|---|---|---|---|
| D* | 1.63 | 12.7 | 29.90 | 120 | 142.2 | 0.14 | - | -- | 0.19 | 0.32 | 820 | 0.17 | 536 | 1.81 | 88.8 | 11.2 | 95.2 |
| E* | " | 9.5 | 5.00 | " | -- | -- | 109 | 0.10 | 0.19 | " | 1743 | 0.40 | 485 | 1.47 | 89.9 | 11.3 | 126.8 |
| F* | " | 11.3 | 251.6 | " | 71.7 | 0.06 | 30.8 | 0.06 | -- | -- | " | 0.11 | - | 1.55 | 88.5 | 10.3 | 257.7 |
| 5 | " | " | - | " | " | 0.14 | 30.8 | 0.13 | 0.17 | 0.43 | " | 0.26 | 419 | 1.64 | 89.6 | 11.1 | 118.3 |
| 6 | " | " | 4.92 | " | " | 0.10 | 30.4 | 0.08 | 0.17 | 0.32 | " | 0.18 | 570 | 1.65 | 89.3 | 11.1 | 172.7 |
| 7 | " | .. | 21.70 | " | " | 0.07 | 30.8 | 0.06 | 0.17 | 0.25 | " | 0.13 | 718 | 1.60 | 89.2 | 10.6 | 244.1 |
| 8 | " | " | 36.90 | " | " | 0.06 | " | " | " | 0.10 | " | 0.12 | 1778 | 1.62 | 90.0 | 10.8 | 261.1 |
| 9 | " | " | 78.43 | " | " | " | " | " | " | 0.04 | " | " | 4596 | 1.63 | 90.2 | 10.8 | 267.9 |
| 10 | " | " | 0.00 | 123 | 71.1 | 0.12 | 30.3 | 0.14 | 0.34 | 0.19 | 1743 | 0.08 | 415 | 1.67 | 90.31 | 11.1 | 131.1 |
| 11 | " | " | " | 120 | 71.1 | 0.16 | " | 0.17 | 0.80 | 0.15 | 1743 | 0.10 | 249 | 1.68 | 89.56 | 11.1 | 100.6 |
| 12 | " | " | " | 121 | 71.1 | 0.15 | " | 0.07 | " | 0.09 | 1743 | 0.07 | 396 | 1.70 | 90.02 | 11.3 | 137.0 |
| 13 | " | " | " | 122 | 71.1 | 0.12 | " | 0.06 | " | 0.05 | 1743 | 0.05 | 653 | 1.69 | 89.64 | 11.2 | 161.9 |
| 14 | " | " | " | 120 | 71.1 | 0.05 | " | 0.29 | " | 0.10 | 1743 | 0.10 | 395 | 1.41 | 89.42 | 9.3 | 114.1 |
| 15 | 2.45 | " | " | " | 71.1 | 0.14 | " | 0.17 | " | 0.14 | 1743 | 0.09 | 282 | 1.80 | 89.33 | 11.3 | 121.3 |
| 16 | " | " | " | 122 | 71.1 | 0.10 | " | 0.13 | " | 0.07 | 1743 | 0.07 | 485 | 1.78 | 90.11 | 11.2 | 159.7 |
| 17 | " | " | " | 121 | 71.1 | 0.10 | " | 0.14 | " | 0.08 | 1743 | " | 506 | 1.75 | 89.08 | 11.0 | 155.6 |
| 18 | 0.69 | " | " | 121 | 71.1 | " | " | 0.22 | " | 0.11 | 1743 | 0.10 | 331 | 1.25 | 89.93 | 8.8 | 90.2 |
| 19 | 0.32 | " | " | 122 | 71.1 | 0.06 | " | " | " | 0.09 | 1743 | 0.08 | 367 | 1.16 | 90.74 | 8.4 | 106.0 |

* Comparative, not an example of the invention

1. standard $cm^3$/min
2. [N-(2,6-di(1-methylethyl)phenyl)amido)(2-isopropylphenyl)(α-naphthalen-2-diyl(6-pyridin-2-diyl)methane)]hafnium dimethyl
3. his-(1-(2-methylcyclohexyl)ethyl)(2-oxoyl-3,5-di(t-butyl)phenyl)immino) zirconium dibenzyl
4. molar ratio in reactor
5. polymer production rate
6. percent ethylene conversion in reactor
7. efficiency, kg polymer/g M where g M = g Hf + g Zr

**Table 3 Properties of exemplary polymers**

| Ex. | Density ($g/cm^3$) | $I_2$ | $I_{10}$ | $I_{10}/I_2$ | Mw (g/mol) | Mn (g/mol) | Mw/Mn | Heat of Fusion (J/g) | $T_m$ (˚C) | $T_c$ (˚C) | $T_{CRYSTAF}$ (˚C) | Tm-$T_{CRYSTAF}$ (˚C) | CRYSTAF Peak Arca (percent) |
|---|---|---|---|---|---|---|---|---|---|---|---|---|---|
| D* | 0.8627 | 1.5 | 10.0 | 6.5 | 110,000 | 55,800 | 2.0 | 32 | 37 | 45 | 30 | 7 | 99 |
| E* | 0.9378 | 7.0 | 39.0 | 5.6 | 65,000 | 33,300 | 2.0 | 183 | 124 | 113 | 79 | 45 | 95 |
| F* | 0.8895 | 0.9 | 12.5 | 13.4 | 137.300 | 9,980 | 13.8 | 90 | 125 | 111 | 78 | 47 | 20 |
| 5 | 0.8786 | 1.5 | 9.8 | 6.7 | 104.600 | 53.200 | 2.0 | 55 | 120 | 101 | 48 | 72 | 60 |
| 6 | 0.8785 | 1.1 | 7.5 | 6.5 | 109600 | 53300 | 2.1 | 55 | 115 | 94 | 44 | 71 | 63 |
| 7 | 0.8825 | 1.0 | 7.2 | 7.1 | 118,500 | 53,100 | 2.2 | 69 | 121 | 103 | 49 | 72 | 29 |
| 8 | 0.8828 | 0.9 | 6.8 | 7.7 | 129,000 | 40,100 | 3.2 | 68 | 124 | 106 | 80 | 43 | 13 |
| 9 | 0.8836 | 1.1 | 9.7 | 9.1 | 129600 | 28700 | 4.5 | 74 | 125 | 109 | 81 | 44 | 16 |
| 10 | 0.8784 | 1.2 | 7.5 | 6.5 | 113,100 | 58,200 | 1.9 | 54 | 116 | 92 | 41 | 75 | 52 |
| 11 | 0.8818 | 9.1 | 59.2 | 6.5 | 66,200 | 36,500 | 1.8 | 63 | 114 | 93 | 40 | 74 | 25 |
| 12 | 0.8700 | 2.1 | 13.2 | 6.4 | 101,500 | 55,100 | 1.8 | 40 | 113 | 80 | 30 | 83 | 91 |
| 13 | 0.8718 | 0.7 | 4.4 | 6.5 | 132,100 | 63,600 | 2.1 | 42 | 114 | 80 | 30 | 81 | 8 |
| 14 | 0.9116 | 2.6 | 15.6 | 6.0 | 81,900 | 43,600 | 1.9 | 123 | 121 | 106 | 73 | 48 | 92 |
| 15 | 0.8719 | 6.0 | 41.6 | 6.9 | 79,900 | 40,100 | 2.0 | 33 | 114 | 91 | 32 | 82 | 10 |
| 16 | 0.8758 | 0.5 | 3.4 | 7.1 | 148,500 | 74,900 | 2.0 | 43 | 117 | 96 | 48 | 69 | 65 |
| 17 | 0.8757 | 1.7 | 11.3 | 6.8 | 107,500 | 54,000 | 2.0 | 43 | 116 | 96 | 43 | 73 | 57 |
| 18 | 0.9192 | 4.1 | 24.9 | 6.1 | 72,000 | 37,900 | 1.9 | 136 | 120 | 106 | 70 | 50 | 94 |
| 19 | 0.9344 | 3.4 | 20.3 | 6.0 | 76,800 | 39,400 | 1.9 | 169 | 125 | 112 | 80 | 45 | 88 |

The resulting polymers are tested by DSC and ATREF as with previous examples. Results are as follows:

The DSC curve for the polymer of example 5 shows a peak with a 119.6 ˚C melting point (Tm) with a heat of fusion of 60.0 J/g. The corresponding CRYSTAF curve shows the tallest peak at 47.6˚C with a peak area of 59.5 percent. The delta between the DSC Tm and the Tcrystaf is 72.0˚C.

The DSC curve for the polymer of example 6 shows a peak with a 115.2 ˚C melting point (Tm) with a heat of fusion of 60.4 J/g. The corresponding CRYSTAF curve shows the tallest peak at 44.2˚C with a peak area of 62.7 percent. The delta between the DSC Tm and the Tcrystaf is 71.0˚C.

The DSC curve for the polymer of example 7 shows a peak with a 121.3 ˚C melting point with a heat of fusion of 69.1 J/g. The corresponding CRYSTAF curve shows the tallest peak at 49.2˚C with a peak area of 29.4 percent. The delta between the DSC Tm and the Tcrystaf is 72.1˚C.

The DSC curve for the polymer of example 8 shows a peak with a 123.5 ˚C melting point (Tm) with a heat of fusion of 67.9 J/g. The corresponding CRYSTAF curve shows the tallest peak at 80.1˚C. with a peak area of 12.7 percent. The delta between the DSC Tm and the Tcrystaf is 43.4˚C.

The DSC curve for the polymer of example 9 shows a peak with a 124.6 ˚C melting point (Tm) with a heat of fusion of 73.5 J/g. The corresponding CRYSTAF curve shows the tallest peak at 80.8˚C with a peak area of 16.0 percent. The delta between the DSC Tm and the Tcrystaf is 43.8˚C.

The DSC curve for the polymer of example 10 shows a peak with a 115.6 ˚C melting point (Tm) with a heat of fusion of 60.7 J/g. The corresponding CRYSTAF curve shows the tallest peak at 40.9˚C with a peak area of 52.4 percent. The delta between the DSC Tm and the Tcrystaf is 74.7˚C.

The DSC curve for the polymer of example 11 shows a peak with a 113.6 ˚C melting point (Tm) with a heat of fusion of 70.4 J/g. The corresponding CRYSTAF curve shows the tallest peak at 39.6˚C with a peak area of 25.2 percent. The delta between the DSC Tm and the Tcrystaf is 74.1 ˚C.

The DSC curve for the polymer of example 12 shows a peak with a 113.2 ˚C melting point (Tm) with a heat of fusion of 48.9 J/g. The corresponding CRYSTAF curve shows no peak equal to or above 30 ˚C. (Tcrystaf for purposes of further calculation is therefore set at 30˚C). The delta between the DSC Tm and the Tcrystaf is 83.2˚C.

The DSC curve for the polymer of example 13 shows a peak with a 114.4 ˚C melting point (Tm) with a heat of fusion off 49.4 J/g. The corresponding CRYSTAF curve shows the tallest peak at 33.8 ˚C with a peak area of 7.7 percent. The delta between, the DSC Tm and the Tcrystaf is 84.4˚C.

The DSC for the polymer of example 14 shows a peak with a 120.8 ˚C melting point (Tm) with a heat of fusion of 127.9 J/g. The corresponding CRYSTAF curve shows the tallest peak at 72.9 ˚C with a peak area of 92.2 percent. The delta between the DSC Tm and the Tcrystaf is 47.9˚C.

The DSC curve for the polymer of example. 15 shows a peak with a 114.3 ˚C melting point (Tm) with a heat of fusion of 36.2 J/g. The corresponding CRYSTAF curve shows the tallest peak at 32.3 ˚C with a peak area of 9.8 percent. The delta between the DSC Tm and the Tcrystaf is 82.0˚C.

The DSC curve for the polymer of example 16 shows a peak with a 116.6 ˚C melting point (Tm) with a heat of fusion of 44.9 J/g. The corresponding CRYSTAF curve shows the tallest peak at 48.0 ˚C with a peak area of 65.0 percent. The delta between the DSC Tm and the Tcrystaf is 68.6˚C.

The DSC curve for the polymer of example 17 shows a peak with a 116.0 ˚C melting point (Tm) with a heat of fusion of 47.0 J/g. The corresponding CRYSTAF curve shows me tallest peak at 43.1 ˚C with a peak area of 56.8 percent. The delta between the DSC Tm and the Tcrystaf is 72.9˚C.

The DSC curve for the polymer of example 18 shows a peak with a 120.5 ˚C' melting point (Tm) with a heat of fusion of 141.8 J/g. The corresponding CRYSTAF curve shows the tallest peak at 70.0 ˚C with a peak area of 94.0 percent. The delta between the DSC Tm and the Tcrystaf is 50.5 ˚C.

The DSC curve for the polymer of example 19 shows a peak with a 124.8 ˚C melting point (Tm) with a heat of fusion of 174.8 J/g. The corresponding CRYSTAF curve shows the tallest peak at 79.9 ˚C with a peak area of 87.9 percent. The delta between the DSC Tm and the Tcrystaf is 45.0 ˚C.

The DSC curve for the polymer of comparative D shows a peak with a 37.3˚C melting point (Tm) with a heat of fusion of 31.6 J/g. The corresponding CRYSTAF curve shows no peak equal to and above 30˚C. Both of these values are consistent with a resin that is low in density. The delta between the DSC Tm and the Tcrystaf is 7.3˚C.

The DSC curve for the polymer of comparative E shows a peak with a 124.0 ˚C meting point (Tm) with a heat of fusion of 179.3 J/g. The corresponding CRYSTAF curve shows the tallest peak at 79.3˚C with a peak area of 94.6 percent. Both of these values are consistent with a resin that is high in density. The delta between the DSC Tm and the Tcrystaf is 44.6˚C.

The DSC curve for the polymer of comparative F shows a peak with a 124.8 ˚C melting point (Tm) with a heat of fusion of 90.4 J/g. The corresponding CRYSTAF curve shows the tallest peak at 77.6˚C with a peak area of 19.5 percent. The separation between the two peaks is consistent with the presence of both a high crystalline and a low crystalline polymer. The delta between the DSC Tm and the Tcrystaf is 47.2˚C.

## Physical Property Testing

Polymer samples are evaluated for physical properties such as high temperature resistance properties, as evidenced by TMA temperature testing, pellet blocking strength, high temperature recovery, high temperature compression set and storage modulus ratio, G'(25˚C)/G'(100˚C). Several commercially available polymers are included in the tests: Comparative G* is a substantially linear ethylene/1-octene copolymer (AFFINITY®, available from The Dow Chemical Company), Comparative H* is an elastomeric, substantially linear ethylene/ 1-octene copolymer (AFFINITY®EG8100, available from The Dow Chemical Company), Comparative I is a substantially linear ethylene/1-octene copolymer (AFFINITY®PL1840, available from The Dow Chemical Company), Comparative J is a hydrogenated styrene/ butadiene/styrene triblock copolymer (KRATON™ G1652. available from KRATON Polymers), Comparative K is a thermoplastic vulcanizate (TPV, a polyolefin blend containing dispersed therein a crosslinked elastomer). Results are presented in Table 4.

Table 4 High Temperature Mechanical Properties

| Ex. | TMA-1mm penetration (˚C) | Pellet Blocking Strength lb/ft$^2$ (kPa) | G'(25˚C)/ G'(100˚C) | 300 % Strain Recovery (80˚C) (percent) | Compression Set (70˚C) (percent) |
|---|---|---|---|---|---|
| D* | 51 | - | 9 | Failed | - |
| E* | 130 | - | 18 | - | - |
| F* | 70 | 141 (6.8) | 9 | Failed | 100 |
| 5 | 104 | 0(0) | 6 | 81 | 49 |
| 6 | 110 | - | 5 | - | 52 |
| 7 | 113 | - | 4 | 84 | 43 |
| 8 | 111 | - | 4 | Failed | 41 |
| 9 | 97 | - | 4 | - | 66 |
| 10 | 108 | - | 5 | 81 | 55 |
| 11 | 100 | - | 8 | - | 68 |
| 12 | 88 | - | 8 | - | 79 |
| 13 | 95 | - | 6 | 84 | 71 |
| 14 | 125 | - | 7 | - | - |
| 15 | 96 | - | 5 | - | 58 |
| 16 | 113 | - | 4 | - | 42 |
| 17 | 108 | 0(0) | 4 | 82 | 47 |
| 18 | 125 | - | 10 | - | - |
| 19 | 133 | - | 9 | - | - |
| G* | 75 | 463 (22.2) | 89 | Failed | 100 |
| H* | 70 | 213 (10.2) | 29 | Failed | 100 |
| I* | 111 | - | 11 | - | - |
| J* | 107 | - | 5 | Failed | 100 |
| K* | 152 | - | 3 | - | 40 |

In Table 4, Comparative F (which is a physical blend of the two polymers resulting from simultaneous polymerizations using catalyst A1 and B1) has a 1 mm penetration temperature of about 70˚C, while Examples 5-9 halve a 1 mm penetration temperature of 100˚C or greater. Further, examples 10-19 all have a 1 mm penetration temperature of greater than 85˚C, with most having 1 mm TMA temperature of greater than 90˚C or even greater than 100˚C. This shows that the novel polymers have better dimensional stability at higher temperatures compared to a physical blend. Comparative J (a commercial SEBS) has a good 1 mm TMA temperature of about 107˚C. but it has very poor (high

temperature 70˚C) compression set of about 100 percent and it also failed to recover (sample broke) during a high temperature (80˚C) 300 percent strain recovery. Thus the exemplified polymers have a unique combination of properties unavailable even in some commercially available, high performance thermoplastic elastomers.

Similarly, Table 4 shows a low (good) storage modulus ratio, G'(25˚C)/G'(100˚C), for the inventive polymers of 6 or less, whereas a physical blend (Comparative F) has a storage modulus ratio of 9 and a random ethylcne/octenc copolymer (Comparative G) of similar density has a storage modulus ratio an order of magnitude greater (89). It is desirable that the storage modulus ratio of a polymer be as close to 1 as possible. Such polymers will be relatively unaffected by temperature, and fabricated articles made from such polymers can be usefully employed over a broad temperature range. This feature of low storage modulus ratio and temperature independence is particularly useful in elastomer applications such as in pressure sensitive adhesive formulations.

The data in Table 4 also demonstrate that the polymers of the invention possess improved pellet blocking strength. In particular, Example 5 has a pellet blocking strength of 0 MPa, meaning it is free flowing under the conditions tested, compared to Comparatives F and G which show considerable blocking. Blocking strength is important since bulk shipment of polymers having large blocking strengths can result in product clumping or sticking together upon storage or shipping, resulting in poor handling properties.

High temperature (70˚C) compression set for the inventive polymers is generally good, meaning generally less than about 80 percent, preferably less than about 70 percent and especially less than about 60 percent. In contrast, Comparatives F, G, H and J all have a 70˚C compression set of 100 percent (the maximum possible value, indicating no recovery). Good high temperature compression set (low numerical values) is especially needed for applications such as gaskets, window profiles, o-rings, and the like.

**Table 5 Ambient Temperature Mechanical Properties**

| Ex | Flex Modul as (MPa) | Tensile Modulus (MPa) | Tensile Strength (MPa)[1] | Elongation at Break[1] (%) | Tensile Strength (MPa) | Elongation at Break (%) | Abrasion: Volume Loss ($mm^2$) | Tensile Notched Tear Strength (m3) | 100 % Strain Recovery 21°C (percent) | 300 % Strain Recovery 21°C (percent) | Retractive Stress at 150 % Strain (kPa) | Compression Set 21°C (Percent) | Stress Relaxation at 50 % Strain |
|---|---|---|---|---|---|---|---|---|---|---|---|---|---|
| D* | 12 | 5 | - | - | 10 | 1074 | - | - | 91 | 83 | 760 | - | - |
| E* | 895 | 589 | - | - | 31 | 1029 | - | - | - | - | - | - | - |
| F* | 57 | 46 | - | - | 12 | 824 | 93 | 339 | 78 | 65 | 400 | 42 | - |
| 5 | 30 | 24 | 14 | 951 | 16 | 1116 | 48 | - | 87 | 74 | 790 | 14 | 33 |
| 6 | 33 | 29 | - | - | 14 | 938 | - | - | - | 75 | 861 | 13 | - |
| 7 | 44 | 37 | 15 | 846 | 14 | 854 | 39 | - | 82 | 73 | 810 | 20 | - |
| 8 | 41 | 35 | 13 | 785 | 14 | 810 | 45 | 461 | 82 | 74 | 760 | 22 | - |
| 9 | 43 | 38 | - | - | 12 | 823 | - | - | - | - | - | 25 | - |
| 10 | 23 | 23 | - | - | 14 | 902 | - | - | 86 | 75 | 860 | 12 | - |
| 11 | 30 | 26 | - | - | 16 | 1090 | - | 976 | 89 | 66 | 510 | 14 30 | |
| 12 | 20 | 17 | 12 | 961 | 13 | 931 | - | 1247 | 91 | 75 | 700 | 17 | - |
| 13 | 16 | 14 | - | - | 13 | 814 | - | 691 | 91 | - | - | 21 - | |
| 14 | 212 | 160 | - | - 29 | | 857 | - | - | - | - | - | - | - |
| 15 | 18 | 14 | 12 | 1127 | 10 | 1573 | - | 2074 | 89 | 83 | 770 | 14 | - |
| 16 | 23 | 20 | - | - | 12 | 68 | - | - | 88 | 83 | 1040 | 13 | - |
| 17 | 20 | 18 | - | - | 13 | 1252 | - | 1274 | 13 | 83 | 920 | 4 | - |
| 18 | 323 | 239 | | - | 30 | 808 | - | - | - | - | - | - | - |
| 19 | 706 | 483 | - | - | 36 | 871 | - | - | - | - | - | - | - |

(continued)

| Ex | Flex Modul as (MPa) | Tensile Modulus (MPa) | Tensile Strength (MPa)[1] | Elongation at Break[1] (%) | Tensile Strength (MPa) | Elongation at Break (%) | Abrasion: Volume Loss ($mm^2$) | Tensile Notched Tear Strength (m3) | 100 % Strain Recovery 21°C (percent) | 300 % Strain Recovery 21°C (percent) | Retractive Stress at 150 % Strain (kPa) | Compression Set 21°C (Percent) | Stress Relaxation at 50 % Strain |
|---|---|---|---|---|---|---|---|---|---|---|---|---|---|
| G* | 15 | 15 | - | - | 17 | 1000 | - | 746 | 86 | 53 | 110 | 27 50 | |
| H* | 16 | 15 | - | - | 15 | 829 | - | 569 | 87 | 60 | 380 | | 23 - |
| I* | 210 | 147 | - | - | 29 | 697 | - | - | - | - | - | - | - |
| J* | - | - | - | - | 32 | 609 | - | - | 93 | 96 | 1900 | 25 | - |
| K* | - | - | - | - | | - | - | - | - | - | - | 30 | - |

[1] Tested at 51 cm/minute
[2] measured at 38°C for 12 hours

Table 5 shows results for mechanical properties for the polymers as well as for various comparison polymers at ambient temperatures, It may be seen that the inventive polymers have very good abrasion resistance when tested according to ISO 46499 generally showing a volume loss of less than about 90 mum preferably less than about 80 $mm^3$, and especially less than about 50 $mm^3$. In this test, higher numbers indicate higher volume loss and consequently tower abrasion resistance.

Tear strength as measured by tensile notched tear strength of the inventive polymers is generally 1000 mJ or higher, as shown in Table 5. Tear strength tor the inventive polymers can be as high as 3000 mJ, or even as high as 5000 mJ. Comparative polymers generally have tear strengths no higher than 750 mJ.

Table 5 also shows that the polymers of the invention have better retractive stress at 150 percent strain (demonstrated by higher retractive stress values) than some of the comparative samples. Comparative Examples F, G and H have retractive stress value at 150 percent strain of 400 kPa or less, while the inventive polymers have retroactive stress values at 150 percent strain of 500 kPa (Ex. 11) to as high as about 1100 kPa (Ex. 17). Polymers having higher than 150 percent retractive stress values would be quite useful for elastic applications, such as elastic fibers and fabrics, especially nonwoven fabrics. Other applications include diaper, hygiene, and medical garment waistband applications, such as tabs and elastic hands.

Table 5 also shows that stress relaxation (at 50 percent strain) is also improved (less) for the inventive polymers as compared to, for example, Comparative G. Lower stress relaxation means that the polymer retains its force better in applications such as diapers and other garments where retention of elastic properties over long time periods at body temperatures is desired.

<u>Optical Testing</u>

Table 6 Polymer Optical Properties

| Ex. | Internal Haze (percent) | Clarity (percent) | 45° Gloss (percent) |
|---|---|---|---|
| F* | 84 | 22 | 49 |
| G* | 5 | 73 | 56 |
| 5 | 13 | 72 | 60 |
| 6 | 33 | 69 | 53 |
| 7 | 28 | 57 | 59 |
| 8 | 20 | 65 | 62 |
| 9 | 61 | 38 | 49 |
| 10 | 15 | 73 | 67 |
| 11 | 13 | 69 | 67 |
| 12 | 8 | 75 | 72 |
| 13 | 7 | 74 | 69 |
| 14 | 59 | 15 | 62 |
| 15 | 11 | 74 | 66 |
| 16 | 39 | 70 | 65 |
| 17 | 29 | 73 | 66 |
| 18 | 61 | 22 | 60 |
| 19 | 74 | 11 | 52 |
| G* | 5 | 73 | 56 |
| H* | 12 | 76 | 59 |
| I* | 20 | 75 | 59 |

The optical properties reported in Table 6 are based on compression molded films substantially lacking in

orientation. Optical properties of the polymers may be varied over wide ranges, due to variation in crystallite size, resulting from variation in the quantity of chain shuttling agent employed in the polymerization.

**Extractions of Multi-Block Copolymers**

Extraction studies of the polymers of examples 5, 7 and Comparative E are conducted. In the experiments, the polymer sample is weighed into a glass fritted extraction thimble and fitted into a Kumagawa type extractor. The extractor with sample is purged with nitrogen, and a 500mL round bottom flask is charged with 350 mL of diethyl ether. The flask is then fitted to the extractor. The ether is heated while being stirred. Time is noted when the ether begins to condense into the thimble, and the extraction is allowed to proceed under nitrogen for 24 hours. At this time, heating is stopped and the solution is allowed to cool. Any ether remaining in the extractor is returned to the flask. The ether in the flask is evaporated under vacuum at ambient temperature, and the resulting solids are purged dry with nitrogen. Any residue is transferred to a weighed bottle using successive washes of hexane. The combined hexane washes are then evaporated with another nitrogen purge, and the residue dried under vacuum overnight at 40˚C. Any remaining ether in the extractor is purged dry with nitrogen.

A second clean round bottom flask charged with 350 mL of hexane is then connected to the extractor. The hexane is heated to reflux with stirring and maintained at reflux for 24 hours after hexane is first noticed condensing into the thimble. Heating is then stopped and the flask is allowed to cool. Any hexane remaining in the extractor is transferred back to the flask. The hexane is removed by evaporation under vacuum at ambient temperature, and any residue remaining in the flask is transferred to a weighed bottle using successive hexane washes. The hexane in the flask is evaporated by a nitrogen purge, and the residue is vacuum dried overnight at 40˚C.

The polymer sample remaining in the thimble after the extractions is transferred from the thimble to a weighed bottle and vacuum dried overnight at 40˚C. Results are contained in Table 7.

Table 7

| Sample | wt. (g) | ether soluble (g) | ether soluble (percent) | $C_8$ mole percent[1] | hexane soluble (g) | hexane soluble (percent) | $C_8$ mole percent[1] | residue Connote percent[1] |
|---|---|---|---|---|---|---|---|---|
| Comp. E* | 1.097 | 0.063 | 5.69 | 12.2 | 0.245 | 22.35 | 13.6 | 6.5 |
| Ex. | 1.006 | 0.041 | 4.08 | - | 0.040 | 3.98 | 14.2 | 11.6 |
| Ex. 7 | 1.092 | 0.017 | 1.59 | 13.3 | 0.012 | 1.10 | 11.7 | 9.9 |
| [1] Determined by $^{13}C$ NMR | | | | | | | | |

**Additional Polymer Examples 19 A-J, Continuous Solution Polymerization, Catalyst A1/B2 + DEZ**

For Examples 19A-I

Continuous solution polymerizations are carried out in a computer controlled well-mixed reactor. Purified mixed alkanes solvent (Isopar™ E available from Exxon Mobil. Inc.), ethylene, 1-octene, and hydrogen (where used) are combined and fed to a 27 gallon reactor. The feeds to the reactor are measured by mass-flow controllers. The temperature of the feed stream is controlled by use of a glycol cooled heat exchanger before entering the reactor. The catalyst component solutions are metered using pumps and mass flow meters. The reactor is run liquid-full at approximately 550 psig pressure. Upon exiting the reactor, water and additive are injected in the polymer solution. The water hydrolyzes the catalysts, and terminates the polymerization reactions. The post reactor solution is then healed in preparation for a two-stage devolatization. The solvent and unreacted monomers are removed during the devolatization process. The polymer melt is pumped to a die for underwater pellet cutting.

For Example 19J

Continuous solution polymerizations are carried out in a computer controlled autoclave reactor equipped with an internal stirrer. Purified mixed alkanes solvent (Isopar™ E available from ExxonMobil Chemical Company), ethylene at 2.70 1hs/hour (1.22 kg/hour), 1-octene, and hydrogen (where used) are supplied to a 3.8 L reactor equipped with a jacket for temperature control and an internal thermocouple. The solvent feed to the reactor is measured by a mass-tlow controller. A variable speed diaphragm pump controls the solvent flow rate and pressure to the reactor. At the discharge of the pump, a side stream is taken to provide flush flows for the catalyst and cocatalyst injection lines and

the reactor agitator. These flows are measured by Micro-Motion mass flow meters and controlled by control valves or by the manual adjustment of needle valves. The remaining solvent is combined with 1-octene, ethylene, and hydrogen (where used) and fed to the reactor. A mass flow controller is used to deliver hydrogen to the reactor as needed. The temperature of the solvent/monomer solution is controlled by use of a heat exchanger before entering the reactor. This stream enters the bottom of the reactor. The catalyst component solutions are metered using pumps and mass flow meters and are combined with the catalyst flush solvent and introduced into the bottom of the reactor. The reactor is run liquid-full at 500 psig (3.45 MPa) with vigorous stirring. Product is removed through exit lines at the top of the reactor. All exit lines firm the reactor are steam traced and insulated. Polymerization is stopped by the addition of a small amount of water into the exit line along with any stabilizers or other additives and passing the mixture through a static mixer. The product stream is then heated by passing through a heat exchanger before devolatilization. The polymer product is recovered by extrusion using a devolatilizing extruder and water cooled pelletizer.

Process details and results are contained in Table 8. Selected polymer properties are provided in Tables 9A-C.

In Table 9B. inventive examples 19F and 19G show low immediate set of around 65 70 % strain after 500% elongation.

**Table 8 Polymerization Conditions**

| Ex. | $C_2H_4$ lb/hr | $C_8H_{16}$ lb/hr | Solv. lb/hr | $H_2$ sccm[1] | T ˚C | Cat A1[2] Conc. ppm | Cat A1 Flow lb/hr | CatB2[3] Conc. ppm | Cat B2 Flow lb/hr | DEZ Conc wt% | DEZ Flow lb/hr | Cocat 1 Conc. ppm | Cocat 1 Flow lb/hr | Cocat 2 Conc. ppm | Cocat 2 Flow lb/hr | Zn[4] in polymer ppm | Poly Rate[5] lb/hr | Conv wt% | Polymer wt% |
|---|---|---|---|---|---|---|---|---|---|---|---|---|---|---|---|---|---|---|---|
| 19A | 55 29 | 32.03 | 323.03 | 101 | 120 | 600 | 0.25 | 200 | 0.42 | 3.0 | 0.70 | 4500 | 0.65 | 525 | 0.33 | 248 | 83.94 | 88.0 | 17.78 |
| 19B | 53 95 | 28.96 | 325.3 | 577 | 120 | 600 | 0.25 | 200 | 0.55 | 3.0 | 0.24 | 4500 | 0.63 | 525 | 0.11 | 90 | 80.72 | 88.1 | 17.2 |
| 19C | 55 53 | 30.97 | 324.37 | 550 | 120 | 600 | 0.216 | 200 | 0.609 | 3.0 | 0.69 | 4500 | 0.61 | 525 | 0.33 | 246 | 84.13 | 88.9 | 17.16 |
| 19D | 54.83 | 30.58 | 326.33 | 60 | 120 | 600 | 0.22 | 200 | 0.63 | 3.0 | 1.39 | 4500 | 0.66 | 525 | 0.66 | 491 | 82.5 | 88.1 | 17.07 |
| 191E | 54.95 | 31.73 | 326.75 | 251 | 120 | 600 | 0.21 | 200 | 0.61 | 3.0 | 1.04 | 4500 | 0.64 | 525 | 0.49 | 368 | 84.11 | 88.4 | 17.43 |
| 19F | 50.43 | 34.80 | 330.33 | 124 | 120 | 600 | 0.20 | 200 | 0.60 | 3.0 | 0.74 | 4500 | 0.52 | 525 | 0.35 | 257 | 85.31 | 87.4 | 17.09 |
| 19G | 50.25 | 33.08 | 325.61 | 188 | 120 | 600 | 0.19 | 200 | 0.59 | 3.0 | 0.54 | 4500 | 0.51 | 525 | 0.16 | 194 | 83.72 | 87.5 | 17.34 |
| 19H | 50.15 | 34.87 | 318.17 | 58 | 120 | 600 | 6.21 | 200 | 0.66 | 3.0 | 0.70 | 4500 | 0.52 | 525 | 0,70 | 259 | 83.21 | 88.0 | 17.46 |
| 19I | 55.02 | 34.02 | 323.59 | 53 | 120 | 600 | 0.44 | 200 | 0.74 | 3.0 | 1.72 | 4500 | 0.70 | 525 | 1.65 | 600 | 86.63 | 88.0 | 17.6 |
| 19J | 7.46 | 9.04 | 50.6 | 47 | 120 | 150 | 0.22 | 76.7 | 0.36 | 0.5 | 0.19 | - | - | - | - | - | | - | - |

[1] standard $cm^3$/min
[2] [N-(2,6-di(1-methylethyl)phenyl)amido)(2-isopropylphenyl)(α-naphthalen-2-diyl(6-pyridin-2-diyl)methane)]hafnium dimethyl
[3] bis-(1-(2-methyleyclohexyl)ethyl)(2-oxoyl-3,5--di(t-bury)phenyl)immino)zirconium dimethyl
[4] ppm in final product calculated by mass balance
[5] polymer production rate
[6] weight percent ethylene conversion in reactor
[7] efficiency kg polymer/g M where g M =g Hf + g Z

**Table 9A Polymer Physical Properties**

| Ex. | Density (g/cc) | 12 | 110 | 110/12 | Mw (g/mol) | Mn (g/mol) | Mw/Mn | Heat of Fusion (J/g) | Tm (˚C) | Tc (˚C) | TCRYSTAF (˚C) | Tm-TCRYSTAF (˚C) | CRYSTAF Peak Area (wt%) |
|---|---|---|---|---|---|---|---|---|---|---|---|---|---|
| 19A | 0.8781 | 0.9 | 6.4 | 6.9 | 123700 | 61000 | 2,0 | 56 | 119 | 97 | 46 | 73 | 40 |
| 19B | 0.8749 | 0.9 | 7.3 | 7.8 | 133000 | 44300 | 3.0 | 52 | 122 | 100 | 30 | 92 | 76 |
| 19C | 0.8753 | 5.6 | 38.5 | 6.9 | 81700 | 37300 | 2.2 | 46 | 122 | 100 | 30 | 92 | 8 |
| 19D | 0.8770 | 4.7 | 31.5 | 6.7 | 80700 | 39700 | 2.0 | 52 | 119 | 97 | 48 | 72 | 5 |
| 19E | 0.8750 | 4.9 | 33.5 | 6.8 | 81800 | 41700 | 2.0 | 49 | 121 | 97 | 36 | 84 | 12 |
| 19F | 0.8652 | 1.1 | 7.5 | 6.8 | 124900 | 60700 | 2.1 | 27 | 119 | 88 | | 30 89 | 89 |
| 19G | 0.8649 | 0.9 | 6.4 | 7.1 | 135000 | 64800 | 2.1 | 26 | 120 | 92 | 30 | 90 | 90 |
| 19H | 0.8654 | 1.0 | 7.0 | 7.1 | 131600 | 66900 | 2.0 | 26 | 118 | 88 | - | - | - |
| 19I | 0.8774 | 11.2 | 75.2 | 6.7 | 66400 | 33700 | 2.0 | 49 | 119 | 99 | 40 | 79 | 13 |
| 19J | 0.8995 | 5.6 | 39.4 | 7.0 | 75500 | 29900 | 2.5 | 101 | 122 | 106 | - | - | - |

**Table 9B Polymer physical Properties of Compression Molded Film**

| Example | Density (g/cm$^3$) | Melt Index (g/ 10 min) | immediate Set after 100% Strain (%) | Immediate Set after 300% Strain (%) | Immediate Set after 500% Strain (%) | Recovery after 100% (%) | Recovery after 300% (%) | Recovery after 500% (%) |
|---|---|---|---|---|---|---|---|---|
| 19A | 0.878 | 0.9 | 15 | 63 | 131 | 85 | 79 | 74 |
| 19B | 0.877 | 0.88 | 14 | 49 | 97 | 86 | 84 | 81 |
| 19F | 0.865 | 1 | - | - | 70 | - | 87 | 86 |
| 19G | 0.865 | 0.9 | - | - | 66 | - | - | 87 |
| 19H | 0.865 | 0.92 | - | 39 | - | - | 87 | - |

**Table 9C Average Block Index For exemplary polymers[1]**

| Example | $Zn/C_2$[2] | Average B1 |
|---|---|---|
| Polymer F | 0 | 0 |
| Polymer 8 | 0.56 | 0.59 |
| Polymer 19a | 1.3 | 0.62 |
| Polymer 5 | 2.4 | 0.52 |
| Polymer 19b | 0.56 | 0.54 |
| Polymer 19h | 3.15 | 0.59 |

1. Additional information regarding the calculation of the block indices for various polymers is disclosed in U.S, Patent Application Serial No. 11/376,835. entitled "Ethylene/α-Olefin Block Interpolymers", filed on March 15, 2006. in the name of Colin I.P. Shan, Lonnie Hazlitt, et. al. and assigned to Dow Global Technologies Inc., the disclose of which is incorporated by reference herein in its entirety.
2. $Zn/C_2$ *1000-(Zn feed flow*Zn concentralion/1000000/Mw of Zn)/(Total Ethylene feed flow*(1-fractional ethylene conversion rate)/Mw of Ethylene)*1000. Please note that "$Zn/C_2^4$ 1000" refers to the amount of zinc in diethyl zinc ("DEZ") used in the polymerization process, and "$C^2$" refers to the amount of ethylene used in the polymerization

**Examples 20 and 21**

The ethylene/α-olefin interpolymer of Examples 20 and 21 were made in a substantially similar manner as Examples 19A-1 above with the polymerization conditions shown in Table 11 below. The polymers exhibited the properties shown in Table 10. Table 10 also shows any additives to the polymer.

**Table 10 - Properties and Additives of Examples 20-21**

| | **Example 20** | **Example 21** |
|---|---|---|
| **Density (g/cc)** | 0.8800 | 0.8800 |
| **MI** | 1.3 | 1.3 |
| **Additives** | DI Water 100<br>Irgafos 168 1000<br>Irganox 1076 250<br>Irganox 1010 200<br>Chimmasorb | DI Water 75<br>Irgafos 168 1000<br>Irganox 1076 250<br>Irganox 1010 200<br>Chimmasorb |

(continued)

| | Example 20 | | Example 21 | |
|---|---|---|---|---|
| | 2020 | 100 | 2020 | 100 |
| **Hard segment split (wt%)** | 35% | | 35% | |

Irganox 1010 is Tetrakismethylene(3,5-di-t-butyl-4-hydroxyhydrocinnamate)methane. Irganox 1076 is Octadecyl-3-(3'.5'-di-t-butyl-4'-hydroxyphenyl)propionate. Irgafos 168 is Tris(2,4-di-t-butylphenyl)phosphite. Chimasorb 2020 is 1.6-Hexanediamine, N,N'-bis(2,2,6,6-tetramethyl-4-piperidinyl)-polymer with 2.3.6-trichloro-1,3,5-triazine, reaction products with, N-butyl-1-butanamine and N-butyl-2,2,6,6-tetramethyl-4-piperidinamine.

**Table 11 - Polymerization Conditions for Examples 20-21**

| Ex. | $C_2H_3$ lb/hr | $C_3H_{16}$ lb/hr | Solv. lb/hr | $H_2$ sccm | T ˚C | Cat Al[2] Conc. ppm | Cat Al Flow lb/hr | Cat B2[3] Conc. ppm | Cat B2 Flow lb/hr | DEZ Cone wt% | DEZ Flow lb/hr | Cocat 1 Conc. ppm | Cocat 1 Flow lb/hr | Cocat 2 Conc. ppm | 2 Flow lb/hr | Cocat Zn[f] in polymer ppm | Poly Rate lb/hr | Conv[6] wt% | Polymer wt% | Eff.[2] |
|---|---|---|---|---|---|---|---|---|---|---|---|---|---|---|---|---|---|---|---|---|
| 20 | 190.7 | 196.17 | 712.68 | 1767 | 120 | 199.98 | 1.06 | 298.89 | 0.57 | 4.809423 | 0.48 | 5634.36 | 1.24 | 402.45 | 0.478 | 131 | 177 | 89.25 | 16.94 | 252.01 |
| 21 | 132.13 | 199.22 | 708.23 | 1572 | 120 | 462.4 | 1.71 | 298.89 | 0.6 | 4.999847 | 0.47 | 5706.4 | 1.61 | 289.14 | 1.36 | 129 | 183 | 89.23 | 17.52 | 188.11 |

* Comparative, not an example of the invention
1 standard cm$^2$mm
2 [N-(2,6-di(1-methylethyl)phenylamido)(2-isopropylphenyl)(α-naphthalen-2-diyl(6-pyridin-2-diyl)methane)]hafnlum dimethyl
3 brs-(1-(2-methylcyclohexylethyl)(2-oxoyl-3,5-di(1-butyl)phenyl)immino) zirconium dibenzyl
4 ppm Zinc in final product calculated by mass balance
5 polymer production rate
6 weight percent ethylene conversion in reactor
7 efficiency kg polymerig M where g M = g Hf + g Z

**Fibers of the Present Invention that are Suitable for Fabrics**

The present invention relates to fibers and fabrics that are often suitable for, for example, textile articles such as shirts, pants, socks, swimsuits, etc. The fabrics may be made in any manner but typically are either woven or knit. Woven fabrics of the present invention are often characterized by a stretch of at least about about 10 percent measured according to ASTM D3107 whereas knit fabrics of the present invention are often characterized by a stretch of at least about 30 percent measured according to ASTM D2594.

The fabrics are usually comprised of one or more elastic fibers wherein the elastic fibers comprise the reaction product of at least one ethylene olefin block polymer and at least one suitable crosslinking agent. As used herein, "crosslinking agent" is any means which cross-links one or more, preferably a majority, of the fibers. Thus, crosslinking agents may be chemical compounds but are not necessarily so. Crosslinking agents as used herein also include electron-beam irradiation, beta irradiation, gamma irradiation, corona irradiation, silanes, peroxides, allyl compounds and UV radiation with or without crosslinking catalyst. U.S. Patents No. 6,803,014 and 6,667,351 disclose electron-beam irradiation methods that can be used in embodiments of the invention. Typically, enough fibers are crosslinked in an amount such that the fabric is capable of being dyed. This amount varies depending upon the specific polymer employed and the desired properties. However, in some embodiments, the percent of cross-linked polymer is at least about 5 percent, preferably at least about 10, more preferably at least about 15 weight percent to about at most 75, preferably at most 65, preferably at most about 50 percent, more preferably at most about 40 percent as measured by the weight percent of gels formed according to the method described in Example 32.

The fibers typically have a filament elongation to break greater than about 200%, preferably greater than about 210%, preferably greater than about 220%, preferably greater than about 230%, preferably greater than about 240%, preferably greater than about 250%, preferably greater than about 260%, preferably greater than about 270%, preferably greater than about 280%, and may be as high as 600% according to ASTM D2653-01 (elongation at first filament break test). The fibers of the present invention are further characterized by having (1) ratio of load at 200% elongation/load at 100% elongation of greater than or equal to about 1.5. preferably greater than or equal to about 1.6, preferably greater than or equal to about 1.7, preferably greater than or equal to about 1.8, preferably greater than or equal to about 1.9, preferably greater than or equal to about 2.0, preferably greater than or equal to about 2.1, preferably greater than or equal to about 2.2, preferably greater than or equal to about 2.3, preferably greater than or equal to about 2.4, and may be as high as 4 according to ASTM D2731-01 (under force at specified elongation in the finished fiber form).

The polyolefin may be selected from any suitable ethylene olefin block polymer. A particularly preferable olefin block polymer is an ethylene/α-olefin interpolymer, wherein the ethylene/α-olefin interpolymer has one or more of the following characteristics before crosslinking:

(1) an average brock index greater than zero and up to about 1.0 and a molecular weight distribution, Mw/Mn, greater than about 1.3; or

(2) at least one molecular fraction which elutes between 40˚C and 130˚C when fractionated using TREF, **characterized in that** the fraction has a block index of at least 0.5 and up to about 1; or

(3) an Mw/Mn from about 1.7 to about 3.5, at least one melting point, Tm, in degrees Celsius, and a density, d, in grams/cubic centimeter, wherein the numerical values of Tm and d correspond to the relationship:

$$T_m > -2002.9 + 4538.5(d) - 2422.2(d)^2;$$

or

(4) an Mw/Mn from about 1.7 to about 3.5, and is characterized by a heat of fusion, ΔH in J/g, and a delta quantity, ΔT, in degrees Celsius defined as the temperature difference between the tallest DSC peak and the tallest CRYSTAF peak, wherein the numerical values of ΔT and ΔH have the following relationships:

$\Delta T > -0.1299(\Delta H) + 62.81$ for ΔH greater than zero and up to 130 J/g,

$\Delta T \geq 48˚C$ for ΔH greater than 130 J/g,

wherein the CRYSTAF peak is determined using at least 5 percent of the cumulative polymer, and if less than 5 percent of the polymer has an identifiable CRYSTAF peak, then the CRYSTAF temperature is 30˚C; or

(5) an elastic recovery, Re, in percent at 300 percent strain and 1 cycle measured with a compression-molded film of the ethylene/α-olefin interpolymer, and has a density, d. in grams/cubic centimeter, wherein the numerical values of Re and d satisfy the following relationship when ethylene/α-olefin interpolymer is substantially free of a cross-linked phase:

$$Re > 1481 - 1629(d);$$

or

(6) a molecular fraction which elutes between 40˚C and 130˚C when fractionated using TREF, characterized in that the fraction has a molar comonomer content of at least 5 percent higher than that of a comparable random ethylene interpolymer fraction eluting between the same temperatures, wherein said comparable random ethylene interpolymer has the same comonomer(s) and has a melt index, density, and molar comonomer content (based on the whole polymer) within 10 percent of that of the ethylene/α-olefin interpolymer: or

(7) a storage modulus at 25 ˚C, G'(25 ˚C), and a storage modulus at 100 ˚C, G'(100˚C), wherein the ratio of G'(25 ˚C) to G'(100 ˚C) is in the range of about 1:1 to about 9:1.

The fibers may be made into any desirable size and cross-sectional shape depending upon the desired application. For many applications approximately round cross-section is desirable due to its reduced friction. However, other shapes such as a trilobal shape, or a flat (i.e., "ribbon" like) shape can also be employed. Denier is a textile term which is defined as the grams of the fiber per 9000 meters of that fiber's length. Preferred denier sizes depend upon the type of fabric and desired applications. Typically, knit fabrics comprise a majority of the fibers having a denier from at least about 1, preferably at least about 20, preferably at least about 50, to at most about 180, preferably at most about 150. preferably at most about 100 denier, preferably at most about 80 denier. Woven fabrics, on the other hand, may comprise a majority of the fibers having a denier that is larger than knits and can be up to 3000 denier.

Depending upon the application the fiber may take any suitable form including a staple fiber or binder fiber. Typical examples may include a homofil fiber, a bicomponent fiber, a meltblown fiber, a meltspun fiber, or a spunbond fiber. In the case of a bicomponent fiber it may have a sheath-core structure; a sea-island structure; a side-by-side structure; a matrix-fibril structure; or a segmented pie structure. Advantageously, conventional fiber forming processes may be employed to make the aforementioned fibers. Such processes include those described in, for example, U.S. Patents No. 4,340,563; 4,663,20; 4,668,566; 4,322,027; and 4,413,110).

Depending upon their composition, the fibers may be made to facilitate processing and unwind the same as or better from a spool than other fibers. Ordinary fibers when in round cross section often fail to provide satisfactory unwinding performance due to their base polymer excessive stress relaxation. This stress relaxation is proportional to the age of the spool and causes filaments located at the very surface of the spool to lose grip on the surface, becoming loose filament strands. Later, when such a spool containing conventional fibers is placed over the rolls of positive feeders, i.e. Memminger-IRO, and starts to rotate to industrial speeds, i.e. 100 to 300 rotations/minute, the loose fibers are thrown to the sides of the spool surface and ultimately fall off the edge of the spool. This failure is known as derails which denotes the tendency of conventional fibers to slip off the shoulder or edge of the package which disrupts the unwinding process and ultimately causes machine stops. The fibers described herein may exhibit derailing to the same or a much less significant degree than conventional fibers. This often allows greater throughput.

Another advantage of the fibers described herein is that defects such as fabric faults and elastic filament or fiber breakage may be equivalent or reduced as compared to conventional fibers. That is, use of the fibers described herein may reduce buildup of fiber fragments on a needle bed - a problem that often occurs in circular knit machines when polymer residue adheres to the needle surface. Thus, the fibers may reduce the corresponding fabric breaks caused by the residue when the fibers are being made into, e.g. fabrics on a circular knitting machine.

Another advantage is that the fibers may be knitted in circular machines where the elastic guides that drive the filament all the way from spool to the needles are stationary such as ceramic and metallic eyelets. In contrast, some conventional elastic olefin fibers require that these guides be made of rotating elements such as pulleys as to minimize friction as machine pans, such as eyelets, are heated up so that machine stops or filament breaks could be avoided during the circular knitting process. That is, the friction against the guiding elements of the machine is reduced by using the inventive fibers. Further information concerning circular knitting is found in, for example, Bamberg Meisenbach, "Circular Knitting: Technology Process. Structures, Yarns, Quality ", 1995.

The ethylene/α-olefin interpolymer employed in the fibers may have any density but is usually at least about 0.85 and preferably at least about 0.865 $g/cm^3$ (ASTM D 792). Correspondingly, the density is usually less than about

0.93, preferably less than about 0.92 g/cm3 (ASTM D 792). The ethylene/α-olefin interpolymer of the fibers is characterized by an uncrosslinked melt index of from about 0.1 to about 10 g/10 minutes (ASTM D 1238, Condition 190˚C/2.16 kg). If crosslinking is desired, then the percent of cross-linked polymer is often at least 10 percent, preferably at least about 20, more preferably at least about 25 weight percent to about at most 90, preferably at most about 75, as measured by the weight percent of gels formed.

The fibers of the present invention may also be characterized by a storage modulus at 85˚C of at least about 1.2 MPa, preferably at least about 4 MPa, more preferably at least about 7 MPa, more preferably at least about 9 MPa, more preferably at least about 11 MPa, and more preferably at least about 12.5 MPa. Said storage modulus of the fibers is measured by Dynamic mechanical-thermal spectroscopy (DMS), for example, a Rheometrics RSA-2 operated in tensile mode. Individual crosslinked fibers are first bundled into a bundle having a total denier of from about 2000 to about 3000. The DMS is set to a temperature range of from 25˚C to 200˚C at 3˚C/min and the storage modulus at the various temperatures is monitored and recorded. The test frequency employed is 6.28 rad/s with 0.05% strain. The gauge length is approximately 10 mm.

The fibers of the present invention may also be capable of being heat set, i.e., stretched to a desired width which is maintained when an elastic fabric comprising said fibers is released from, for example, a tenterframe. The heat set efficiency (as described in, for example, Examples 26-28 below) of the fibers of the present invention at a heat set temperature of about 200˚C is advantageously greater than about 60%, preferably greater than about 75%, more preferably greater than about 85%, more preferably greater than about 87%, and more preferably greater than about 88%, more preferably greater than about 90% or more. This is advantageous because as explained in more detail below, surprising and unexpected dimensional stability of the fabrics of the fibers is achieved.

## Additives

Antioxidants, e.g., IRGAFOS® 168, IRGANOX® 1010, IRGANOX® 3790, and CHIMASSORB® 944 made by Ciba Geigy Corp., may be added to the ethylene polymer to protect against undo degradation during shaping or fabrication operation and/or to better control the extent of grafting or crosslinking (i.e., inhibit excessive gelation). In-process additives, e.g. calcium stearate, water, fluoropolymers, etc., may also be used for purposes such as for the deactivation of residual catalyst and/or improved processability. TINUVIN® 770 (from Ciba-Geigy) can be used as a light stabilizer.

The copolymer can be filled or unfilled. If filled, then the amount of filler present should not exceed an amount that would adversely affect either heat-resistance or elasticity at an elevated temperature. If present, topically the amount of filler is between 0.01 and 80 wt % based on the total weight of the copolymer (or if a blend of a copolymer and one or more other polymers, then the total weight of the blend). Representative fillers include kaolin clay, magnesium hydroxide, zinc oxide, silica and calcium carbonate. In a preferred embodiment, in which a filler is present, the filler is coated with a material that will prevent or retard any tendency that the filler might otherwise have to interfere with the crosslinking reactions. Stearic acid is illustrative of such a filler coating.

In reduce the friction coefficient of the fibers, various spin finish formulations can be used, such as metallic soaps dispersed in textile oils (see for example U.S. Patent No. 3,039,895 or U.S. Patent No. 6,652,599), surfactants in a base oil (see for example US publication 2003/0024052) and polyalkylsiloxanes (see for example U.S. Patent No. 3,296,063 or U.S. Patent No. 4,999,120). U.S. Patent Application No. 10 933,721 (published as US20050142360) discloses spin finish compositions that can also be used.

## Fabrics

The present invention is directed to improved textile articles comprising fibers of an olefin block polymer. For purposes of the present invention, "textile articles" includes fabric as well as articles, i.e., garments, made from the fabric including, for example, clothing and other items in need of coloring. By knitting it is meant intertwining yarn or thread in a series of connected loops either by hand, with knitting needles, or on a machine. The present invention may be applicable to any type of knitting including, for example, warp or weft knitting, flat knitting, and circular knitting. Particularly preferred warp knits include tricot and raschel while preferred weft knits include circular, flat, and seamless. However, the invention is particularly advantageous when employed in circular knitting, i.e., knitting in the round, in which a circular needle is employed. The present invention may also be applicable to any type of woven fabric.

The fabrics of the present invention preferably comprise one or more elastic fibers wherein the elastic fibers comprise the reaction product of at least one ethylene olefin block polymer and at least one crosslinking agent wherein the ethylene olefin block polymer is an ethylene/α-olefin interpolymer, wherein the ethylene/α-olefin interpolymer has one or more of the following characteristics prior to crosslinking:

(1) an average block index greater than zero and up to about 1.0 and a molecular weight distribution, Mw/Mn, greater than about 1.3; or

(2) at least one molecular fraction which elutes between 40˚C and 130˚C when fractionated using TREF. **characterized in that** the fraction has a block index of at least 0.5 and up to about 1: or

(3) an Nw/Mn from about 1.7 to about 3.5, at least one melting point, Tm, in degrees Celsius, and a density, d, in grams/cubic centimeter, wherein the numerical values of Tm and d correspond to the relationship:

$$T_m > -2002.9 + 4538.5(d) - 2422.2(d)^2;$$

or

(4) an Mw/Mn from about 1.7 to about 3.5, and is characterized by a heat of fusion, ΔH in J/g, and a delta quantity. ΔT, in degrees Celsius defined as the temperature difference between the tallest DSC peak and the tallest CRYSTAF peak, wherein the numerical values of ΔT and ΔH have the following relationships:

$\Delta T > -0.1299 (\Delta H) + 62.81$ for ΔH greater than zero and up to 130 J/g,

$\Delta T \geq 48˚C$ for ΔH greater than 30 J/g,
wherein the CRYSTAF peak is determined using at least 5 percent of the cumulative polymer, and if less than 5 percent of the polymer has an identifiable CRYSTAF peak, then the CRYSTAF temperature is 30˚C; or

(5) an elastic recovery, Re, in percent at 300 percent strain and 1 cycle measured with a compression-molded film of the ethylene/α-olefin interpolymer, and has a density, d, in grams/cubic centimeter, wherein the numerical values of Re and d satisfy the following relationship when the ethylene/α-olefin interpolymer is substantially free of a cross-linked phase:

$$Re > 1481-1629(d);$$

or

(6) a molecular fraction which elutes between 40˚C and 130˚C when fractionated using TREF, **characterized in that** the fraction has a molar comonomer content of at least 5 percent higher than that of a comparable random ethylene interpolymer fraction eluding between the same temperatures, wherein said comparable random ethylene interpolymer has the same comonomer(s) and has a melt index, density, and molar comonomer content (based on the whole polymer) within 10 percent of that of the ethylene/α-olefin interpolymer; or

(7) a storage modulus at 25 ˚C, G' (25 ˚C), and a storage modulus at 100 ˚C, G'(100 ˚C), wherein the ratio of G'(25 ˚C) to G'(100 ˚C) is in the range of about 1:1 to about 9:1.

Unlike fabrics comprised of other elastic fibers, the fabrics of the present invention may be subjected to a continuous scouring process. The application of clastic olefin fibers, whose base polymer has a higher than 100˚ C melting point (ASTMD276-00a measured before any crosslinking), allows continuous scouring processes to be performed at temperatures higher than 30, preferably higher than 50, more preferably higher than 70˚ C for a subtantial, preferably a majority, portion of the continuous scouring process without causing early heat setting effects on the fabric. Prevention of early heat setting is desirable as the scouring process is employed on greige fabrics which usually have suffered little or no relaxation after their knitting/weaving and, therefore, possess dimensions not desired in the finished product. If any amount of dimension setting takes place during scouring, the resultant fabric will have its lengthwise dimension set at extended position which ultimately causes the finished fabric later to have low stretch and/or poor dimensional stability to hot tumble drying lengthwise.

The amount of polymer in the fabric varies depending upon the polymer, the application and the desired properties. The fabrics typically comprise at least about 1. preferably at least about 2, preferably at least about 5, preferably at least about 7 weight percent ethylene/α-olefin interpolymer. The fabrics typically comprise less than about 50, preferably less than about 40, preferably less than about 30, preferably less than about 20, more preferably less than about 10 weight percent ethylene/α-olefin interpolymer. The ethylene/α-olefin interpolymer may be in the form of a fiber and may be blended with another suitable polymer, e.g. polyolefins such as random ethylene copolymers, HDPE,

LLDPE, LDPE, ULDPE, polypropylene homopolymers, copolymers, plastomers and elastomers, lastol, a polyamide, etc.

The fabrics often comprise another material which is often a hard fiber such as a staple or filament each of which may be natural or synthetic. Said hard fibers may be selected from such items as cotton, silk, linen, bamboo, wool, Tencel, viscose, com, regenerated corn, PLA, milk protein, soybean, seaweed, PES, PTT, PA, polypropylene, polyester, aramid, para-aramid, and blends thereof, The fabrics may comprise other materials such as rayon, nylon, viscose, polyester such as microfiber polyester, polyamide, polypropylene, cellulose, cotton, flax, ramie, hemp, wool, silk, linen, bamboo, tencel, mohair, other natural fibers, other sythetic fibers, and mixtures thereof. Often the other material comprises the majority of the fabric. It is often preferred that materials other than the elastic fiber comprise from at least about 50, preferably at least about 60, preferably at least about 70, preferably at least about 80, sometimes as much as 90-95. percent by weight of the fabric.

The ethylene/α-olefin interpolymer, the other material or both may be in the form of a fiber. Preferred sizes include a denier from at least about 1. preferably at least about 20, preferably at least about 50. to at most about 180, preferably at most about 150. preferably at most about 100, preferably at most about 80 denier.

Particularly preferred circular knit fabrics comprise ethylene/α-olefin interpolymer in the form of a fiber in an amount of from about 5 to about 20 percent (by weight) of the fabric. Particularly preferred warp knit fabrics comprise ethylene/α-olefin interpolymer in the form of a fiber in an amount of from about 10 to about 30 percent. (by weight) of the fabric in the form of a fiber. Often such warp knit and circular knit fabrics also comprise polyester or microfiber polyester.

The fabric, particularly knit fabrics, often have less than about 5. preferably less than 4. preferably less than 3. preferably less than 2. preferably less than 1. preferably less than 0.5, preferably less than 0.25, percent shrinkage after wash according to AATCC 135 in either the horizontal direction, the vertical direction, or both. More specifically, the fabric (after heat setting) often has a dimensional stability of from about -10% to about +10%, -7% to about +7%, preferably -5% to about -5%, preferably from about -3% to about -3%, preferably -2% to about +2%, more preferable -1% to about -1% in the lengthwise direction, the widthwise direction, or both according to AATCC 135 IVAi. In addition, the fabrics often have less shrinkage after wash according to AATCC 135 IVAi than a comparable fabric of elastic fibers with a higher amount of crosslinking.

Knit fabrics can be made to stretch in two dimensions if desired by controlling the type and amount of ethylene/α-olefin interpolymer and other materials. Knit fabrics may sometimes be characterized by a stretch of at least about 30 percent measured according to ASTM D2594. Similarly, the fabric can be made such that the growth in the lengthwise and widthwise directions is less than about 7, preferably less than about 5. preferably less than about 4, preferably less than about 3, preferably less than about 2. preferably less than about 1. to as little as 0.5 percent according to ASTM D 2594. Using the same test (ASTM D 2594) the lengthwise growth at 60 seconds can be less than about 15, preferably less than about 12, preferably less than about 10. preferably less than about 8%. Correspondingly, using the same test (ASTM D 2594) the widthwise growth at 60 seconds can be less than about 20, preferably less than about 18. preferably less than about 16. preferably less than about 13%. In regard to the 60 minute test of ASTM D 2594, the widthwise growth can be less than about 10, preferably less than about 9, preferably less than about 8, preferably less than about 6% while the lengthwise growth at 60 minutes can be less than about 8, preferably less than about 7, preferably less than about 6, preferably less than about 5%. The lower growth described above allows the fabrics of the invention to be heat set at temperatures from less than about 180, preferably less than about 170. preferably loss than about 160, preferably less than about 150˚C while still controlling size. In contrast to knit fabrics, woven fabrics may be characterized by a stretch of at least about 10 percent measured according to ASTM D3107.

Fabrics of the present invention advantageously often exhibit a dimensional stability of from about -5% to about +5% according to AATCC 135 12 minutes machine wash at 40˚ C. In addition, the fabrics may be characterized by a lengthwise elongation of at least about 56, preferably at least about 58, preferably at least about 61, more preferably at least about 64 as measured by M&S15A. In addition, the fabrics may sometimes be characterized by a lengthwise dimensional stability of between about -7.5% to about +7.5% as measured by ISO5077:1984 (41˚C. wash and 70˚C 1 hour tumbledrying) and preferably by a lengthwise dimensional stability of between about -5.5% to about +5.5% as measured by ISO5077:1984 (41˚C wash and 70˚C 1 hour tumbledrying). In addition, the fabrics often exhibit a growth to stretch ratio of less than 0.5, preferably less than 0.4. preferably less than 0.35, preferably less than 0.3, preferably less than 0.25, preferably less than 0.2, preferably less than 0.15. preferably less than 0.1, preferably less than 0.05.

Advantageously, knit fabrics of the present invention can be made without a substantial number of breaks and using a knitting machine comprising an eyelet feeder system, a pulley system, or a combination thereof. Thus, the circular knitted stretch fabrics having improved moldability while having acceptable dimensional stability (lengthwise and widthwise), acceptable growth and shrinkage, the ability to be heat set at low temperatures while controlling size, low moisture regain can be made without significant breaks, with high throughput, and without derailing in a wide variety of circular knitting machines.

## Dycing

The fabrics of the present invention may be dyed, if desired, by virtually any dyeing process. For general information on dyeing one may consult Fundamentals of Dyeing and Printing, by Carry Mock, North Carolina State University 2002. ISBN 9780000033871. One advantage of the fabrics of the present invention is that they may often be contacted with the dye at a temperature of at least about 130˚C to produce a dyed fabric wherein the fabric exhibits a growth to stretch ratio of less than 0.5, preferably less than 0.4, preferably less than 0.35, preferably less than 0.3, preferably less than 0.25, preferably less than 0.2, preferably less than 0.15, preferably less than 0.1. preferably less than 0.05. Advantageously, the resulting dyed fabrics of the present invention are often characterized by a color change of greater than or equal to about 3.0, preferably greater than or equal to about 3.5, more preferably greater than or equal to about 4.0 according to AATCC evaluation after a first wash by AATCC61-2003-2A. Another advantage is that the fabrics of the present invention may sometimes exhibit a color change of greater than or equal to about 2.5, preferably greater than or equal to about 3.0, more preferably greater than or equal to about 3.5 according to AATCC evaluation after a second wash by AATCC61-2003-2A. In essence this means that the dyed fabrics of the present invention may exhibit less fading when subjected to maundering than conventional dyed fabrics.

The dyed fabrics of the present invention are also characterized by an advantageous color strength after dyeing, i.e., the fabrics are darker. For example, the dyed fabrics may often be characterized by a color strength after dying of greater than or equal to about 600, preferably of greater than or equal to about 650. preferably of greater than or equal to about 700. preferably of greater than or equal to about 750. as measured with a spectrum photometer. Advantageously, the color is substantially retained even after a first and second wash. For example, the dyed fabrics may be characterized by a color strength after a first wash by AATCC61-2003-2A that is at least about 90, preferably at least about 95, more preferably at least about 97 percent of the color strength after dying wherein each color strength is measured with a spectrum photometer. The dyed fabrics may sometimes also be characterized by a color strength after a second wash by AATCC61-2003-2A that is at least about 90. preferably at least about 92.5, more preferably at least about 94 percent of the color strength after dying wherein each color strength is measured with a spectrum photometer.

While not wishing to be bound by any theory it is believed that the reasons the dyed fabrics of the present invention dye darker are due to the fibers of the olefin block polymer. That is the olefin block polymer fibers dye to a lesser extent allowing the other material to get darker. Also, a higher dyeing temperature can be employed with less fiber breakage when olefin block polymers are used as the fibers, In a similar manner it is believed that the dyed fabrics fade less upon laundering is that the olefin block polymer fibers are not dyed to as great of an extent as fibers made with other polymers. In this manner, the olefin block polymers cannot fade or bleed as much.

## EXAMPLES

### Example 22 - Fibers of elastic ethylene/α-olefin interpolymer of 70 denier

The elastic ethylene/α-olefin interpolymer of Example 21 which had a melting point of >100˚ C before crosslinking was used to make monofilament fibers of 70 denier having an approximately round cross-section. Before the fiber was made the following additives were added to the polymer: 7000 ppm PDMSO (polydimethyl siloxame), 3000 ppm CYANOX 1790 (1,3,5-tris-(4-t-butyl-3-hydroxy-2,6-dimethylbenzyl)1,3,5-triazine-2,4,6-(1H,3H,5H)-trione, and 3000 ppm CHIMASORB 944 Poly-[[6-(,1,1,3,3-tetramethylbutyl)amino]-s-triazine-2,4-diyl][2,2,6,6-tetramethyl-4-piperidyl)imino]hexamthylene[(2,2,6,6-tetramethyl-4-piperidyl)imino]] and 0.5% by weight $TiO_2$. The fibers were produced using a die profile with circular 0.8 mm diameter, a spin temperature of 295˚C. a winder speed of 900m/minute, a spin finish of 1%, a cold draw of 6%, and a spool weight of 300g. The fibers were then crosslinked using a total of 176.4 kGy irradiation as the crosslinking agent.

### Example 23 - Fibers of random copolymers of 70 denier

A random ethylene-octene copolymer was used to make monofilament fibers of 70 denier having an approximately round cross-section. The random ethylene-octene copolymer is characterized by having a melt index of 3 g/10min., a density of 0.875 g/cm$^3$ and similar aditives as Example 20. Before the fiber was made the following additives were added to the polymer: 7000 ppm PDMSO (polydimethyl siloxane). 3000 ppm CYANOX 1790 (1,3,5-tris-(4-t-butyl-3-hydroxy-2,6-dimethylbenzyl)-1,3,5-triazine-2,4-6-(1H,3H,5H)-trione, and 3000 ppm CHIMASORB 944 Poly-[[6-(1,1,3,3- tetramethylbutyl) amino]-s- triazine- 2,4- diyl] [2,2,6,6- tetramethyl- 4- piperidyl) imino] hexamethylene[(2,2,6,6-tetramethyl-4-piperidyl)imino]]. 0.5% by weight $TiO_2$. The fibers were produced using a die profile with circular 0.8 mm diameter, a spin temperature of 299˚C. a winder speed of 1000m/minute, a spin finish of 2%, a cold draw of 6%, and a spool weight of 150g. The fibers were then crosslinked using 176.4 kGy irradiation as the crosslinking agent.

**Example 24 - Fabric A Comprising fibers of Example 22**

Fabric A was made from the 70 denier fibers of Example 22 and 140 denier fibers of polyamide 6.6 textured (2 cables of 70 denier/68 filaments) supplied by DEFIBER, S.A., Spain. The elastic fiber comprised about 14% of Fabric A while the polyamide comprised about about 86%. The knitting conditions, finishing steps, and finished properties were as follows:

Knitting Conditions:

Machine 28G, Mayer Relanit, 30" diameter, 20RPM
Single Jersey construction
Polyamide Stitch Length = 3.0mm/needle - a.k.a. feeding rate = (polyamide speed/machine RPM)/machine number of needles.
Elastic Draft (as measured by the relationship polyamide speed/elastic feeding speed): 3.0X
Number of machine revolutions: 4000/fabric type

Finishing Steps:

Continuous Scoring:
Scouring bath at max 80° C
Fabric speed 20m/min
Scouring bath main constituents: Water solution of soap and sodium carbonate (soda Ash)
Pre Heat-setting of Polyamide
Stenter frame speed: 16m/min
Overfeeding: 15%
Set Width: 156cm
Max Stenter Frame Set Temperature: max 180° C
Residence Time Inside Heating Chambers: 60sec

Dyeing

Process: Disperse Dyeing in jet
Dyeing Cycle: max temperature 105° C
Color: Black

Drying

Stenter frame speed: 16m/min
Overfeeding: 15%
Set Width: 156cm
Max Stenter Frame Set Temperature: max 160°C
Residence Time Inside Heating Chambers: 60sec

Finished properties:

Width 147cm
Density 237 g/m$^2$
Lengthwise Elongation: 65% ± 1% using the method of M&S15A
Lengthwise Dimensional Stability: - 4.9% using the method of ISO5077:1984 (41° C wash: 70° C 1h tumble drying)

**Example 25 - Fabric B Comprising fibers of Example 23**

Fabric B was made in substantially the same manner as Fabric A of Example 24 except that 70 denier fibers of Example 23 were substituted for the 70 denier fibers of Example 22. The finished properties were as follows: Finished properties:

Width 152cm
Density 208g/m$^2$

Lengthwise Elongation: 55% ± 2% using the method of M&S15A
Lengthwise Dimensional Stability: - 12.2% using the method of ISO5077:1984 (41C wash: 70° C 1hr tumble drying).

The results demonstrate: (1) higher lengthwise elongation and (2) higher dimensional stability for fabric A containing an elastic olefin fiber whose base polymer melting point is above 100° C in absence of crosslinking.

**Example 26 -- Fibers of elastic ethylene/α-olefin interpolymer of 40 denier**

The elastic ethylene/α-olefin interpolymer of Example 20 which had a melting point of>100°C before crosslinking was used to make monofilament fibers of 40 denier having an approximately round cross-section. Before the fiber was made the following additives were added to the polymer: 7000 ppm PDMSO (polydimethyl siloxane, 3000 ppm CYANOX 1790 (1,3,5-tris-(4-t-butyl-3-hydroxy-2,6-dimethylhenzyl)-1,3,5-triazine-2,4,6-(1H,3H,5H)-trione, and 3000 ppm CHIMASORB 944 Poly-[[6-(1,1,3,3-tetramethylbutyl)amino]-s-triazine-2,4-diyl][2,2,6,6-tetramethyl-4-piperidyl)imino]hexamethylene[(2,2,6,6-tetramethyl-4-piperidyl)imino]] and 0.5% by weight $TiO_2$. The fibers were produced using a die profile with circular 0.8 mm diameter, a spin temperature of 299°C, a winder speed of 650m minute. The fibers were then crosslinked using a total of 176.4 kGy irradiation as the crosslinking agent.

**Example 27 - Fibers of random copolymers of 40 denier**

A random ethylene-octene copolymer having a melting point of < 100° C before crosslinking) was used to make monofilament fibers of 40 denier having an approximately round cross-section. The random ethylene-octene copolymer is characterized by having a melt index of 3 g/10min., a density of 0.875 $g/cm^3$ and similar aditives as Example 20. Before the fiber was made the following additives were added to the polymer: 7000 ppm PDMSO (polydimethyl siloxane). 3000 ppm CYANOX 1790 (1,3,5-tris-(4-t-butyl-3-hydroxy-2,6-dimethylbenzyl)-1,3,5-triazine-2,4,6-(1H,3H,5H)-trione, and 3000 ppm CHIMASORB 944 Poly-[[6-(1,1,3,3-tetramethylbutyl)amino]-s-triazine-2,4-diyl][2,2,6,6-tetramethyl-4-pipetidyl)imino]hexamethylene[(2,2,6,6-tetramethyl-4-piperidyl)imino]], 0.5% by weight $TiO_2$. The fibers were produced using a die profile with circular 0.8 mm diameter, a spin temperature of 299°C, a winder speed of 650m/minute. The fibers were then crosslinked using 176.4 kGy irradiation as the crosslinking agent.

**Example 28 - Heat-Setting and Shrinkage Testing of 40 Denier Fibers**

The 40 denier fibers of Example 26 and Example 27 and Lycra™ are subjected to heat-setting and shrinkage testing using the method shown in Figure 8. The elastic fiber 10 cm long is stretched at 100% elongation (Draft = 2) and exposed to a heat-setting temperature (200°C) for a given time (t = 2 min.) in an elongated state. The fiber is then cooled down to room temperature and released. The length of the fiber 1 minute after releasing is recorded ($L_{relaxed}$). The fiber is then exposed to a hot-oil bath kept at a given temperature for 30 seconds. The length of fiber after shrinkage is recorded ($L_{shrunk}$).

Table 12 below shows the fiber length after heat setting at 200°C for 2 min. The fibers of Example 26 and 27 had high heat set efficiency. While not wishing to be bound to any theory, it is likely due to crystals forming upon cooling that are locked into the orientation of the deformed network. However, there are still differences in heat set efficiency among the fibers of Example 26 and 27. For example, the fibers of Example 27 had higher heat set efficiency (97%) than the fibers of Example 26. While not wishing to be bound to any theory, it may relate to the uniform distribution of the new crystals in the fibers of Example 27. In contrast to the fibers of Examples 26 and 27, the Lycra™ fibers had much lower heat set efficiency of 53%.

Table 12. Fiber length after heat set 200°C and the heat set efficiency

| | Example 27 | Example 26 | Lycra |
|---|---|---|---|
| Fiber length (cm) | 19.7±0.1 | 19.0±0.2 | 15.3 |
| Heat set efficiency (%) | 97 | 90 | 53 |

After the fibers were heat set at 200°C they were shrunk in an oil bath at increasing temperatures. Table 12a below shows the fiber length after shrink as a function of shrinkage temperature. It can be seen that the shrinkage of the fibers of Example 26 increases with increasing shrinkage temperature until 120°C. At temperatures above 120°C, the fiber shrinkage is independent of the shrinking temperature. The transition likely corresponds to the melting point of the fibers of Example 26. All Example 27 fibers shrunk almost to the same length, as all shrinking temperatures are above the melting point of the fibers of Example 27.

At temperatures below 120˚C, the fibers of Example 26 had better dimensional stability than the fibers of Example 27. In particular, the fibers of Example 26 after heat set almost does not shrink at 90˚C. This is beneficial as most home laundering and washing takes place at temperature below 100˚C. At temperatures above 120˚C, the fibers of Example 26 exhibits shrinkage. However, even at these high temperatures, e.g. 150˚C, the Example 26 fibers still had slightly better dimensional stability than the fibers of Example 27, as shown in Table 12a. Fiber length after shrunk at different temperatures

Table 12a

| | 90˚C | 100˚C | 110˚C | 120˚C | 130˚C | 140˚C | 150˚C |
|---|---|---|---|---|---|---|---|
| Fiber length (cm) Example 26 | 18.65 | 16.0 | 12.6 | 8.3 | 7.9 | 8.3 | 8.65 |
| Fiber length (cm) Example 27 | 7.25 | 6.5 | 7.25 | 7.3 | 7.2 | 7.2 | 7.1 |
| Fiber length (cm) Lycra | 14.9 | | | | | | |

**Example 29 40 Denier fibers of elastic ethylene/α-olefin interpolymer with higher crosslinking**

The elastic ethylene/α-olefin interpolymer of Example 20 was used to make monofilament fibers of 40 denier having an approximately round cross-section. Before the fiber was made the following additives were added to the polymer: 7000 ppm PDMSO (polydimethyl siloxane), 3000 ppm CYANOX 1790 (1,3,5-tris-(4-t-butyl-3-hydroxy-2,6-dimethylbenzyl)-1,3,5-triazine-2,4,6-(1H,3H,5H)-trione, and 3000 ppm CHIMASORB 944 Poly-[[6-(1,1,3,3-tetramethylbutyl)amino]-s-stiazine-2,4-diyl][2,2,6,6-tetramethyl-4-piperidyl)imino]hexamethylene[(2,2,6,6-tetramethyl-4-piperidyl) imino]] and 0.5% by weight $TiO_2$. The fibers were produced using a die profile with circular 0.8 mm diameter, a spin temperature of 299˚C, a winder speed of 1000m/minute, a spin finish of 2%, a cold draw of 6%, and a spool weight of 150g. The fibers were then crosslinked using a total of 176.4 kGy irradiation as the crosslinking agent.

**Example 30 40 Denier fibers of elastic ethylene/α-olefin interpolymer with lower crosslinking**

The elastic ethylene/α-olefin interpolymer of Example 20 was used to make monofilament fibers of 40 denier having an approximately round cross-section. Before the fiber was made the following additives were added to the polymer: 7000 ppm PDMSO (polydimethyl siloxane), 3000 ppm CYANOX 1790 (1,3,5-tris-(4-t-butyl-3-hydroxy-2,6-dimethylbenzyl)-1,3,5-triazine-2,4,6-(1H,3H,5H)-trione, and 3000 ppm CHIMASORB 944 Poly-[[6-(1,1,3,3-tetramethylbutyl)amino]-s-triazine-2,4-diyl][2,2,6,6-tetramethyl-4-piperidyl)imino]hexamethylene[2,2,6,6-tetramethyl 4-piperidyl) imino]] and 0.5% by weight $TiO_2$. The fibers were produced using a die profile with circular 0.8 mm diameter, a spin temperature of 299˚C, a winder speed of 1000m/minute, a spin finish of 2%, a cold draw of 2%, and a spool weight of 150g. The fibers were then crosslinked using a total of 70.4 kGy irradiation as the crosslinking agent.

**Example 31 - Heat Setting of Knit Fabrics of Fibers of Example 29 and 30**

A circular knit fabric was produced from the fibers of Example 29 (hereinafter called Fabric 29) and a circular knit fabrics was produced from the fibers of Example 30 (hereinafter called Fabric 30). The hard yarn employed was a polyester of 150 denier, 96 filament. A summary of the steps and properties is as follows:

**Knitting machine type**

| | San Da Single jersey 4F |
|---|---|
| **Structure** | Platting |
| **Needle Gauge** | 24G 2260T |
| **Cylinder** | 30in |
| **Feeder** | 96F |
| **Feeder guide** | Pulley |

(continued)

| | San Da Single jersey 4F |
|---|---|
| **Machine type** | 1 |
| **Stitch length (mm)** | 3.3 |
| **Speed (rpm)** | 20 |
| **D.R.** | 2.7 |

The greige of the fabrics were dyed and finished by scouring at 95˚C for 20 minutes in a discontinuous jet, dyeing at 130˚C dyeing temperature, tensionless drying at 130˚C for 60 minutes, and heat-setting at a temperature of 170˚C for 40-60 seconds at 60-80 yards per minute. Even though it is often referable to employ overfeed in a commercial process, for purposes of this example there was no overfeed in the warp direction employed during the heat setting process. Likewise, there was no extension employed in the weft direction during the heat setting process.

The Fabrics 29 and 30 were tested for heat setting. The processing sequence employed was wetting-out, spin-drying, heat setting, dimensional stability test. The wetting-out process was performed by boiling fabrics at 90˚C. A heat setting process using a tenter frame was employed wherein the fabric was extended to 1.1 (10% extension) or 1.2 (20% extension) times its width after heat was applied for 2-3 minutes at various temperatures from approximately 100-190˚C. Table 13 shows the experimental design of the heat setting efficiency analysis for Fabrics 29 and 30.

Table 13

| Experiment | Extension | Temperature (˚C) | Time (minute) |
|---|---|---|---|
| 1 | 20% | 170 | 3 |
| 2 | 20% | 180 | 2 |
| 3 | 20% | 180 | 3 |
| 4 | 20% | 190 | 2 |
| 5 | 10% | 100 | 3 |
| 6 | 10% | 130 | 3 |
| 7 | 10% | 150 | 3 |
| 8 | 10% | 170 | 3 |

After heat setting the two fabrics were tested for dimensional stability. Table 14 shows AATCC 135 (Test No. (2)IIIA(II), 8 Minutes Machine Wash At 120˚F, Delicate Cycle, Followed By Tumble Dry - Delicate) testing results from experimental design of Table 13 above. If 20% strain was applied to heat settings as in Experiment 1-4 of Table 13, then the dimension stability is not between -5% and -5% (a typical customer requirement). However, if only 10% strain is applied, then the fabric may obtain a dimensional stability of as low as 2%.

**Table 14 Dimensional stability result of heat setting efficiency experiment**

| **Weft dimensional change** | **Fabric** | **Fabric 30** |
|---|---|---|
| Experiment 1 | 7.2 % | 7.2 % |
| Experiment 2 | 7.0 % | 6.8 % |
| Experiment 3 | 7.6 % | 6.0 % |
| Experiment 4 | 6.4 % | 6.8 % |
| Experiment 5 | 4 % | 6.0 % |
| Experiment 6 | 2.4 % | 4.8 % |
| Experiment 7 | 2.0 % | 4.0 % |
| Experiment 8 | 2.0 % | 4.0 % |

**Example 31 - Woven Fabrics**

The fibers of Examples 27, 29, and 30 were employed to make 3 different woven fabrics through the following weaving process:
Elastic fiber content in fabric comprises the range 2.3% to 3.5%, depending on fiber draft
Plain weave structure
Warp yarn count Ne 50/1 100% cotton
Reed pace: ~170 cm
Warp density at reed: 36 ends/cm
Weft density: 30 picks/cm
Weft yarns used for weaving samples were:

| Yarn type | Fiber type |
|---|---|
| Nm 85 CO + 40 denier fiber 4.0X draft | Example 27 |
| Nm 85 CO + 40 denier fiber 3.6X draft | Example 29 |
| Nm 85 CO + 40 denier fiber 3.6X draft | Example 30 |

The above fabric samples were submitted to washing machine treatment to promote relaxation and shrinkage and develop extensibility. Treatment conditions were applied according to AATCC 135/2A modified to apply wash temperatures up to 90˚C. The relaxed and shrunk fabric samples were then:

a) Stretched 10% in weft direction;

b) Exposed to 110 or 150 deg C temp for 3 minutes in constrained sketched form, by means of lab scale tenter frame (Mathis); and

c) Washed according to AATCC 135 2A (60 deg C wash temp + tumbler drying 66 ± 5 deg C), to check dimensional stability as per reference textiles industry requirements.

Table 15 below summarizes the results.

**Table 15 heat set results for applied strain of 10%**

| Yarn type | Fiber type | Original sample, L1 (mm) | 10% stretch. Ls (mm) | Lw (mm) after 110˚ C heat set, wash and tumble dry | Lw (mm) after 150˚ C heat set, wash and tumble dry | Heatset ability 110˚ C | Heatset ability 150˚ C |
|---|---|---|---|---|---|---|---|
| Nm 85 CO + Example 40 denier fiber 4.0X draft | 27 | 250 | 275 | 247 | 245 | -12% | -20% |
| Nm 85 CO + Example 40 denier fiber 3.6X draft | 29 | 250 | 275 | 244 | 250 | -24% | 0% |
| Nm 85 CO + 40 denier fiber 3.6X draft | Example | 30 250 | 275 | 238 | 267 | -48% | 68% |

"Heatset-ability" (%) in Table 15 above is defined as:

$$\frac{(L_w - L_1)}{L_s - L_1}.$$

Where $L_W$ = sample gauge length after washing, $L_1$ = sample gauge length initial, $L_S$ = sample gauge length shrunk. Table 15 shows that the fibers of Example 29 and 30 achieve surprising and unexpected fabric dimensional stability. Such results can often be achieved through processing at a minimum temperature of 150° C. Prior art fibers do not maintain imparted deformation, even upon exposure to temperatures of 150° C.

Further testing was conducted on the woven fabrics with the fibers of Examples 29 and 30 per the following conditions:

a. Stretched 30% in weft direction;

b. Exposed to 110 or 150 or 180 deg C temp for 3 minutes in constrained stretched form, by means of lab scale tenter frame (Mathis); and

c. Washed according to AATCC 135 2A (60 deg C wash temp + tumble drying 66 ± 5 deg C).

The testing was not conducted on the woven fabric with the fibers of example 27 because it could not be extended up to 30% from the original, relaxed length. The results are shown in Table 16 below.

**Table 16 heat set results for applied strain of 30%**

| Yarn type | Fiber type | Original sample, L1 (mm) | 30% stretch, Ls (mm) | Lw (mm) after 110° C heat set, wash and tumble dry | Lw(mm) after 150° C heatset, wash and tumble dry | Lw(mm) after 180° C heatset, wash and tumble dry | Heatset ability 110° C | Heatset ability 150° C | Heatset ability 180° C |
|---|---|---|---|---|---|---|---|---|---|
| Nm 85 CO+40 denier fiber 3.6X draft | Example 29 | 300 | 390 | 303 | 355 | 352 | 3% | 61% | 58% |
| Nm 85 CO+40 denier fiber 3.6X draft | Example 30 | 300 | 390 | 312 | 365 | 371 | 13% | 72% | 79% |

Table 16 shows that the fibers of Example 29 and 30 achieve surprising and unexpected fabric dimensional stability. Such results can often be achieved through processing at a minimum temperature of 150° C and therefore treatment temperatures above 150° C are not required.

**Example 32 - Varying Amounts of Fiber Crosslinking**

The elastic ethylene/α-olefin interpolymer of Example 20 was used to make monofilament fibers of 40 denier having an approximately round cross-section. Before the fiber was made the following additives were added to the

polymer: 7000 ppm PDMSO (polydimethyl siloxane), 3000 ppm CYANOX 1790 (1,3,5-tris-(4-t-butyl-3-hydroxy-2,6-dimethylbenzyl)-1,3,5-triazine-2,4,6-(1H,3H,5H)-trione, and 3000 ppm CHIMASORB 944 Poly-[[6-(1,1,3,3-tetramethylbutyl)amino]-s-triazine-2,4-diyl][2,2,6,6-tetramethyl-4-piperidyl)imino]hexamethyene[(2.2,6,6-tetramethyl-4-piperidyl) iminol] and 0.5% by weight $TiO_2$. The fibers were produced using a die profile with circular 0.8 mm diameter, a spin temperature of 299˚C, a winder speed of 650m/minute, a spin finish of 2%, a cold draw of 6%, and a spool weight of 150g. Fibers were then crosslinked using varying amounts of irradiation from an e-beam as the crosslinking agent.

The gel content versus the amount of irradiation is shown in Figure 9. The gel content was determined by weighing out an approximately 25 mg fiber sample to 4 significant figure accuracy. The sample is then combined with 7 ml xylene in a capped 2-dram vial. The vial is heated for 90 minutes at 125˚C to 135˚C, with inversion mixing (i.e. turning vial upside down) every 15 minutes, to extract essentially all the non-crosslinked polymer. Once the vial has cooled to approximately 25˚C, the xylene is decanted from the gel. The gel is rinsed in the vial with a small portion of fresh xylenes. The rinsed gel is transferred to a tared aluminum weighing pan. The tared dish with gel is vacuum dried at 125˚C for 30 minutes to remove the xylene by evaporation. The pan with dried gel is weighed on an analytical balance. The gel content is calculated based on the extracted gel weight and original fiber weight. Figure 9 shows that as the e-beam dosage increases, the amount of crosslinking (gel content) increases. One skilled in the art will appreciate that the precise relationship between the amount of crosslinking and e-beam dosage may be affected by a given polymer's properties, e.g., molecular weight or melt index.

### Example 33 - Storage Modulus Measurement

The storage modulus at various temperatures of the fibers of Example 26 and Example 27 were measured by Dynamic mechanical-thermal spectroscopy (DMS) using a Rheometrics RSA-2 operated in tensile mode.

Individual crosslinked fibers of Example 26 are first bundled into a bundle having a total denier of from about 2000 to about 3000. The DMS is set to a temperature range of from 25˚C to 200˚C at 3˚C/min and the storage modulus at the various temperatures is monitored and recorded. The test frequency employed is 6.28 rad/s with 0.05% strain. The gauge length is approximately 10 mm. The storage modulus is plotted as a function of temperature and the results shown in Figure 10.

Next, individual crosslinked fibers of Example 27 are bundled into a bundle having a total denier of from about 2000 to about 3000. The DMS is set to a temperature range of from 25˚C to 200˚C at 3˚C/min and the storage modulus at the various temperatures is monitored and recorded. The test frequency employed is 6.28 rad/s with 0.05% strain. The gauge length is approximately 10 mm. The storage modulus is plotted as a function of temperature and the results shown in Figure 10.

Figure 10 shows, for example, that the storage modulus of Example 26 at 85˚C is approximately 13.6 MPa while the storage modulus of Example 27 at 85˚C is approximately 0.89 MPa.

## Claims

**1.** A fabric comprising one or more elastic fibers, wherein the elastic fibers comprise the reaction product of at least one ethylene olefin block polymer and at least one chemical or radiation crosslinking agent, wherein said ethylene olefin block polymer is an ethylene/$\alpha$-olefin interpolymer **characterized by** the following characteristics prior to cros slinking:

at least one molecular fraction which elutes between 40 ˚C and 130˚C when fractionated using TREF, **characterized in that** the fraction has a block index of at least 0.5 and up to 1 and a molecular weight distribution, Mw/Mn greater than 1.3, and wherein every fraction having a TREF elution temperature between 40 ˚C and 76 ˚C, corresponds to the equation Heat of fusion (J/gm) ≤ (1.1312) (ATREF elution temperature in Celsius) + 22.97; and optionally one or more of the following characteristics prior to crosslinking:

(a) having a Mw/Mn from 1.7 to 3.5, at least one melting point,Tm, in degrees Celsius, and a density, d, in grams/cubic centimeter,
wherein the numerical values of Tm and d correspond to the relationship:

$$T_m > -2002.9 + 4538.5(d) - 2422.2(d)^2,$$

or

(b) having a Mw/Mn from 1.7 to 3.5, and is **characterized by** a heat of fusion, $\Delta H$ in J/g, and a delta quantity, $\Delta T$, in degrees Celsius defined as the temperature difference between the tallest DSC peak and the tallest CRYSTAF peak, wherein the numerical values of $\Delta T$ and $\Delta H$ have the following relationships:

$\Delta T > -0.1299(\Delta H) + 62.81$ for $\Delta H$ greater than zero and up to 130 J/g,
$\Delta T \geq 48^\circ C$ for $\Delta H$ greater than 130 J/g,
wherein the CRYSTAF peak is determined using at least 5 percent of the cumulative polymer, and if less than 5 percent of the polymer has an identifiable CRYSTAF peak, then the CRYSTAF temperature is 30˚C; or

(c) is **characterized by** an elastic recovery, Re, in percent at 300 percent strain and 1 cycle measured with a compression-molded film of the ethylene/α-olefin interpolymer, and has a density, d, in grams/cubic centimeter, wherein the numerical values of Re and d satisfy the following relationship when the ethylene/α-olefin interpolymer is substantially free of a cross-linked phase:

$$Re > 1481 - 1629(d);$$

or
(d) having a comonomer content of the TREF fraction which elutes between 40 and 130˚C greater than or equal to the quantity (-0.2013) T + 21.07, wherein T is the numerical value of the peak elution temperature of the TREF fraction, measured in ˚C; or
(e) is **characterized by** a storage modulus at 25˚C, G'(25˚C), and a storage modulus at 100˚C, G'(100˚C), wherein the ratio of G'(25˚C) to G'(100˚C) is from 1:1 to 10:1; or
(g) an average block index greater than zero and up to 1.0 and a molecular weight distribution, Mw/Mn, greater than 1.3; and:

(1) a lengthwise elongation of at least 56 as measured by M&S15A; or
(2) a lengthwise dimensional stability of between -10% to +10% as measured by ISO5077:1984 (41˚C wash and 70˚C 1 hour tumbledrying).

2. The fabric of Claim 1 wherein the fabric is **characterized by** a lengthwise dimensional stability of between -10% to +10% as measured by ISO5077:1984 (41˚C wash and 70˚C 1 hour tumbledrying).

3. The fabric of Claim 1 wherein the fabric is **characterized by** a lengthwise dimensional stability of between -7.5% to +7.5% as measured by ISO5077:1984 (41˚C wash and 70˚C 1 hour tumbledrying).

4. The fabric of Claim 1 wherein the fabric is **characterized by** a lengthwise dimensional stability of between -5.5% to +5.5% as measured by ISO5077:1984 (41˚C wash and 70˚C 1 hour tumbledrying).

5. The fabric of Claim 1 wherein the fabric is **characterized by** a lengthwise elongation of at least 56 as measured by M&S15A.

6. The fabric of any one of Claims 1-5 wherein the fabric is **characterized by** a lengthwise elongation of at least 58 as measured by M&S15A.

7. The fabric of any one of Claims 1-5 wherein the fabric is **characterized by** a lengthwise elongation of at least 61 as measured by M&S15A.

8. The fabric of any one of Claims 1-5 wherein the fabric is **characterized by** a lengthwise elongation of at least 64 as measured by M&S15A.

9. The fabric of any one of Claims 1-5 wherein the melting point of the ethylene olefin block polymer is at least 100˚C in the absence of crosslinking as measured according to ASTM D276-00a.

10. The fabric of any one of Claims 1-5 wherein said one or more elastic fibers are **characterized by** an average elongation at first filament break of greater than or equal to 200% according to ASTM D 2653-01.

**11.** The fabric of any one of Claims 1-5 wherein the fabric is a woven fabric and comprises from 2 to 10 percent olefin block polymer based on the total fabric weight.

**12.** The fabric of any one of Claims 1-5 wherein the fabric is a knitted fabric and comprises from 2 to 30 percent olefin block polymer based on the total fabric weight.

**13.** The fabric of any one of Claims 1-5 wherein the fabric further comprises hard fibers and wherein the hard fibers comprise at least 80 percent by weight of the fabric.

**14.** The fabric of any one of Claims 1-5 wherein one or more of said elastic fibers of said fabric is **characterized by** a storage modulus at 85° C of at least 1.2 MPa.

**15.** The fabric of any one of Claims 1-5 wherein said fabric exhibits a dimensional stability of from -5% to +5% according to AATCC 135 12 minutes machine wash at 40° C.

## Patentansprüche

**1.** Gewebe aus einer oder mehr elastischen Fasern, wobei die elastischen Fasern das Reaktionsprodukt von mindestens einem Ethylen-Olefin-Blockpolymer und mindestens einem chemischen oder Strahlungsvernetzungsmittel umfassen, wobei das Ethylen-Olefin-Blockpolymer ein Ethylen/α-Olefin-Interpolymer ist, **gekennzeichnet durch** die folgenden Merkmale vor dem Vernetzen:

mindestens eine Molekülfraktion, die bei Fraktionierung mittels TREF zwischen 40°C und 130°C eluiert, **dadurch gekennzeichnet, dass** die Fraktion einen Blockindex von mindestens 0,5 und bis 1 und eine Molekulargewichtsverteilung, Mw/Mn, größer als 1,3 hat, und wobei jede Fraktion mit einer TREF-Elutionstemperatur zwischen 40°C und 76°C der folgenden Gleichung entspricht:
Schmelzwärme (J/g)≤(1,1312)(ATREF-Elutionstemperatur in Celsius)+22,97; und optional eines oder mehrere der folgenden Merkmale vor dem Vernetzen:

(a) mit einem Mw/Mn von 1,7 bis 3,5, mindestens einem Schmelzpunkt, Tm, in Grad Celsius, und einer Dichte, d, in Gramm/Kubikzentimeter, wobei die Zahlenwerte von Tm und d der folgenden Beziehung entsprechen:

$$Tm > -2002{,}09 + 4538{,}5(d) - 2422{,}2(d)^2,$$

oder
(b) mit einem Mw/Mn von 1,7 bis 3,5 und **gekennzeichnet durch** eine Schmelzwärme, ΔH in J/g und ein Delta Menge, ΔT, in Grad Celsius, definiert als Temperaturunterschied zwischen dem höchsten DSK-Peak und dem höchsten CRYSTAF-Peak, wobei die Zahlenwerte von ΔT und ΔH die folgenden Beziehungen haben:

ΔT > -0,1299(ΔH) + 62,81 für AH größer als null und bis 130 J/g,
ΔT ≥ 48°C für ΔH größer als 130 J/g,
wobei der CRYSTAF-Peak unter Verwendung von mindestens 5 Prozent des kumulativen Polymers ermittelt wird, und wenn weniger als 5 Prozent des Polymers einen nachweisbaren CRYSTAF-Peak haben, dann beträgt die CRYSTAF-Temperatur 30°C; oder

(c) ist **gekennzeichnet durch** eine elastische Rückstellung, Re, in Prozent bei 300 Prozent Dehnung und 1 Zyklus, gemessen mit einer formgepressten Folie aus dem Ethylen/α-Olefin-Interpolymer, und eine Dichte, d, in Gramm/Kubikzentimeter hat, wobei die Zahlenwerte von Re und d der folgenden Beziehung genügen, wenn das Ethylen/α-Olefin-Interpolymer im Wesentlichen frei ist von einer vernetzten Phase:

$$Re > 1481 - 1629(d);$$

oder
(d) mit einem Comonomergehalt der TREF-Fraktion, die zwischen 40 und 130˚C eluiert, größer oder gleich der Menge (-0,2013)T + 21,07, wobei T der Zahlenwert der höchsten Elutionstemperatur der TREF-Fraktion ist, gemessen in ˚C; oder
(e) ist **gekennzeichnet durch** einen Speichermodul bei 25˚C, G'(25˚C), und einen Speichermodul bei 100˚C, G'(100˚C), wobei das Verhältnis von G'(25˚C) zu G'(100˚C) von 1:1 bis 10:1 beträgt; oder
(g) einen durchschnittlichen Blockindex größer als null und bis 1,0 und eine Molekulargewichtsverteilung, Mw/Mn, größer als 1,3; und:

(1) eine Dehnung in Längsrichtung von mindestens 56, gemessen **durch** M&S15A; oder
(2) eine Maßhaltigkeit in Längsrichtung zwischen -10% und +10%, gemessen nach IS05077:1984 (41˚C-Wäsche und 1 Stunde Trocknen im Wäschetrockner bei 70˚C).

**2.** Gewebe nach Anspruch 1, wobei das Gewebe **gekennzeichnet ist durch** eine Maßhaltigkeit in Längsrichtung zwischen -10% und +10%, gemessen nach IS05077:1984 (41˚C-Wäsche und 1 Stunde Trocknen im Wäschetrockner bei 70˚C).

**3.** Gewebe nach Anspruch 1, wobei das Gewebe **gekennzeichnet ist durch** eine Maßhaltigkeit in Längsrichtung zwischen -7,5% und +7,5%, gemessen nach ISO5077:1984 (41˚C-Wäsche und 1 Stunde Trocknen im Wäschetrockner bei 70˚C).

**4.** Gewebe nach Anspruch 1, wobei das Gewebe **gekennzeichnet ist durch** eine Maßhaltigkeit in Längsrichtung zwischen -5,5% und +5,5%, gemessen nach ISO5077:1984 (41˚C-Wäsche und 1 Stunde Trocknen im Wäschetrockner bei 70˚C).

**5.** Gewebe nach Anspruch 1, wobei das Gewebe **gekennzeichnet ist durch** eine Dehnung in Längsrichtung von mindestens 56, gemessen nach M&S15A.

**6.** Gewebe nach einem der Ansprüche 1-5, wobei das Gewebe **gekennzeichnet ist durch** eine Dehnung in Längsrichtung von mindestens 58, gemessen nach M&S15A.

**7.** Gewebe nach einem der Ansprüche 1-5, wobei das Gewebe **gekennzeichnet ist durch** eine Dehnung in Längsrichtung von mindestens 61, gemessen nach M&S15A.

**8.** Gewebe nach einem der Ansprüche 1-5, wobei das Gewebe **gekennzeichnet ist durch** eine Dehnung in Längsrichtung von mindestens 64, gemessen nach M&S15A.

**9.** Gewebe nach einem der Ansprüche 1-5, wobei der Schmelzpunkt des Ethylen-Olefin-Blockpolymers ohne Vernetzung mindestens 100˚C beträgt, gemessen nach ASTM D276-00a.

**10.** Gewebe nach einem der Ansprüche 1-5, wobei die eine oder mehr elastischen Fasern **gekennzeichnet sind durch** eine durchschnittliche Dehnung beim ersten Filamentbruch von größer oder gleich 200% gemäß ASTM D 2653-01.

**11.** Gewebe nach einem der Ansprüche 1-5, wobei das Gewebe ein Webstoff ist und von 2 bis 10 Prozent Olefinblockpolymer umfasst, bezogen auf das Gesamtgewicht des Gewebes.

**12.** Gewebe nach einem der Ansprüche 1-5, wobei das Gewebe ein Strickstoff ist und von 2 bis 30 Prozent Olefinblockpolymer umfasst, bezogen auf das Gesamtgewicht des Gewebes.

**13.** Gewebe nach einem der Ansprüche 1-5, wobei das Gewebe des weiteren Hartfasern umfasst und wobei die Hartfasern mindestens 80 Gew.-% des Gewebes ausmachen.

**14.** Gewebe nach einem der Ansprüche 1-5, wobei eine oder mehr der elastischen Fasern des Gewebes **gekennzeichnet ist durch** einen Speichermodul bei 85˚C von mindestens 1,2 MPa.

**15.** Gewebe nach einem der Ansprüche 1-5, wobei das Gewebe eine Maßhaltigkeit von -5% bis +5% gemäß AATCC 135 bei 12 Minuten Maschinenwäsche bei 40˚C zeigt.

## Revendications

**1.** Etoffe comprenant des fibres élastiques d'un ou plusieurs types, lesquelles fibres élastiques comprennent le produit de réaction d'au moins un polymère à blocs d'éthylène et d'oléfine et d'au moins un agent de réticulation par voie chimique ou par irradiation, lequel polymère à blocs d'éthylène et d'oléfine est un interpolymère d'éthylène et d'alpha-oléfine qui présente avant réticulation les caractéristiques suivantes :

- il y a au moins une fraction moléculaire qui est éluée entre 40 et 130 °C en fractionnement TREF et qui est **caractérisée en ce qu'**elle présente un indice de bloc qui vaut au moins 0,5 et au plus 1 et un indice Mw/Mn de distribution des masses moléculaires supérieur à 1,3,
- et pour chaque fraction dont la température d'élution en fractionnement TREF se situe entre 40 et 76 °C, l'inégalité suivante est vérifié chaleur de fusion (J/g) ≤ 1,1312 x (température d'élution ATREF (°C)) + 22,97 ;

et qui, en option, présente avant réticulation l'une ou plusieurs des caractéristiques suivantes :

a) il présente un indice Mw/Mn valant de 1,7 à 3,5, et au moins un point de fusion Tm et une masse volumique d dont les valeurs numériques, exprimées respectivement en degrés Celsius et en grammes par centimètre-cube, vérifient l'inégalité suivante :

$$Tm > -2002,9 + 4538,5(d) - 2422,2(d)^2 ;$$

b) ou il présente un indice Mw/Mn valant de 1,7 à 3,5, et se **caractérise par** une chaleur de fusion ΔH, exprimée en J/g, et une quantité ΔT, exprimée en degrés Celsius et définie comme étant la différence de température entre le plus grand pic observé en analyse AED et le plus grand pic observé en analyse CRYSTAF, dont les valeurs numériques vérifient les inégalités suivantes :

pour 0 < ΔH ≤ 130 J/g, ΔT > -0,1299(ΔH) + 62,81 et pour ΔH > 130 J/g, ΔT ≥ 48 °C,
étant entendu que le pic CRYSTAF est déterminé pour au moins 5 % de polymère en pourcentage cumulé, et que l'on prend la valeur de 30 °C pour la température du pic CRYSTAF si une fraction de moins de 5 % du polymère donne un pic CRYSTAF identifiable ;

c) ou il se **caractérise par** une recouvrance élastique Re pour une déformation de 300 % et 1 cycle, exprimée en pourcentage et mesurée sur un film d'interpolymère d'éthylène et d'alpha-oléfine obtenu par moulage par compression, et présente une masse volumique d, exprimée en grammes par centimètre-cube, dont les valeurs numériques vérifient l'inégalité suivante quand l'interpolymère d'éthylène et d'alpha-oléfine ne contient pratiquement pas de phase réticulée :

$$Re > 1481 - 1629(d) ;$$

d) ou il y a, dans la fraction éluée entre 40 et 130 °C en fractionnement TREF, une teneur en comonomère qui est supérieure ou égale à la valeur de l'expression -0,2013(T) + 21,07 où T représente la valeur numérique, en °C, de la température du pic d'élution de cette fraction TREF ;
e) ou il se **caractérise par** un module de conservation à 25 °C $G'_{25}$ et un module de conservation à 100 °C $G'_{100}$ qui ont des valeurs telles que le rapport $G'_{25}/G'_{100}$ vaut de 1/1 à 10/1 ;
g) ou il présente un indice de bloc moyen supérieur à 0 et valant au plus 1,0 et un indice Mw/Mn de distribution des masses moléculaires supérieur à 1,3, ainsi que

1) un allongement dans la direction de la longueur, mesuré selon le procédé M&S15A, d'au moins 56,
2) ou une stabilité dimensionnelle dans la direction de la longueur, mesurée selon le procédé de la norme ISO 5077-1984 (lavage à 41 °C et 1 heure de séchage par culbutage à 70 °C), qui se situe entre -10 % et +10 %.

**2.** Etoffe conforme à la revendication 1, laquelle étoffe se **caractérise par** une stabilité dimensionnelle dans la direction de la longueur, mesurée selon le procédé de la norme ISO 5077-1984 (lavage à 41 °C et 1 heure de séchage par culbutage à 70 °C), qui se situe entre -10 % et +10 %.

**3.** Etoffe conforme à la revendication 1, laquelle étoffe se **caractérise par** une stabilité dimensionnelle dans la direction de la longueur, mesurée selon le procédé de la norme ISO 5077-1984 (lavage à 41 ˚C et 1 heure de séchage par culbutage à 70 ˚C), qui se situe entre -7,5 % et +7,5 %.

**4.** Etoffe conforme à la revendication 1, laquelle étoffe se **caractérise par** une stabilité dimensionnelle dans la direction de la longueur, mesurée selon le procédé de la norme ISO 5077-1984 (lavage à 41 ˚C et 1 heure de séchage par culbutage à 70 ˚C), qui se situe entre -5,5 % et +5,5 %.

**5.** Etoffe conforme à la revendication 1, laquelle étoffe se **caractérise par** un allongement dans la direction de la longueur, mesuré selon le procédé M&S15A, d'au moins 56.

**6.** Etoffe conforme à l'une des revendications 1 à 5, laquelle étoffe se **caractérise par** un allongement dans la direction de la longueur, mesuré selon le procédé M&S15A, d'au moins 58.

**7.** Etoffe conforme à l'une des revendications 1 à 5, laquelle étoffe se **caractérise par** un allongement dans la direction de la longueur, mesuré selon le procédé M&S15A, d'au moins 61.

**8.** Etoffe conforme à l'une des revendications 1 à 5, laquelle étoffe se **caractérise par** un allongement dans la direction de la longueur, mesuré selon le procédé M&S15A, d'au moins 64.

**9.** Etoffe conforme à l'une des revendications 1 à 5, dans laquelle le polymère à blocs d'éthylène et d'oléfine présente un point de fusion qui, mesuré selon la norme ASTM D-276-00a, vaut au moins 100 ˚C quand le polymère n'est pas réticulé.

**10.** Etoffe conforme à l'une des revendications 1 à 5, dans laquelle lesdites fibres élastiques d'un ou plusieurs types **se caractérisant par** un allongement moyen à la rupture du premier filament, mesuré selon la norme ASTM D-2653-01, supérieur ou égal à 200 %.

**11.** Etoffe conforme à l'une des revendications 1 à 5, laquelle étoffe est une étoffe tissée qui comporte de 2 à 10 % de polymère à blocs d'éthylène et d'oléfine, par rapport au poids total de l'étoffe.

**12.** Etoffe conforme à l'une des revendications 1 à 5, laquelle étoffe est une étoffe tricotée qui comporte de 2 à 30 % de polymère à blocs d'éthylène et d'oléfine, par rapport au poids total de l'étoffe.

**13.** Etoffe conforme à l'une des revendications 1 à 5, laquelle étoffe comprend en outre des fibres rigides qui constituent au moins 80 % du poids de l'étoffe.

**14.** Etoffe conforme à l'une des revendications 1 à 5, dans laquelle lesdites fibres élastiques d'un ou plusieurs types de ladite étoffe se caractérisent par un module de conservation à 85 ˚C d'au moins 1,2 MPa.

**15.** Etoffe conforme à l'une des revendications 1 à 5, laquelle étoffe présente une stabilité dimensionnelle, mesurée selon le protocole 135 de l'AATCC (12 minutes de lavage en machine à 40 ˚C), qui se situe entre -5 % et +5 %.

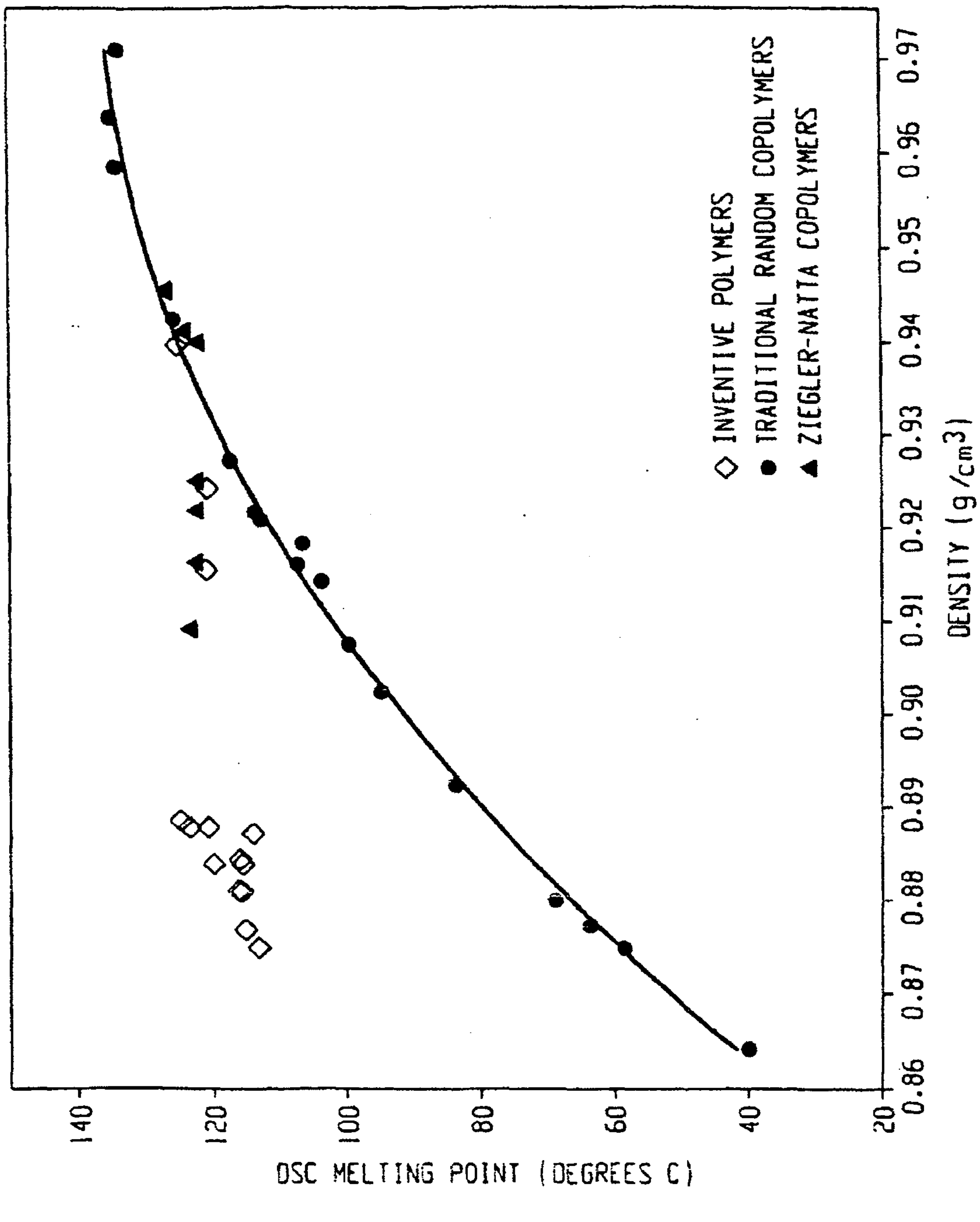
DSC MELTING POINT (DEGREES C)
140
120
100
80
60
40
20
DENSITY (g/cm3)
0.86
0.87
0.88
0.89
0.90
0.91
0.92
0.93
0.94
0.95
0.96
0.97
◇ INVENTIVE POLYMERS
● TRADITIONAL RANDOM COPOLYMERS
▲ ZIEGLER-NATTA COPOLYMERS

Fig. 1

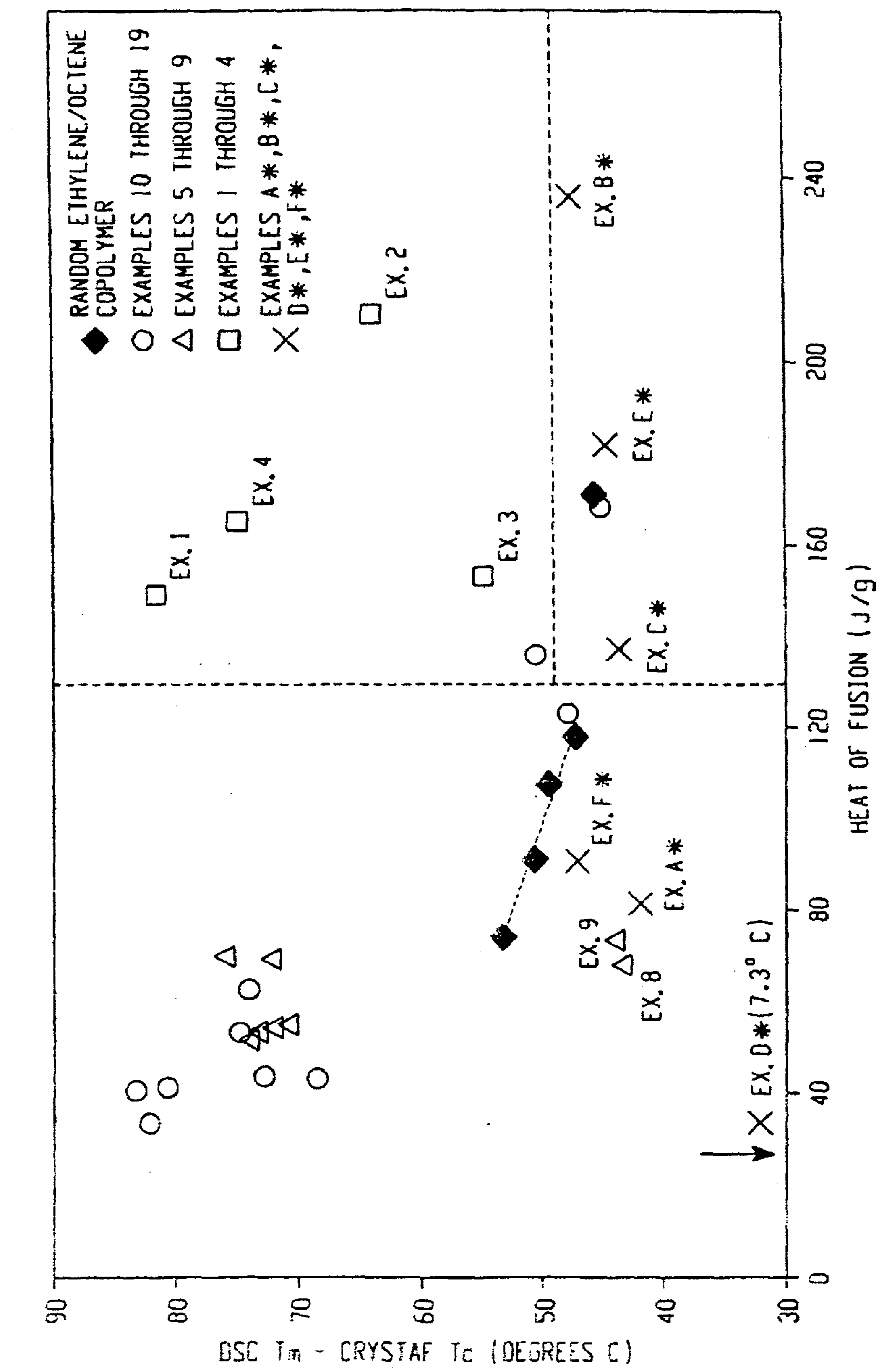

RANDOM ETHYLENE/OCTENE COPOLYMER
EXAMPLES 10 THROUGH 19
EXAMPLES 5 THROUGH 9
EXAMPLES 1 THROUGH 4
EXAMPLES A*, B*, C*, D*, E*, F*
EX. 1
EX. 2
EX. 3
EX. 4
EX. 8
EX. 9
EX. A*
EX. B*
EX. C*
EX. D* (7.3° C)
EX. E*
EX. F*
0
40
80
120
160
200
240
HEAT OF FUSION (J/g)
90
80
70
60
50
40
30
DSC Tm - CRYSTAF Tc (DEGREES C)


Fig. 2

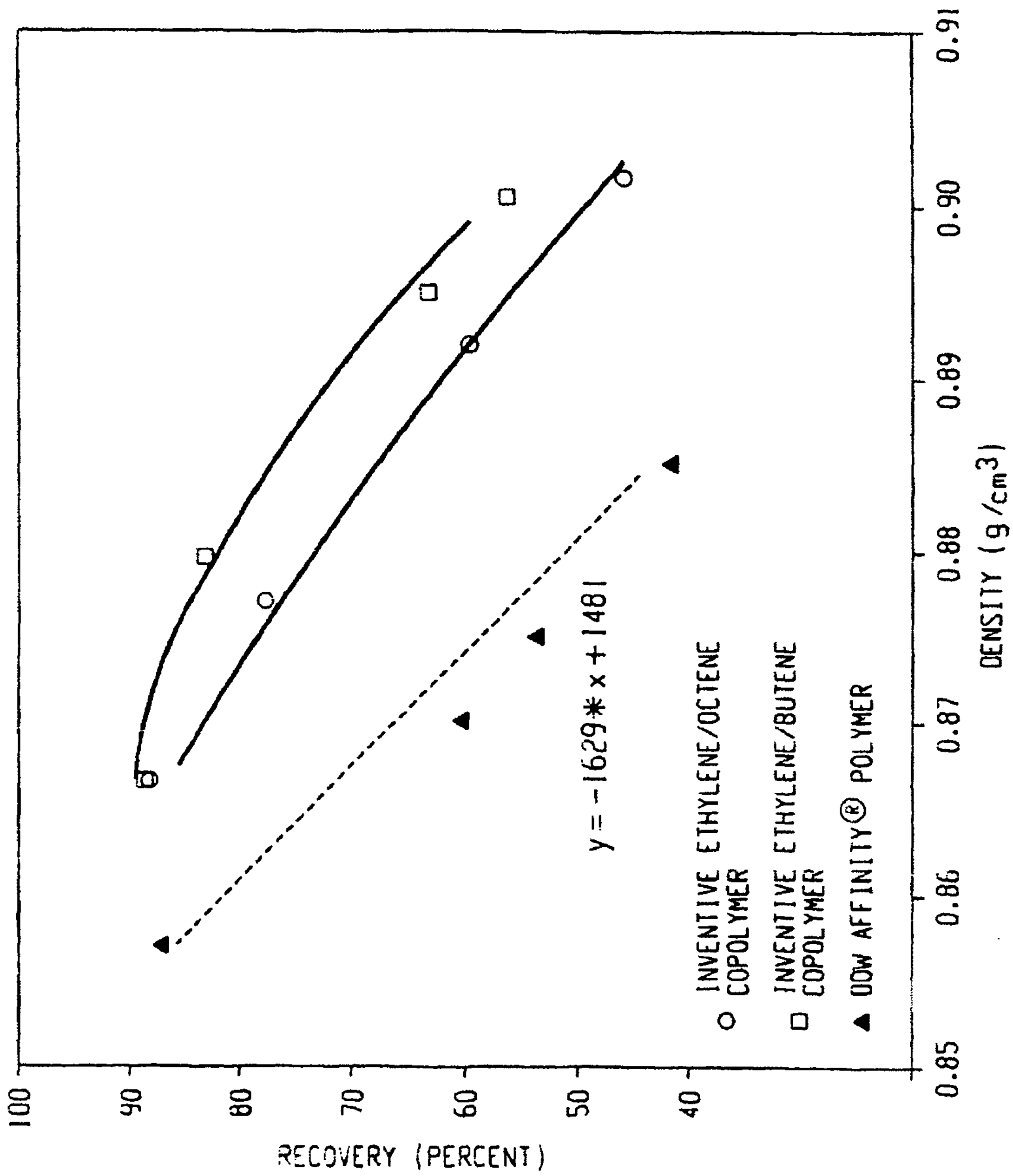
RECOVERY (PERCENT)
100
90
80
70
60
50
40
DENSITY (g/cm3)
0.85
0.86
0.87
0.88
0.89
0.90
0.91
y = -1629 * x + 1481
INVENTIVE ETHYLENE/OCTENE COPOLYMER
INVENTIVE ETHYLENE/BUTENE COPOLYMER
DOW AFFINITY® POLYMER

Fig. 3

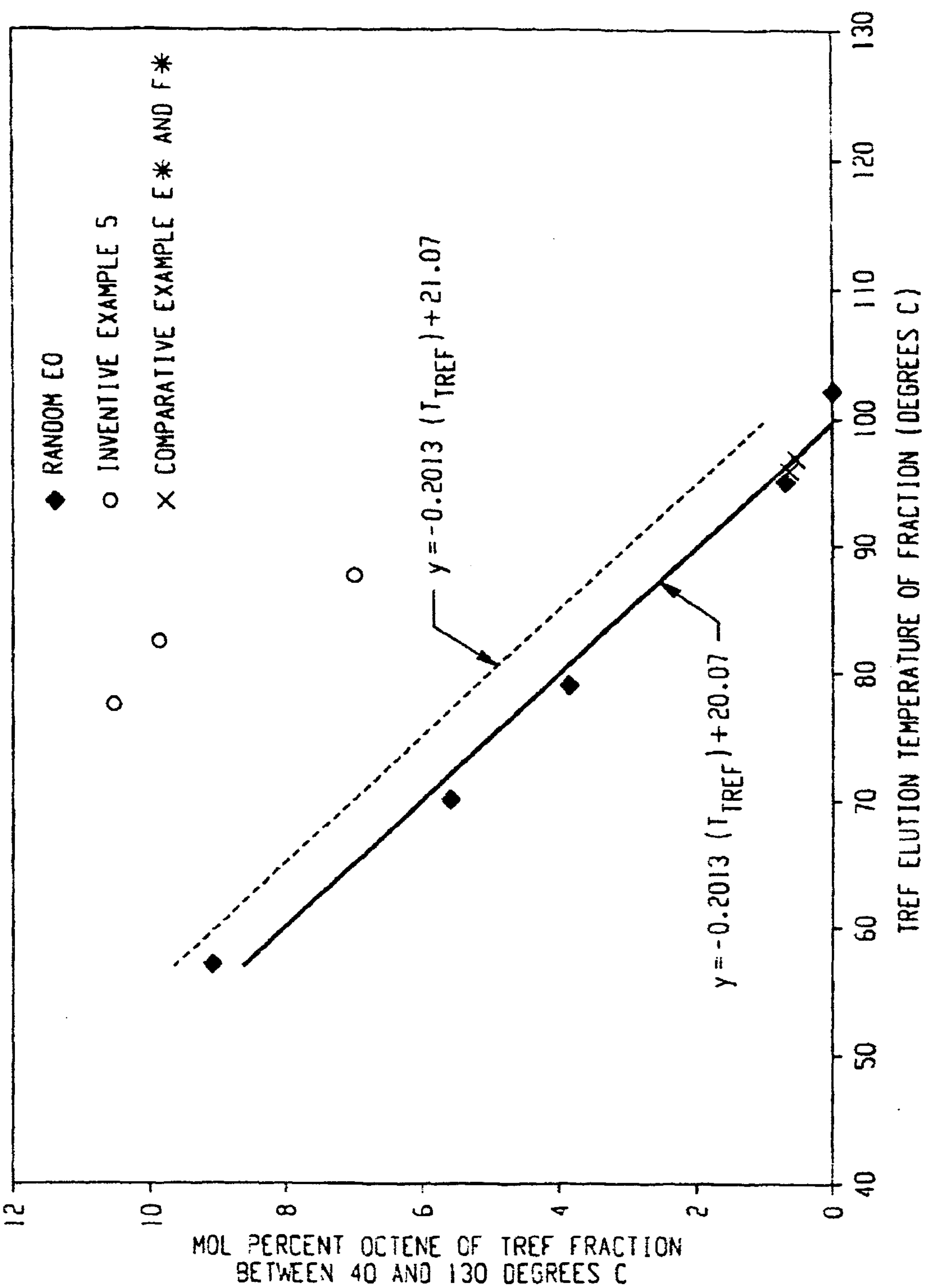
RANDOM EO
INVENTIVE EXAMPLE 5
COMPARATIVE EXAMPLE E* AND F*
y = -0.2013 (T_TREF) + 21.07
y = -0.2013 (T_TREF) + 20.07
TREF ELUTION TEMPERATURE OF FRACTION (DEGREES C)
MOL PERCENT OCTENE OF TREF FRACTION BETWEEN 40 AND 130 DEGREES C
40
50
60
70
80
90
100
110
120
130
0
2
4
6
8
10
12

Fig. 4

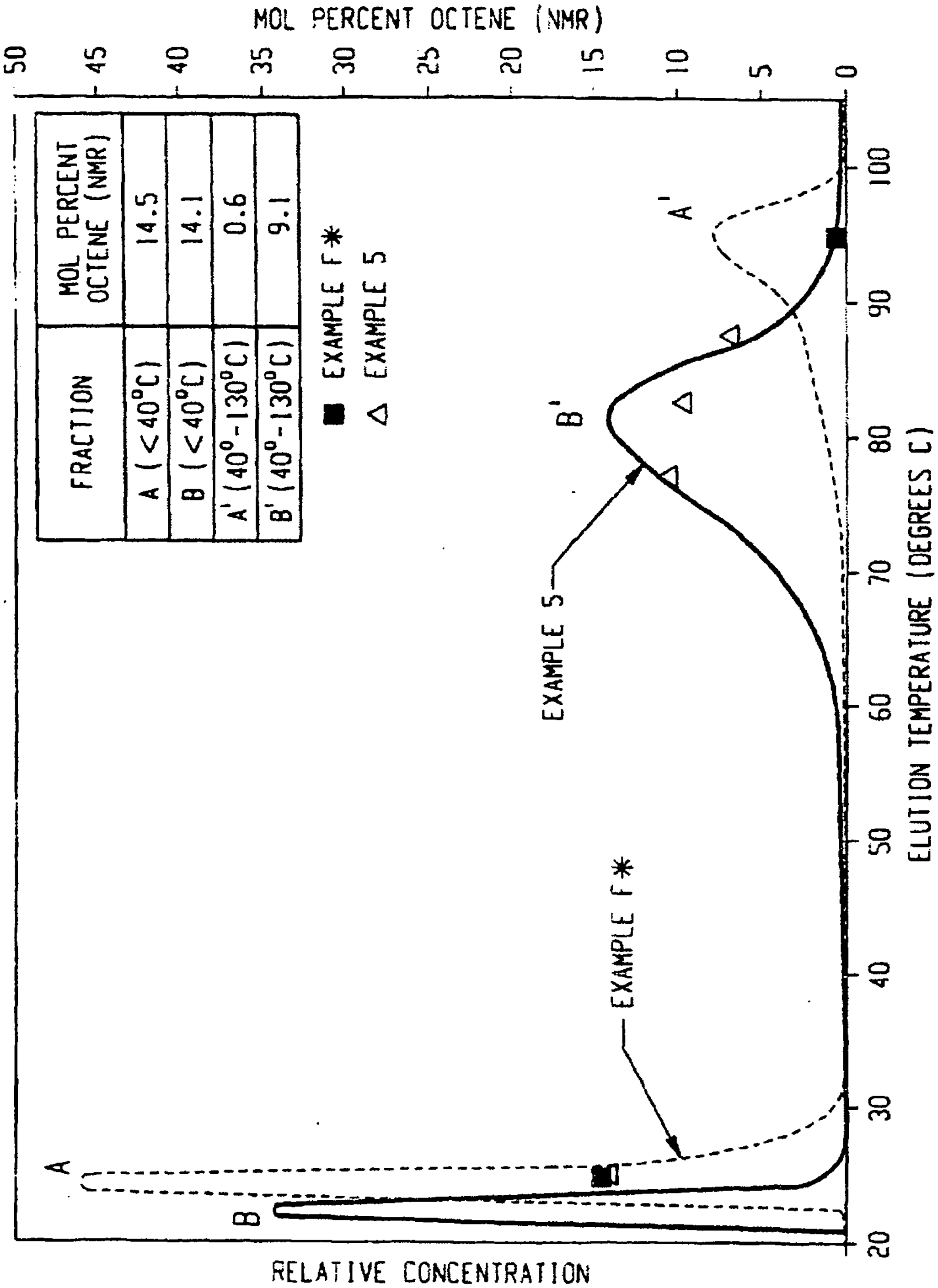
MOL PERCENT OCTENE (NMR)
50
45
40
35
30
25
20
15
10
5
0
FRACTION
MOL PERCENT OCTENE (NMR)
A (<40°C)
14.5
B (<40°C)
14.1
A' (40°-130°C)
0.6
B' (40°-130°C)
9.1
■ EXAMPLE F*
△ EXAMPLE 5
A
B
A'
B'
EXAMPLE 5
EXAMPLE F*
20
30
40
50
60
70
80
90
100
ELUTION TEMPERATURE (DEGREES C)
RELATIVE CONCENTRATION

Fig. 5

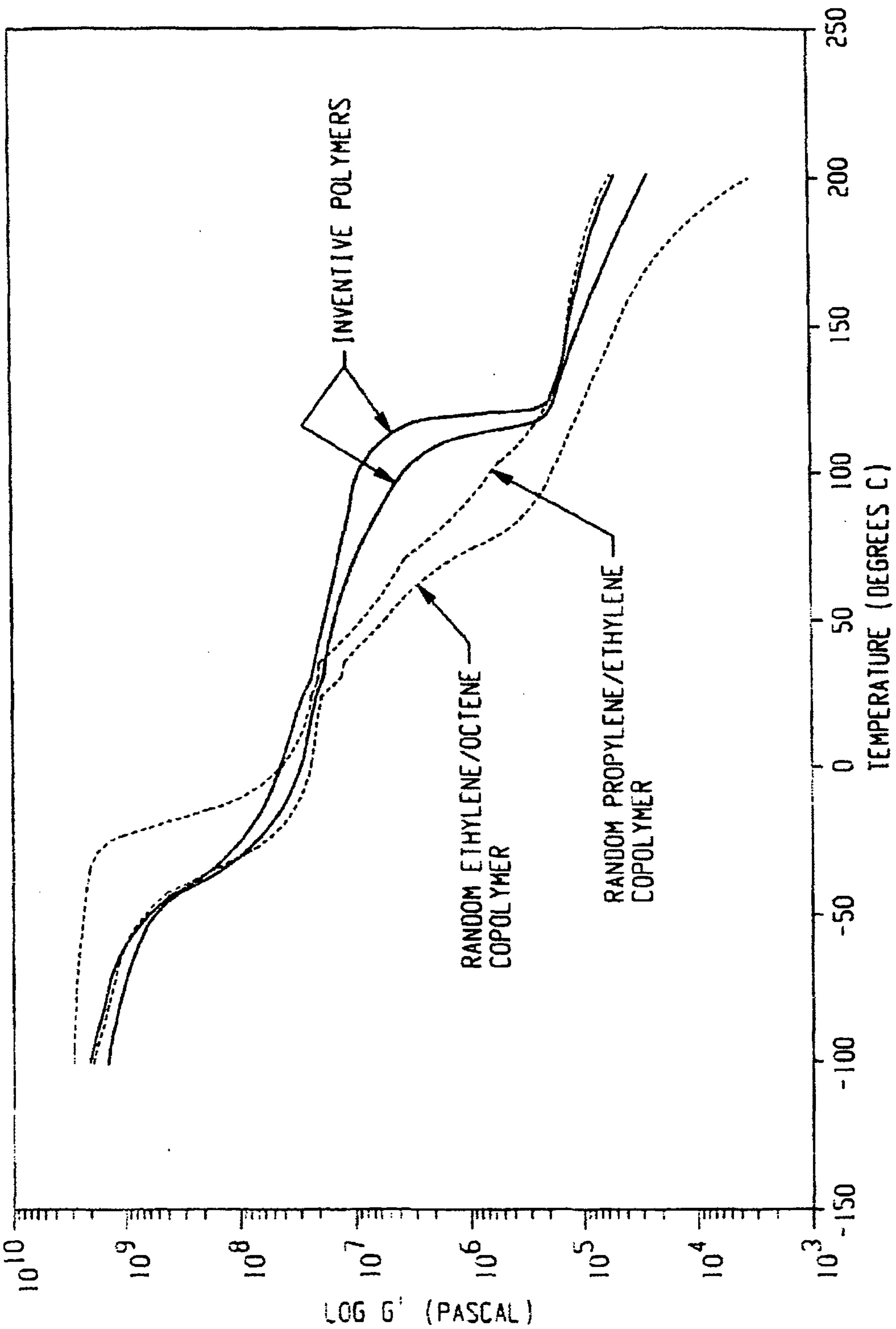
INVENTIVE POLYMERS
RANDOM ETHYLENE/OCTENE COPOLYMER
RANDOM PROPYLENE/ETHYLENE COPOLYMER
LOG G' (PASCAL)
$10^{10}$
$10^{9}$
$10^{8}$
$10^{7}$
$10^{6}$
$10^{5}$
$10^{4}$
$10^{3}$
TEMPERATURE (DEGREES C)
-150
-100
-50
0
50
100
150
200
250

Fig. 6

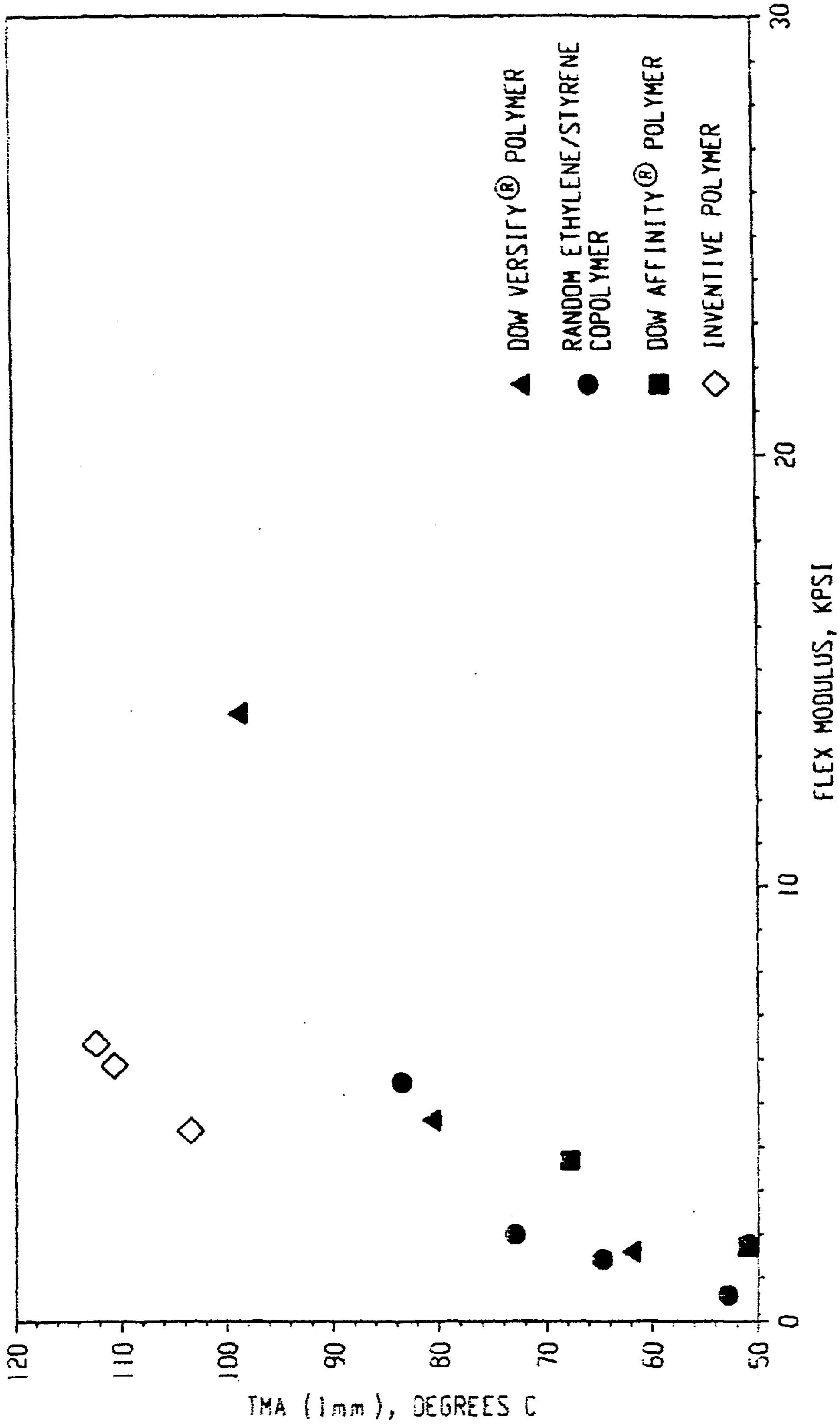
DOW VERSIFY® POLYMER
RANDOM ETHYLENE/STYRENE COPOLYMER
DOW AFFINITY® POLYMER
INVENTIVE POLYMER
FLEX MODULUS, KPSI
TMA (1mm), DEGREES C
0
10
20
30
120
110
100
90
80
70
60
50

Fig. 7

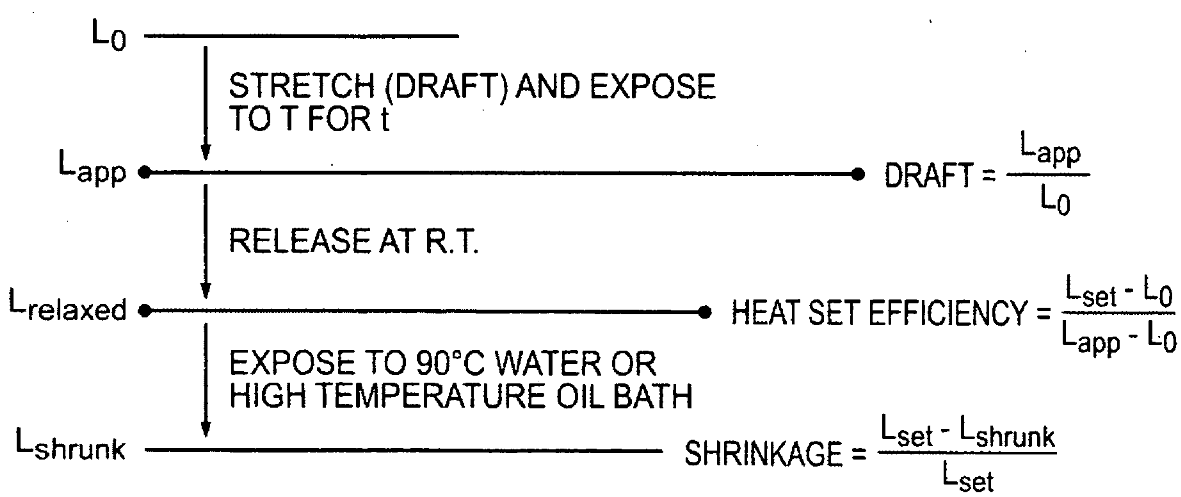
L0
STRETCH (DRAFT) AND EXPOSE TO T FOR t
Lapp
DRAFT = Lapp / L0
RELEASE AT R.T.
Lrelaxed
HEAT SET EFFICIENCY = (Lset - L0) / (Lapp - L0)
EXPOSE TO 90°C WATER OR HIGH TEMPERATURE OIL BATH
Lshrunk
SHRINKAGE = (Lset - Lshrunk) / Lset

FIG. 8

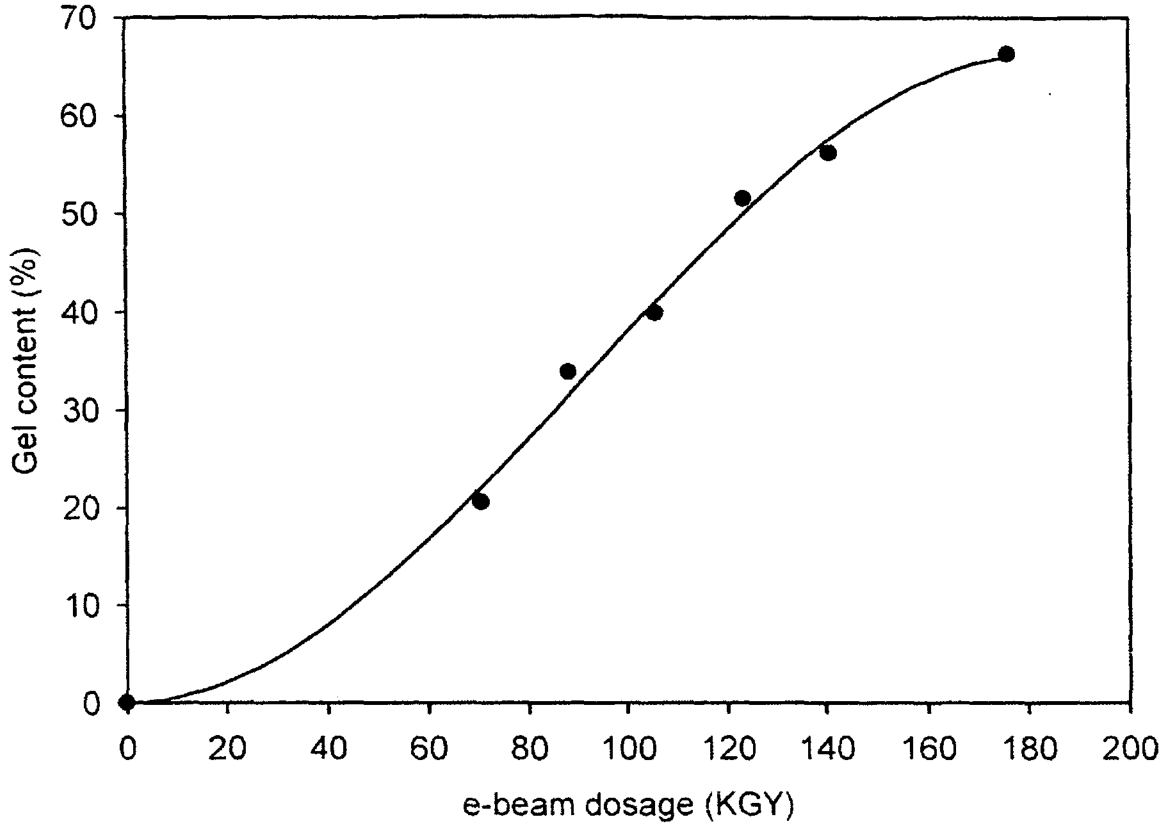
70
60
50
40
30
20
10
0
Gel content (%)
0
20
40
60
80
100
120
140
160
180
200
e-beam dosage (KGY)

Fig. 9

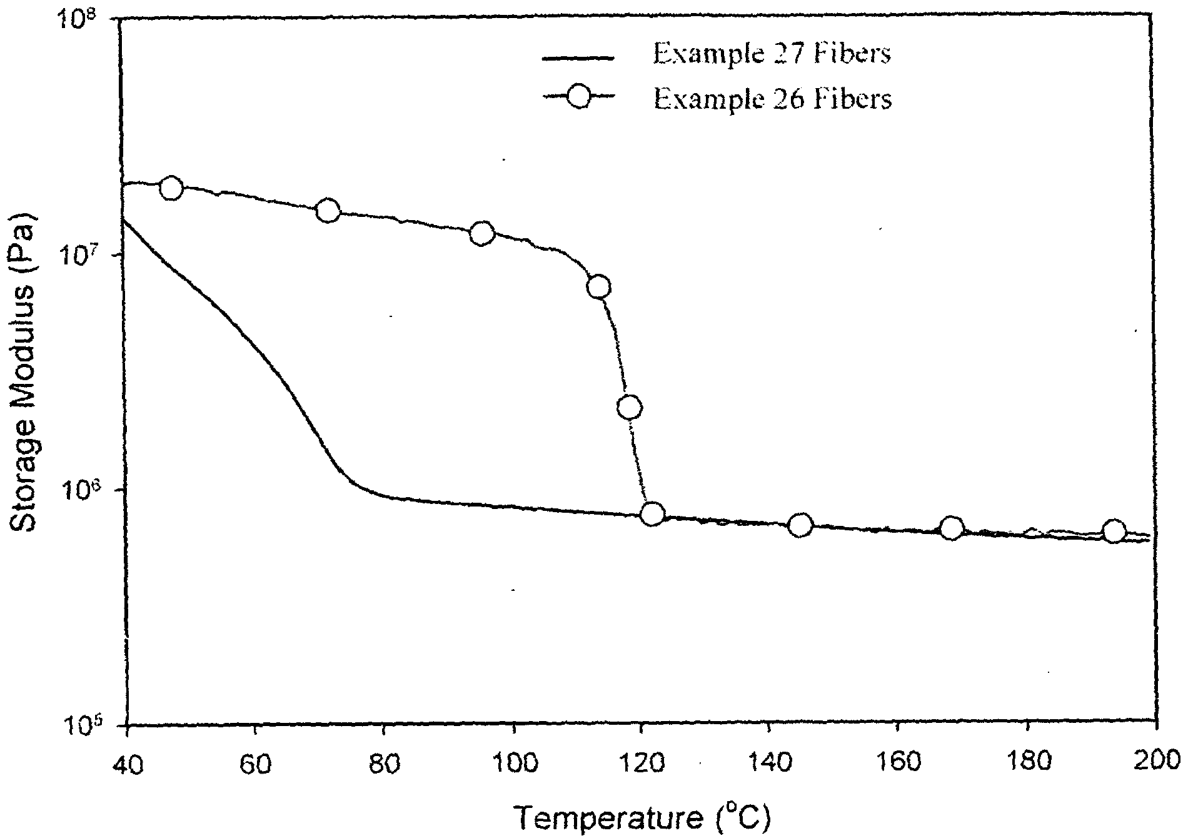
Example 27 Fibers
Example 26 Fibers
Storage Modulus (Pa)
$10^8$
$10^7$
$10^6$
$10^5$
40
60
80
100
120
140
160
180
200
Temperature (°C)

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006102149 A
- US 6225243 B
- US 6140442 A
- US 5382400 A
- US 5336552 A
- US 5108820 A
- US 376835 A
- US 55390604 P
- US 66293705 P
- US 66293905 P
- US 662938 P
- US 2005008916 W
- US 2005008915 W
- US 2005008917 W
- WO 0340195 A
- US 0204017 A
- US SN10429024 A
- WO 0424740 A
- US 20040010103 A
- US P6268444 B
- US 2003004286 A
- US 4762890 A
- US 4927888 A
- US 4950541 A
- US 4798081 A
- US P59199883 B
- US P6395671 A
- US 6248540 B
- US 6030917 A
- US 6362309 B
- US 6306658 B
- US 6316663 B
- US 37683506 A
- US 6803014 B
- US 6667351 B
- US 4340563 A
- US 466320 A
- US 4668566 A
- US 4322027 A
- US 4413110 A
- US 3039895 A
- US 6652599 B
- US 20030024052 A
- US 3296063 A
- US 4999120 A
- US 10933721 A
- US 20050142360 A


### Non-patent literature cited in the description


- **Markovich, Ronald P. ; Hazlitt, Lonnie G. ; Smith, Linley.** Development of gel-permeation chromatography-Fourier transform infrared spectroscopy for characterization of ethylene-based polyolefin copolymers. *Polymeric Materials Science and Engineering,* 1991, vol. 65, 98-100
- **Deslauriers, P.J. ; Rohlfing. D.C. ; Shieh, E.T.** Quantifying short chain branching microstructures in ethylene-1-olefin copolymers using size exclusion chromatography and Fourier transform infrared spectroscopy (SEC-FTIR). *Polymer,* 2002, vol. 43, 59-170
- **Williams ; Ward.** *J. Polym. Sci., Polym, Let.,* 1968, vol. 6, 621
- **Wilde, L. ; Ryle, T.R. ; Knobeloch, D.C. ; Peat, I.R.** Determination of Branching Distributions in Polyethylene and Ethylene Copolymers. *J. Polym. Sci.,* 1982, vol. 20, 411-455
- **Randall, J.C.** *JMS-Rev. Macromol. Chem. Phys.,* 1989, vol. C29, 201-317
- **Bamberg Meisenbach.** *Circular Knitting: Technology Process. Structures, Yarns, Quality,* 1995
- **Carry Mock.** Fundamentals of Dyeing and Printing. 2002